# EUROPEAN PATENT SPECIFICATION

(11) **EP 4 013 075 B1**
(45) Date of publication and mention of the grant of the patent: **14.10.2026**
(21) Application number: 20851974.4
(22) Date of filing: 07.08.2020
(51) Int. Cl.: H04W 4/00, H04W 76/15, H04W 76/20, H04W 28/08

(54) **UE AND METHOD FOR PREVENTING UNSUPPORTED MA PDU SESSION ESTABLISHMENT**
UE UND VERFAHREN ZUR VERHINDERUNG DES AUFBAUS EINER MA PDU SITZUNG OHNE UNTERSTÜTZUNG
UE ET PROCÉDÉ POUR EMPÊCHER L'ÉTABLISSEMENT D'UNE SESSION MA PDU NON PRISE EN CHARGE

(30) Priority: 09.08.2019 JP 2019147898
(43) Date of publication of application: 15.06.2022
(73) Proprietor: Sharp Kabushiki Kaisha, Sakai-ku Sakai-shi, Osaka 590-8522 (JP)
(72) Inventor: SUGAWARA Yasuo, Osaka 590-8522 (JP)
(74) Representative: Müller Hoffmann & Partner
(86) International application number: PCT/JP2020/030441
(87) International publication number: WO 2021/029382

(56) References cited:
- EP-A1- 3 499 919
- WO-A1-2017/135052
- WO-A1-2018/030474
- WO-A1-2018/030474
- "3rd Generation Partnership Project; Technical Specification Group Services and System Aspects; Study on access traffic steering, switch and splitting support in the 5G system architecture (Release 16)", 3GPP STANDARD; TECHNICAL REPORT; 3GPP TR 23.793, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.0, 19 December 2018 (2018-12-19), pages 1 - 114, XP051591224
- 3GPP: "Generation Partnership Project; Technical Specification Group Services and System Aspects; System Architecture for the 5G System; Stage 2 (Release 16)", 3GPP TS 23.501 V16.1.0, 11 June 2019 (2019-06-11), pages 266 - 275, XP051751775

## Description

### Technical Field

The present application relates to a UE and a communication method performed by the UE. The present application claims the benefit of priority to JP 2019-147898 that is a Japanese patent application filed on August 9, 2019.

### Background Art

The 3rd Generation Partnership Project (3GPP) has studied the system architecture of the 5G System (5GS) corresponding to a fifth generation (5G) mobile communication system to discuss how to support new procedures and new functions. For the 5G System (5GS), a 5G Core Network (5GC) corresponding to a new core network has been under study in order to provide a wide variety of services. Furthermore, discussions have also been started for the support of Access Traffic Steering, Switching and Splitting (ATSSS), which requires high reliability and/or low latency communication, in the 5GS (see NPL 1, NPL 2, and NPL 3). In regard to ATSSS, discussions have been made for a communication method using a special protocol data unit (PDU) session referred to as a multi-access PDU session (also referred to as an MA PDU session), rather than a PDU session that has already been defined (also referred to as a single-access PDU session or SA PDU session).

EP3499919A1 discloses a communication controller configured to establish a suitable session for a terminal apparatus and a network apparatus that are connected to a wide variety of multiple access networks; a user-data communication controller that is suitable for a terminal apparatus and a network apparatus establishing a session via multiple access networks.

### Citation List

### Non Patent Literature

NPL 1: 3GPP TS 23.501 V16.1.0 (2019-06); 3rd Generation Partnership Project; Technical Specification Group Services and System Aspects; System Architecture for the 5G System; Stage 2 (Release 16)
NPL 2: 3GPP TS 23.502 V16.1.1 (2019-06); 3rd Generation Partnership Project; Technical Specification Group Services and System Aspects; Procedures for the 5G system; Stage 2 (Release 16)
NPL 3: 3GPP TR 23.793 V16.0.0 (2018-12); 3rd Generation Partnership Project; Technical Specification Group Services and System Aspects; Study on access traffic steering, switch and splitting support in the 5G system architecture (Release 16)

### Summary of Invention

### Technical Problem

However, neither a procedure for modifying a PDU session anchor (referred to as a PDU Session Anchor or a PSA) of an MA PDU session in which Session and Service Continuity (SSC) mode 2 or SSC mode 3 is configured, a procedure for modifying part of PSA of the MA PDU session to a PSA of an SA PDU session, nor a procedure for modifying a PSA of an SA PDU session to a PSA of an MA PDU session has yet been clarified.

An aspect of the present invention has been made in view of the circumstances, and an object of the present invention is to clarify a procedure for modifying a PSA of an MA PDU session in which SSC mode 2 or SSC mode 3 is configured, a procedure for modifying part of a PSA of an MA PDU session to a PSA of an SA PDU session, a procedure for modifying part of a PSA of an SA PDU session to a PSA of an MA PDU session, or behaviors of each apparatus in a case that these procedures are performed.

### Solution to Problem

The problem is solved by the teachings of the independent claims. Further embodiment is defined in the dependent claim. The invention is defined by the appended claims. References to embodiments which do not fall under the scope of the claims are to be understood as examples useful for understanding the invention.

A UE according to an embodiment of the present disclosure is a User Equipment (UE) including a controller and a transmission and reception circuitry, in which the transmission and reception circuitry receives, from an Access and Mobility Management Function (AMF), first information indicating whether or not a network supports Access Traffic Steering, Switching, Splitting (ATSSS), the controller determines whether or not ATSSS is supported by the network based on the first information, and the controller does not initiate a Protocol Data Unit (PDU) session establishment procedure for establishing a Multi-Access (MA) PDU session in a case that the network does not support ATSSS.

In addition, a communication control method according to an embodiment of the present disclosure is a communication control method performed by a User Equipment (UE), in which the UE, receiving, from an Access and Mobility Management Function (AMF), first information indicating whether or not a network supports Access Traffic Steering, Switching, Splitting (ATSSS), determining whether or not ATSSS is supported by the network based on the first information, and not initiating a Protocol Data Unit (PDU) session establishment procedure for establishing a Multi-Access (MA) PDU session in a case that the network does not support ATSSS.

### Advantageous Effects of Invention

According to an aspect of the present invention, a procedure for modifying a PSA of an MA PDU session in which SSC mode 2 or SSC mode 3 is configured, a procedure for modifying part of a PSA of an MA PDU session to a PSA of an SA PDU session, a procedure for modifying part of a PSA of an SA PDU session to a PSA of an MA PDU session, or behaviors of each apparatus in a case that these procedures are performed can be clarified.

### Brief Description of Drawings

FIG. 1 is a diagram illustrating an overview of a mobile communication system 1.
FIG. 2 is a diagram illustrating a detailed configuration of the mobile communication system 1 and a first communication state.
FIG. 3 is a diagram illustrating an apparatus configuration of UE.
FIG. 4 is a diagram mainly illustrating a configuration of an access network apparatus.
FIG. 5 is a diagram mainly illustrating a configuration of a core network apparatus.
FIG. 6 is a diagram illustrating a procedure for modifying a PSA of a PDU session in which SSC mode 2 is configured (a first PSA modification procedure).
FIG. 7 is a diagram illustrating a procedure for modifying a PSA of a PDU session in which SSC mode 2 is configured (a second PSA modification procedure).
FIG. 8 is a diagram illustrating a procedure for modifying a PSA of a PDU session in which SSC mode 2 is configured (a third PSA modification procedure).
FIG. 9 is a diagram illustrating a procedure for modifying a PSA of a PDU session in which SSC mode 3 is configured (a fourth PSA modification procedure).
FIG. 10 is a diagram illustrating a procedure for modifying a PSA of a PDU session in which SSC mode 3 is configured (a fifth PSA modification procedure).
FIG. 11 is a diagram illustrating a procedure for modifying a PSA of a PDU session in which SSC mode 3 is configured (a sixth PSA modification procedure).
FIG. 12 is a diagram illustrating a PDU session release procedure.
FIG. 13 is a diagram illustrating a PDU session establishment procedure.
FIG. 14 is a diagram illustrating a second communication state.
FIG. 15 is a diagram illustrating a third communication state.

### Description of Embodiments

Hereinafter, description is given of a mobile communication system, a configuration of each apparatus, and terms, identification information, and procedures used in the embodiments, which are mostly common to the embodiments, and then embodiments for implementing the present invention will be described.

### 1. Overview of Mobile Communication System

Now, a mobile communication system will be described.

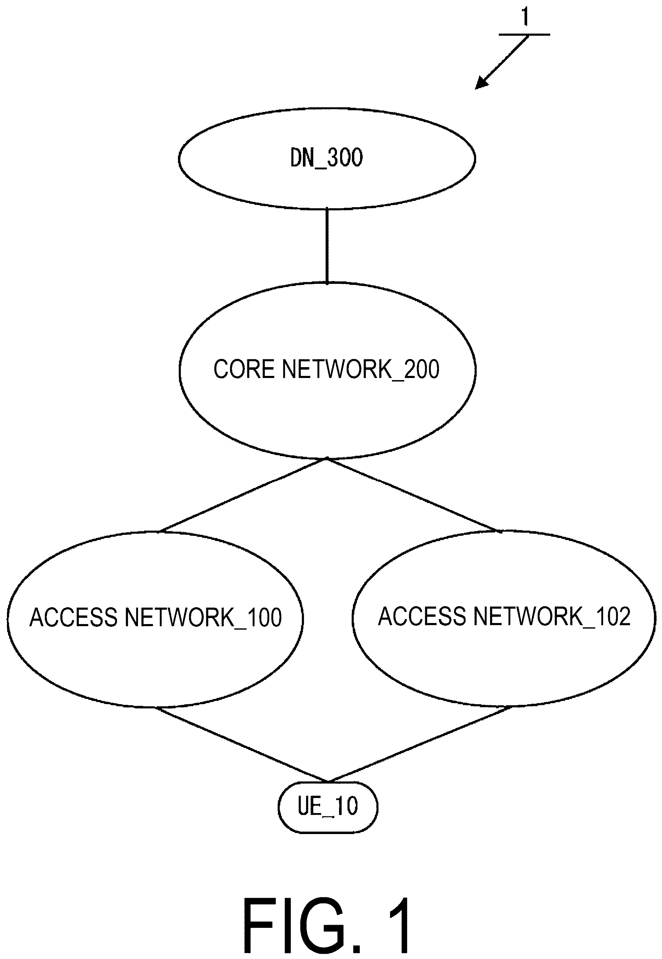

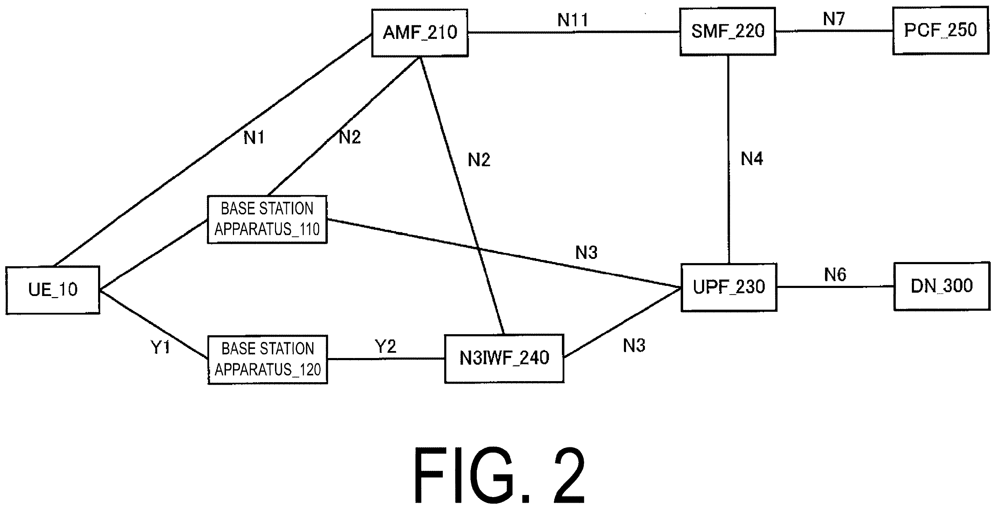

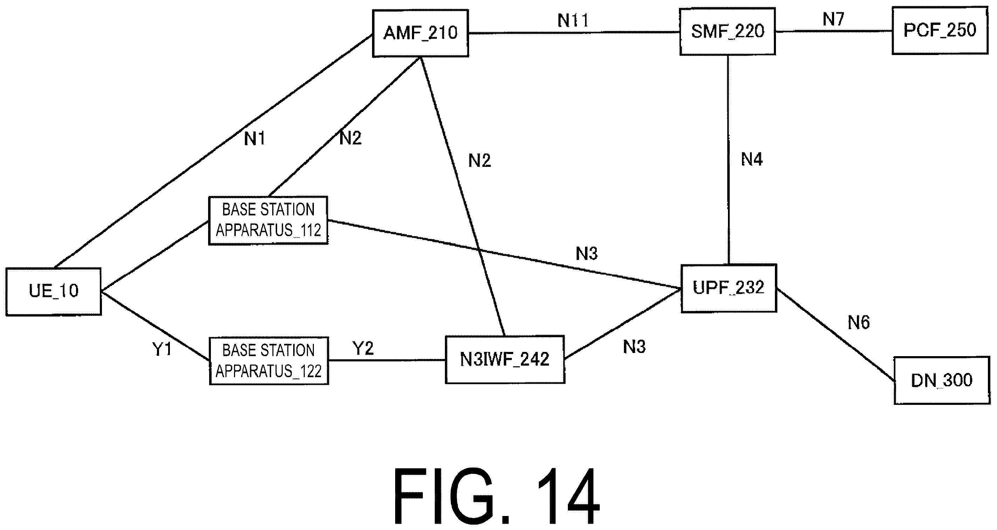

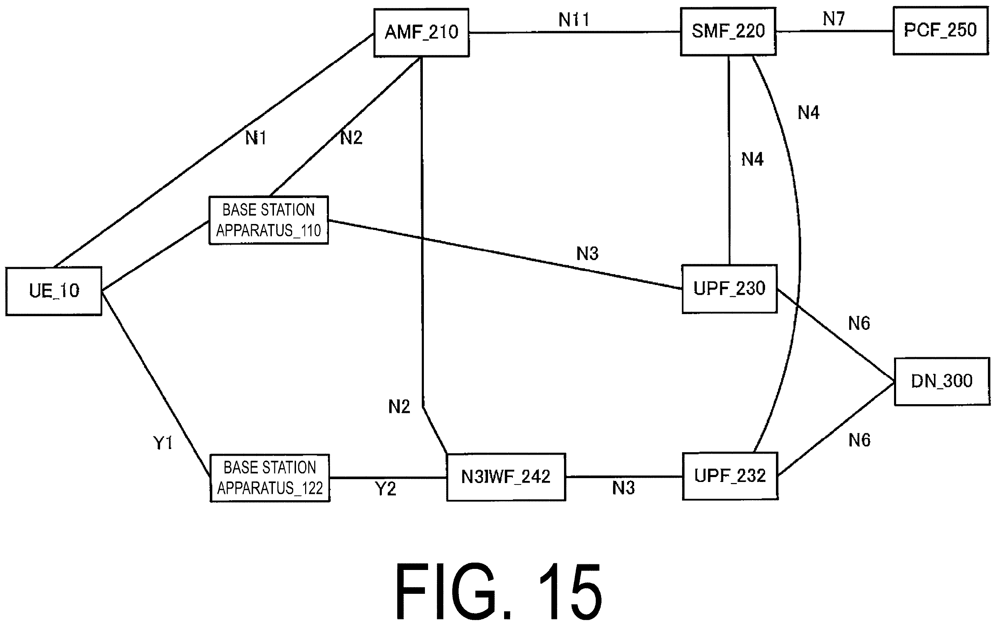

First, FIG. 1 is a diagram schematically illustrating a mobile communication system 1, and FIG. 2 is a diagram illustrating a detailed configuration of the mobile communication system 1 and a first communication state. FIG. 14 is a diagram illustrating a second communication state. FIG. 15 is a diagram illustrating a third communication state.

FIG. 1 illustrates the mobile communication system 1 including a user equipment (UE)_10, an access network_100, an access network_102, a core network_200, and a data network (DN)_300. Note that, such apparatuses and networks may be denoted without reference symbols, like UE, access networks, core networks, DN, and the like.

In addition, FIG. 2 illustrates apparatuses and network functions such as the UE_10, a base station apparatus_110, a base station apparatus_120, an Access and Mobility Management Function (AMF)_210, a Session Management Function (SMF)_220, a User Plane Function (UPF)_230, a Non-3GPP Interworking Function (N3IWF)_240, a Policy Control Function (PCF)_250, and the DN_300, and interfaces for interconnecting these apparatuses and network functions.

In addition, FIG. 14 illustrates apparatuses and network functions such as UE_10, a base station apparatus_112, a base station apparatus_122, an AMF_210, an SMF_220, a UPF_232, an N3IWF_242, a PCF_250, and a DN_300, and interfaces for interconnecting these apparatuses and network functions.

In addition, FIG. 15 illustrates apparatuses and network functions such as UE_10, a base station apparatus_110, a base station apparatus_122, an AMF_210, an SMF_220, a UPF_230, a UPF_232, an N3IWF_242, a PCF_250, and a DN_300, and interfaces for interconnecting these apparatuses and network functions. Note that, such apparatuses and network functions may be denoted without reference symbols, just like UE, base station apparatuses, AMFs, SMFs, UPFs, N3IWFs, PCFs, DN, and the like.

Note that, although a 5G system (5GS) that is a 5G system includes UE, an access network, and a core network, the system may further include a DN.

The UE may be an apparatus that can connect to a network service over 3GPP access (also referred to as a "3GPP access network" or "3GPP AN") and/or non-3GPP access (also referred to as a "non-3GPP access network" or "non-3GPP AN"). The UE may be a terminal apparatus which can perform wireless communication such as a mobile phone or a smartphone, and may be a terminal apparatus that can connect to an evolved packet system (EPS) corresponding to a 4G system as well as to a 5GS. The UE may include a universal integrated circuit card (UICC) or an embedded UICC (eUICC). Note that the UE may be expressed as a user apparatus or may be expressed as a terminal apparatus. Note that the UE is an apparatus that can use an Access Traffic Steering, Switching and Splitting (ATSSS) function, in other words, an ATSSS-capable UE.

In addition, the access network may be referred to as a 5G access network (5G AN). The 5G AN includes an NG radio access network (NG-RAN) and/or a non-3GPP access network (non-3GPP AN). One or more base station apparatuses are deployed in the NG-RAN. Each of the base station apparatuses may be gNB. The gNB is a node that provides the UE with a New Radio (NR) user plane and control plane and connects to a 5GC over an NG interface (including an N2 interface or an N3 interface). In other words, the gNB is a base station apparatus newly designed for the 5GS, and includes functions different from the functions of a base station apparatus (eNB) used in the EPS. In addition, in a case that there are multiple gNBs, the gNBs are interconnected by, for example, an Xn interface. Note that the base station apparatus_110 and the base station apparatus_112 correspond to gNBs.

In addition, the NG-RAN may hereinafter be referred to as 3GPP access. In addition, a wireless LAN access network or a non-3GPP AN may be referred to as non-3GPP access. In addition, nodes deployed on the access network may also be collectively referred to as NG-RAN nodes.

In addition, an access network and/or an apparatus included in an apparatus included in the access network may be referred to as an access network apparatus.

Note that the access network_100 corresponds to 3GPP access, and the access network_102 corresponds to non-3GPP access.

In addition, the base station apparatus_110 and/or the base station apparatus_112 is deployed on the access network_100, and the base station apparatus_120 and/or the base station apparatus_122 and/or TNAP is deployed on the access network_102. Note that the base station apparatus_110 and/or the base station apparatus_112 and/or the base station apparatus_120 and/or the base station apparatus_122 and or the TNAP may be capable of utilizing the ATSSS function.

In addition, the access network_102 may be referred to as an untrusted non-3GPP access or a trusted non-3GPP access. FIG. 2 illustrate the base station apparatus 120 and the N3IWF in a case of an untrusted non-3GPP access. In other words, in a case that the access network_102 is an untrusted non-3GPP access, the base station apparatus_120 or the base station apparatus_122 and the N3IWF are used. In a case that the access network_102 is a Trusted non-3GPP Access (also referred to as a Trusted non-3GPP Access Network or a TNAN), a Trusted non-3GPP Access Point (also referred to as a TNAP) and a Trusted Non-3GPP Gateway Function (also referred to as a TNGF) are used, instead of the base station apparatus_120 or the base station apparatus_122 and the N3IWF. The TNAP and the TNGF are deployed on the access network_102 or the core network_200.

In addition, the core network corresponds to a 5G core network (5GC). For example, AMFs, UPFs, SMFs, PCFs, and the like are deployed on the 5GC. Here, the 5GC may be indicated as a 5GCN. Note that the AMFs, UPFs, SMFs, and PCFs may use the ATSSS function.

In addition, the N3IWF is deployed on the access network_102 or the core network_200.

In addition, a core network and/or an apparatus included in the core network may hereinafter be referred to as a core network apparatus.

The core network may be an IP mobile communication network that is operated by a mobile network operator (MNO) that connects an access network to a DN, may be a core network for a mobile communication network operator that operates and manages the mobile communication system 1, or may be a core network for a virtual mobile communication operator or a virtual mobile communication service provider such as a mobile virtual network operator (MVNO), a mobile virtual network enabler (MVNE), or the like.

In addition, the DN may be a DN that provides a communication service to the UE. The DN may be configured as a packet data service network, or configured for each service. Furthermore, the DN may include a connected communication terminal. Thus, connecting to the DN may be connecting to a communication terminal or a server apparatus deployed in the DN. Furthermore, transmitting and/or receiving of user data to and/or from the DN may be transmitting and/or receiving user data to and/or from a communication terminal or a server apparatus deployed in the DN.

Hereinafter, at least some of the access network, the core network, and the DN and /or one or more apparatuses included therein may be referred to as networks or network apparatuses. In other words, the expression "a network and/or a network apparatus transmits and/or receives a message and/or performs a procedure" means that at least some of the access network, the core network, and the DN, and/or one or more apparatuses included therein transmit and/or receive a message and/or perform a procedure.

In addition, the UE can connect to the access network. In addition, the UE can connect to the core network over the access network. Furthermore, the UE can connect to the DN over the access network and the core network. In other words, the UE can transmit and/or receive (communicate) user data to and/or from the DN. In transmission and/or reception of user data, non-IP communication may be used in addition to Internet Protocol (IP) communication.

Here, IP communication is data communication using an IP, in which data is transmitted and/or received by using IP packets. An IP packet includes an IP header and a payload part. The payload part may include data transmitted and/or received by apparatuses and functions included in the EPS and by apparatuses and functions included in the 5GS.

In addition, non-IP communication is data communication without using any IP, in which data is transmitted and/or received in a format different from the structure of an IP packet. For example, non-IP communication may be data communication achieved through transmission and/or reception of application data with no IP header added, or user data transmitted and/or received by UE with another header such as a MAC header or an Ethernet (trade name) frame header added may be transmitted and/or received.

### 2. Configuration of Each Apparatus

Next, a configuration of each apparatus (UE, and/or an access network apparatus and/or a core network apparatus) used in each embodiment will be described with reference to drawings. Further, each apparatus may be configured as physical hardware, may be configured as logical (virtual) hardware configured on general purpose hardware, or may be configured as software. In addition, at least some of the functions (including all the functions) of each apparatus may be configured as physical hardware, logical hardware, or software.

Note that each of storage units (a storage unit_330, a storage unit_440, and a storage unit_540) in the apparatuses and functions to be introduced below includes, for example, a semiconductor memory, a solid state drive (SSD), a hard disk drive (HDD), or the like. In addition, each storage unit can store various types of information transmitted and/or received to and/or from apparatuses and functions other than a subject apparatus and function (e.g., the UE and/or the access network apparatus and/or the core network apparatus, and/or the PDN, and/or the DN), as well as information originally configured prior to shipment. In addition, each storage unit can store identification information, control information, flags, parameters, and the like included in control messages transmitted and/or received in various communication procedures which will be described below. In addition, each of the storage units may store such information for each UE.

### 2.1. Apparatus Configuration of UE_10

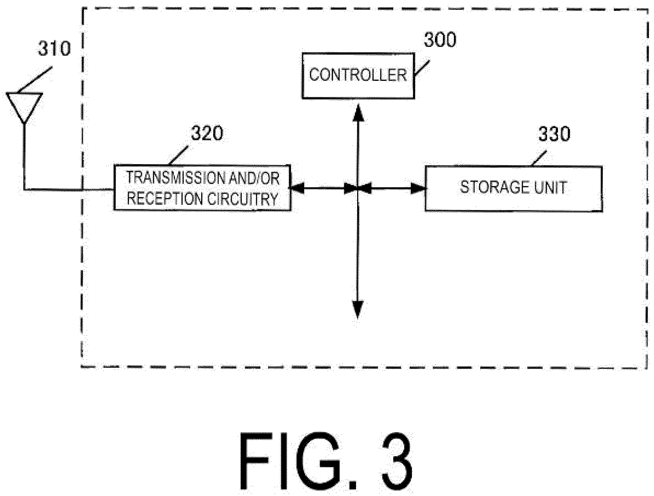

First, an example of an apparatus configuration of UE used in each embodiment will be described with reference to FIG. 3. The UE includes a controller_300, an antenna_310, a transmission and/or reception circuitry _320, and a storage unit_330. The controller_300, the transmission and/or reception circuitry _320, and the storage unit_330 are connected to each other via a bus. The transmission and/or reception circuitry _320 is connected to the antenna_310.

The controller_300 is a function unit for controlling operations and functions of the entire UE. Note that the controller_300 may process all functions not included in other function units (the transmission and/or reception circuitry _320 and the storage unit_330) of the UE. The controller_300 implements various processing operations in the UE by reading out and performing various programs stored in the storage unit 330 as necessary.

The transmission and/or reception circuitry _320 is a function unit for wirelessly communicating with a base station apparatus or the like in the access network via the antenna_310. In other words, the UE can transmit and/or receive user data and/or control information to and/or from the access network apparatus and/or the core network apparatus and/or the DN by using the transmission and/or reception circuitry _320.

Specifically, the UE can communicate with the base station apparatus_110, the base station apparatus_120, and the TNAP by using the transmission and/or reception circuitry _320. In other words, the UE communicates with the base station apparatus_110 in communication over the 3GPP access. In addition, the UE communicates with the base station apparatus_120 or the TNAP in communication over the non-3GPP access. More specifically, the UE communicates with the base station apparatus_120 in communication over untrusted non-3GPP access, and the UE communicates with the TNAP in communication over trusted non-3GPP access. Thus, the UE can modify a connection destination depending on the access network to be used.

In addition, the UE can communicate with the core network apparatus (AMF, SMF, UPF, or the like) by using the transmission and/or reception circuitry _320.

The UE can transmit and/or receive a Non-Access-Stratum (NAS) message to and/or from the AMF over an N1 interface (interface between the UE and the AMF). However, the N1 interface is a logical interface, and thus communication between the UE and the AMF is actually performed via the base station apparatus_110, the base station apparatus_112, the base station apparatus_120, the base station apparatus_122, and the TNAP. Specifically, the UE can communicate with the AMF via the base station apparatus_110 or the base station apparatus_112 in communication over the 3GPP access. In addition, the UE can communicate with the AMF via the base station apparatus_120 or the base station apparatus_122 and the N3IWF in communication over the non-3GPP access (untrusted non-3GPP access). In addition, the UE can communicate with the AMF via the TNAP and the TNGF in communication over the non-3GPP access (trusted non-3GPP access). The information exchanged between the UE and the AMF is mostly control information.

In addition, the UE can communicate with the SMF by using the N1 interface and an N11 interface (an interface between the AMF and the SMF). Specifically, the UE can communicate with the SMF via the AMF. Note that a communication path between the UE and the AMF may follow three types of paths depending on the access (3GPP access, untrusted non-3GPP access, and trusted non-3GPP access) as described above. The information exchanged between the UE and the SMF is mostly control information.

In addition, the UE can communicate with the UPF by using the N3 interface (an interface between the access network and the UPF). Specifically, the UE can communicate with the UPF via the base station apparatus_110 or the base station apparatus_112 in communication over the 3GPP access. In addition, the UE can communicate with the UPF via the base station apparatus_120 or the base station apparatus_122 and the N3IWF in communication over the non-3GPP access (untrusted non-3GPP access). In addition, the UE can communicate with the UPF via the TNAP and the TNGF in communication over the non-3GPP access (trusted non-3GPP access). A communication path between the UE and the UPF is mainly used to transmit and/or receive user data.

In addition, the UE can communicate with the PCF by using the N1 interface, the N11 interface, and an N7 interface (interfaces between the SMF and the PCF). Specifically, the UE can communicate with the PCF via the AMF and the SMF. Note that a communication path between the UE and the AMF may follow three types of paths depending on the access (3GPP access, untrusted non-3GPP access, trusted non-3GPP access) as described above. The information exchanged between the UE and the PCF is mostly control information.

In addition, the UE can communicate with the DN by using the N3 interface and an N6 interface (interfaces between the UPF and the DN). Specifically, the UE can communicate with the DN via the base station apparatus_110 or the base station apparatus_112 and the UPF in communication over the 3GPP access. In addition, the UE can communicate with the DN via the base station apparatus_120 or the base station apparatus_122, the N3IWF, and the UPF in communication over the non-3GPP access (untrusted non-3GPP access). In addition, the UE can communicate with the DN via the TNAP, the TNGF, and the UPF in communication over the non-3GPP access (trusted non-3GPP access). A communication path between the UE and the DN, that is, a PDU session or an MA PDU session, is mainly used to transmit and/or receive user data.

Note that the above description contains only communication between the UE and a representative apparatus/function in the present specification and it is needless to say that the UE can of course communicate with apparatuses/functions other than those described above, that is, core network apparatuses other than those described above.

The storage unit_330 is a function unit for storing programs, user data, control information, and the like necessary for each operation of the UE.

In addition, the UE is a UE that supports the ATSSS function, and control information received from the core network side is desirably stored in the storage unit_330. In addition, the controller_300 may include a function to determine whether to communicate by using the MA PDU session or the SA PDU session in accordance with control information received from the core network side or the control information stored in the storage unit_330. In addition, in a case that communication is performed by using the MA PDU session, it is possible to determine whether to communicate only over the 3GPP access, only over the non-3GPP access, or over the 3GPP access and the non-3GPP access. In addition, in a case that communication is performed by using the SA PDU session, it is possible to determine whether to communicate only over the 3GPP access or only over the non-3GPP access. In accordance with these determinations, the controller_300 controls the transmission and/or reception circuitry 320 to allow appropriate communication.

In addition, in a case that communication is performed by using the MA PDU session, the UE may include a function to determine, according to ATSSS rules received from the SMF, whether to route the uplink traffic over the 3GPP access or the non-3GPP access.

In addition, the UE may include a function to request the establishment of the MA PDU session based on URSP rules received from the PCF.

### 2.2. Apparatus Configuration of Base Station Apparatus_110 and Base Station Apparatus_112

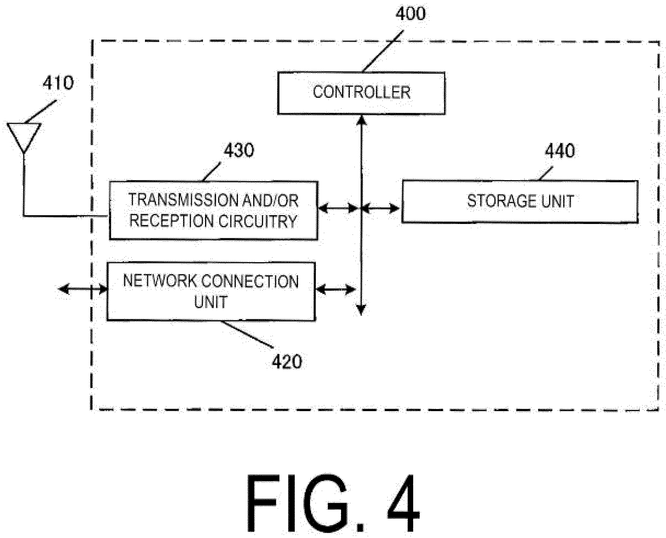

Now, an example of an apparatus configuration of the base station apparatus_110 and the base station apparatus_112 used in each of the embodiments will be described with reference to FIG. 4. Note that, because the base station apparatus_112 and the base station apparatus_110 may have the same apparatus configuration, the apparatus configuration of the base station apparatus_110 will be described below.

The base station apparatus_110 is a base station apparatus deployed in the 3GPP access. The base station apparatus_110 includes a controller_400, an antenna_410, a network connection unit_420, a transmission and/or reception circuitry_430, and a storage unit_440. The controller_400, the network connection unit_420, the transmission and/or reception circuitry_430, and the storage unit_440 are connected to each other via a bus. The transmission and/or reception circuitry_430 is connected to the antenna_410. In addition, the base station apparatus_110 may be a base station apparatus that supports the ATSSS function.

The controller_400 is a function unit for controlling the operations and functions of the entire base station apparatus_110. Note that the controller_400 may process all of the functions that are not included in the other function units of the base station apparatus_110 (the network connection unit_420, the transmission and/or reception circuitry_430, and the storage unit_440). The controller _400 implements various processing operations in the base station apparatus_110 by reading out and performing various programs stored in the storage unit 440 as necessary.

The network connection unit_420 is a function unit through which the base station apparatus_110 communicates with the AMF and/or the UPF. In other words, the base station apparatus_110 can transmit and/or receive control information and/or user data to and from the AMF and/or UPF and the like by using the network connection unit_420.

Specifically, the base station apparatus_110 can communicate with the AMF over the N2 interface (interface between the access network and the AMF) by using the network connection unit_420. In addition, the base station apparatus_110 can communicate with the UPF over the N3 interface by using the network connection unit_420.

The transmission and/or reception circuitry_430 is a function unit for wirelessly communicating with the UE via the antenna_410. In other words, the base station apparatus_110 can transmit and/or receive user data and/or control information to and from the UE by using the transmission and/or reception circuitry_430 and the antenna_410.

In addition, the base station apparatus_110 includes a function of transmitting user data and/or control information to a core network apparatus in a case of receiving the user data and/or control information addressed to the core network apparatus from the UE. In addition, the base station apparatus_110 includes a function of transmitting user data and/or control information to the UE in a case of receiving the user data and/or control information addressed to the UE from the core network apparatus.

Note that the above description contains only the communication between the base station apparatus_110 and the representative apparatuses/functions and that the base station apparatus_110 can of course communicate with apparatuses/functions other than those described above, that is, core network apparatuses other than those described above.

The storage unit_440 is a function unit for storing programs, user data, control information, and the like necessary for each operation of the base station apparatus_110.

### 2.3. Apparatus Configuration of Base Station Apparatus_120 and Base Station Apparatus_122

Next, an example of an apparatus configuration of the base station apparatus_120 and the base station apparatus_122 used in each of the embodiments will be described with reference to FIG. 4. Note that the base station apparatus_122 and the base station apparatus_120 may have the same apparatus configuration, and thus the apparatus configuration of the base station apparatus_110 will be described below.

The base station apparatus_120 is a base station apparatus deployed in the non-3GPP Access (untrusted non-3GPP access). The base station apparatus_120 includes the controller_400, the antenna_410, the network connection unit_420, the transmission and/or reception circuitry_430, and the storage unit_440. The controller_400, the network connection unit_420, the transmission and/or reception circuitry_430, and the storage unit_440 are connected to each other via a bus. The transmission and/or reception circuitry _430 is connected to the antenna_410. In addition, the base station apparatus_120 may be a base station apparatus that supports the ATSSS function.

The controller_400 is a function unit for controlling the operations and functions of the entire base station apparatus_120. Note that the controller_400 may process all of the functions that are not included in the other function units of the base station apparatus_120 (the network connection unit_420, the transmission and/or reception circuitry _430, and the storage unit_440). The controller_400 implements various processing operations in the base station apparatus_120 by reading out and performing various programs stored in the storage unit 440 as necessary.

The network connection unit_420 is a function unit through which the base station apparatus_120 communicates with the N3IWF and through which the base station apparatus_120 communicates with the AMF and/or the UPF via the N3IWF. In other words, the base station apparatus_120 can transmit and/or receive control information and/or user data to and from the N3IWF by using the network connection unit_420. In addition, the base station apparatus_120 can transmit and/or receive control information and/or user data to and from the AMF and/or UPF and the like by using the network connection unit_420.

In other words, the base station apparatus _120 can communicate with the N3IWF over a Y2 interface (an interface between the access network and the N3IWF) by using the network connection unit_420. In addition, the base station apparatus _120 can communicate with the AMF via the N3IWF over the N2 interface (an interface between the N3IWF and the AMF). In addition, the base station apparatus_120 can communicate with the UPF via the N3IWF over the N3 interface (an interface between the N3IWF and the UPF).

The transmission and/or reception circuitry _430 is a function unit for wirelessly communicating with the UE via the antenna_410. In other words, the base station apparatus_120 can transmit and/or receive user data and/or control information to and from the UE over a Y1 interface (an interface between the access network and the UE) by using the transmission and/or reception circuitry_430 and the antenna_410.

In addition, the base station apparatus_120 includes a function of transmitting the user data and/or control information to the core network apparatus in a case of receiving the user data and/or control information addressed to the core network apparatus from the UE. In addition, the base station apparatus_120 includes a function of transmitting user data and/or control information to the UE in a case of receiving the user data and/or control information addressed to the UE from the core network apparatus.

Note that the above description contains only the communication between the base station apparatus_120 and the representative apparatuses/functions and that the base station apparatus_120 can of course communicate with apparatuses/functions other than those described above, that is, core network apparatuses other than those described above.

The storage unit_440 is a function unit for storing programs, user data, control information, and the like necessary for each operation of the base station apparatus_120.

### 2.4. Apparatus Configuration of TNAP

Next, an example of an apparatus configuration of a TNAP used in each embodiment will be described with reference to FIG. 4. A TNAP is a base station apparatus (also referred to as an access point) deployed in the non-3GPP access (trusted non-3GPP access). The TNAP includes a controller_400, an antenna_410, a network connection unit_420, a transmission and/or reception circuitry_430, and a storage unit_440. The controller_400, the network connection unit_420, the transmission and/or reception circuitry_430, and the storage unit_440 are connected to each other via a bus. The transmission and/or reception circuitry _430 is connected to the antenna_410. In addition, the TNAP may be a TNAP that supports the ATSSS function.

The controller_400 is a function unit for controlling the operations and functions of the entire TNAP. Note that the controller_400 may process all of the functions that are not included in the other function units of the TNAP (the network connection unit_420, the transmission and/or reception circuitry _430, and the storage unit_440). The controller _400 implements various processing operations in the TNAP by reading out and performing various programs stored in the storage unit_440 as necessary.

The network connection unit_420 is a function unit through which the TNAP communicates with a TNGF and through which the TNAP communicates with the AMF and/or the UPF via the TNGF. In other words, the TNAP can transmit and/or receive control information and/or user data to and from the TNGF by using the network connection unit_420. In addition, the TNAP can transmit and/or receive control information and/or user data to and/or from the AMF and/or UPF and the like by using the network connection unit_420.

In other words, the TNAP can communicate with the TNGF over a Ta interface (an interface between the TNAP and the TNGF) by using the network connection unit_420. In addition, the TNAP can communicate with the AMF over the N2 interface (an interface between the TNGF and AMF) via the TNGF. In addition, the TNAP can communicate with the UPF via the TNGF over the N3 interface (an interface between the TNGF and the UPF).

The transmission and/or reception circuitry _430 is a function unit for wirelessly communicating with the UE via the antenna_410. In other words, the TNAP can transmit and/or receive user data and/or control information to and from the UE over a Yt interface (an interface between the TNAP and the UE) by using the transmission and/or reception circuitry _430 and the antenna_10.

In addition, the TNAP includes a function of transmitting user data and/or control information to the core network apparatus in a case of receiving user data and/or control information addressed to the core network apparatus from the UE. In addition, the TNAP includes a function of transmitting user data and/or control information to the UE in a case of receiving the user data and/or control information addressed to the UE from the core network apparatus.

Note that the above description contains only the communication between the TNAP and the representative apparatuses/functions and that the TNAP can of course communicate with apparatuses/functions other than those described above, that is, core network apparatuses other than those described above.

The storage unit_440 is a function unit for storing programs, user data, control information, and the like necessary for each operation of the TNAP.

### 2.5. Apparatus Configuration of N3IWF_240

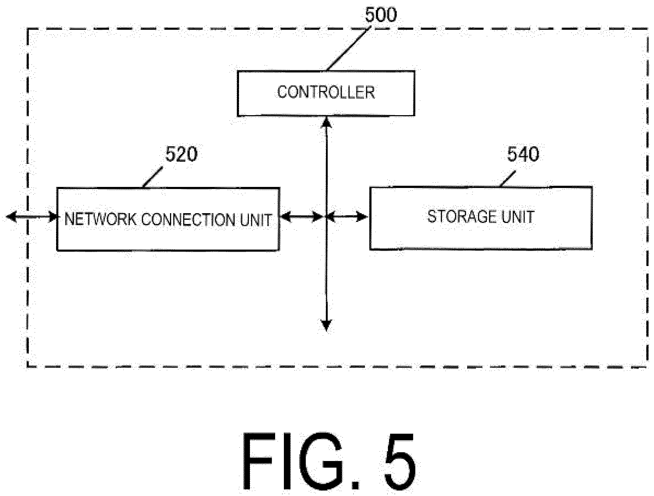

Next, an example of the apparatus/function configuration of the N3IWF used in each embodiment will be described with reference to FIG. 5. The N3IWF is an apparatus and/or function allocated between the non-3GPP access and the 5GC in a case of connection of the UE to the 5GS over the non-3GPP access (untrusted non-3GPP access), and is specifically allocated in the non-3GPP access (untrusted non-3GPP access) or the core network. The N3IWF includes a controller_500, a network connection unit_520, and a storage unit_540. The controller_500, the network connection unit_520, and the storage unit_540 are connected to each other via a bus. In addition, the N3IWF may be an N3IWF that supports the ATSSS function.

The controller_500 is a function unit for controlling the operations and functions of the entire N3IWF. Note that the controller_500 may process all of the functions that are not included in the other function units of the N3IWF (the network connection unit_520 and the storage unit_540). The controller_500 implements various processing operations in the N3IWF by reading out and performing various programs stored in the storage unit 540 as necessary.

The network connection unit_520 is a function unit through which the N3IWF communicates with the base station apparatus_120 and/or the base station apparatus_122 and/or the AMF and/or UPF. In other words, the N3IWF can transmit and/or receive control information and/or user data to and from the base station apparatus_120 or the base station apparatus_122 by using the network connection unit_520. In addition, the N3IWF can transmit and/or receive control information and/or user data to and/or from the AMF and/or UPF and the like by using the network connection unit_520.

In other words, the N3IWF can communicate with the base station apparatus_120 or the base station apparatus_122 over the Y2 interface by using the network connection unit_520. In addition, the N3IWF can communicate with the AMF over the N2 interface. In addition, the N3IWF can communicate with the UPF over the N3 interface.

Note that the above description contains only the communication between the N3IWF and the representative apparatuses/functions and that the N3IWF can of course communicate with apparatuses/functions other than those described above, that is, core network apparatuses other than those described above.

The storage unit_540 is a function unit for storing programs, user data, control information, and the like necessary for each operation of the N3IWF.

Note that the N3IWF includes a function to establish an IPsec tunnel with the UE, a function to terminate the N2 interface for the control plane, a function to terminate the N3 interface for the user plane, a function to relay NAS signaling between the UE and the AMF, a function to process N2 signaling from the SMF for the PDU session or QoS, a function to establish IPsec Security Association (SA) in order to support traffic for the PDU session, a function to relay user plane packets between the UE and the UPF (including a function to encapsulate/decapsulate packets for IPsec and an N3 tunnel), a function to serve as a local mobility anchor in the untrusted non-3GPP access network, a function to select the AMF, and the like. These functions are all controlled by the controller_500.

### 2.6. Apparatus Configuration of TNGF

Next, an example of the apparatus/function configuration of the TNGF used in each embodiment will be described with reference to FIG. 5. The TNGF is an apparatus and/or function allocated between the non-3GPP access and the 5GC in a case of connection of the UE to the 5GS over the non-3GPP access (trusted non-3GPP access), and is specifically allocated in the non-3GPP access (trusted non-3GPP access) or the core network. The TNGF includes a controller_500, a network connection unit_520, and a storage unit_540. The controller _500, the network connection unit_520, and the storage unit_540 are connected to each other via a bus. In addition, the TNGF may be a TNGF that supports the ATSSS function.

The controller_500 is a function unit for controlling the operations and functions of the entire TNGF. Note that the controller_500 may process all of the functions that are not included in the other function units of the TNGF (the network connection unit_520 and the storage unit_540). The controller_500 implements various processing operations in the TNGF by reading out and performing various programs stored in the storage unit_540 as necessary.

The network connection unit_520 is a function unit through which the TNGF communicates with the TNAP and/or the AMF and/or the UPF. In other words, the TNGF can transmit and/or receive control information and/or user data to and from the TNAP by using the network connection unit_520. In addition, the TNGF can transmit and/or receive control information and/or user data to and/or from the AMF and/or the UPF and the like by using the network connection unit_520.

In other words, the TNGF may use the network connection unit_520 to communicate with the TNAP over the Y2 interface. In addition, the TNGF can communicate with the AMF over the N2 interface. In addition, the TNGF can communicate with the UPF over the N3 interface.

Note that the above description contains only the communication between the TNGF and the representative apparatuses/functions and that the TNGF can of course communicate with apparatuses/functions other than those described above, that is, core network apparatuses other than those described above.

The storage unit_540 is a function unit for storing programs, user data, control information, and the like necessary for each operation of the TNGF.

Note that the TNGF includes a function to terminate the N2 interface and the N3 interface, a function to behave as an administrator in a case that the UE registers with the 5GC via the TNAN, a function to select the AMF, a function to transparently (without processing the message) relay an NAS message between the UE and the AMF, a function to process the SMF and N2 signaling in order to support the PDU session or QoS, a function to transparently (without processing the PDUs) relay PDUs between the UE and the UPF, a function to serve as a local mobility anchor in the TNAN, and the like. All of the functions are controlled by the controller_500.

### 2.7. Apparatus Configuration of AMF _210

Next, an example of the apparatus configuration of the AMF used in each embodiment will be described with reference to FIG. 5. The AMF includes the controller_500, the network connection unit_520, and the storage unit_540. The controller _500, the network connection unit_520, and the storage unit_540 are connected to each other via a bus. The AMF may be a node that handles the control plane. The AMF may be an AMF that supports the ATSSS function.

The controller_500 is a function unit for controlling the operations and functions of the entire AMF. Note that the controller_500 may process all of the functions that are not included in the other function units of the AMF (the network connection unit_520 and the storage unit_540). The controller_500 implements various processing operations in the AMF by reading out and performing various programs stored in the storage unit_540 as necessary.

The network connection unit_520 is a function unit through which the AMF connects to the base station apparatus, and/or the SMF, and/or the PCF, and/or the UDM, and/or an SCEF in a 5G AN. In other words, the AMF can transmit and/or receive user data and/or control information to and/or from the base station apparatus, and/or the SMF, and/or the PCF, and/or the UDM, and/or the SCEF in the 5G AN by using the network connection unit_520.

As described in more detail with reference to FIG. 2, by using the network connection unit_520, the AMF in the 5GC can communicate with the base station apparatus over the N2 interface, can communicate with the UDM over an N8 interface (an interface between the AMF and the UDM), can communicate with the SMF over the N11 interface, and can communicate with the PCF over an N15 interface (an interface between the AMF and the PCF). In addition, the AMF can transmit and/or receive the NAS message to and/or from the UE over the N1 interface by using the network connection unit_520. However, because the N1 interface is logical, communication between the UE and the AMF is actually performed over the 5G AN.

The storage unit_540 is a function unit for storing programs, user data, control information, and the like necessary for each operation of the AMF.

Note that the AMF includes a function to exchange control messages with the RAN by using the N2 interface, a function to exchange NAS messages with the UE by using the N1 interface, a function to cipher the NAS messages and to protect the integrity of the NAS messages, a registration management (RM) function, a connection management (CM) function, a reachability management function, a mobility management function for the UE or the like, a function to transfer session management (SM) messages between the UE and the SMF, an access authentication (access authorization) function, a security anchor functionality (SEA), a security context management (SCM) function, a function to support the N2 interface for the non-3GPP interworking function (N3IWF), a function to support transmission and/or reception of NAS signaling to and/or from the UE via the N3IWF, a function to authenticate the UE connected via the N3IWF, and the like. All of the functions are controlled by the controller_500.

In addition, in registration management, an RM state is managed for each UE. In the RM state, the UE and the AMF may be synchronized. The RM state includes a deregistered state (RM-DEREGISTERED state) and a registered state (RM-REGISTERED state). In the RM-DEREGISTERED state, the UE is in a state of not being registered with the network, and thus, the AMF fails to reach the UE because a UE context in the AMF includes no valid location information or routing information for the UE. In addition, in the RM-REGISTERED state, the UE is registered with the network, and thus, the UE can receive services that require registration with the network. Note that the RM state may be expressed as a 5GMM state. In this case, the RM-DEREGISTERED state may be expressed as a 5GMM-DEREGISTERED state, or the RM-REGISTERED state may be expressed as a 5GMM-REGISTERED state.

In other words, the 5GMM-REGISTERED state may be a state in which each apparatus has established the 5GMM context or the PDU session context. Note that, in a case that each apparatus is in the 5GMM-REGISTERED state, the UE_10 may initiate transmission and/or reception of user data or control messages, or may respond to paging. Furthermore, note that, in a case that each apparatus is in the 5GMM-REGISTERED state, the UE_10 may further perform the registration procedures other than a registration procedure for initial registration, and/or a service request procedure.

Furthermore, the 5GMM-DEREGISTERED state may be a state in which each apparatus has not established the 5GMM context, a state in which the location information of the UE_10 is not recognized by the network, or a state in which the network cannot reach the UE_10. Note that in a case that each apparatus is in the 5GMM-DEREGISTERED state, the UE_10 may initiate the registration procedure, or may establish the 5GMM context by performing the registration procedure.

In addition, in connection management, a CM state is managed for each UE. In the CM state, the UE and the AMF may be synchronized. The CM state includes a disconnected state (CM-IDLE state) and a connected state (CM-CONNECTED state). Although the UE is in the RM-REGISTERED state in the CM-IDLE state, it does not have an NAS signaling connection established between the AMF and the UE over the N1 interface. In addition, in the CM-IDLE state, the UE does not have an N2 interface connection (N2 connection) and an N3 interface connection (N3 connection). On the other hand, in the CM-CONNECTED state, the UE has the NAS signaling connection established between the AMF and the UE over the N1 interface. In addition, in the CM-CONNECTED state, the UE may have an N2 interface connection (N2 connection) and/or an N3 interface connection (N3 connection).

Furthermore, in connection management, the CM state in the 3GPP access and the CM state in the non-3GPP access may be separately managed. In this case, the CM state in the 3GPP access may include a non-connected state in the 3GPP access (CM-IDLE state over 3GPP access) and a connected state in the 3GPP access (CM-CONNECTED state over 3GPP access). Furthermore, the CM state in the non-3GPP access may include a non-connected state in the non-the 3GPP access (CM-IDLE state over non-3GPP access) and a connected state in the non-the 3GPP access (CM-CONNECTED state over non-3GPP access). Note that the non-connected state may be expressed as an idle mode, and the connected state mode may be expressed as a connection mode.

Note that the CM state may be expressed as a 5GMM mode. In this case, the non-connected state may be expressed as a 5GMM non-connected mode (5GMM-IDLE mode), and the connected state may be expressed as a 5GMM connected mode (5GMM-CONNECTED mode). Furthermore, the non-connected state in the 3GPP access may be expressed as a 5GMM non-connected mode over the 3GPP access (5GMM-IDLE mode over 3GPP access), and the connected state in the 3GPP access may be expressed as a 5GMM connected mode over the 3GPP access (5GMM-CONNECTED mode over 3GPP access). In addition, the non-connected state in the non-3GPP access may be expressed as a 5GMM non-connected mode over the non-3GPP access (5GMM-IDLE mode over non-3GPP access), and the connected state in the non-3GPP access may be expressed as a 5GMM connected mode over the non-3GPP access (5GMM-CONNECTED mode over non-3GPP access). Note that the 5GMM non-connected mode may be expressed as an idle mode, and the 5GMM connected mode may be expressed as a connected mode.

In addition, one or more AMFs may be deployed within the core network. In addition, the AMF may be an NF that manages one or more network slice instances (NSIs). In addition, the AMF may be a common control plane network function (CCNF or Common CPNF) shared among multiple NSIs.

### 2.8. Apparatus Configuration of SMF_220

Next, an example of an apparatus configuration of the SMF used in each embodiment will be described with reference to FIG. 5. The SMF includes a controller _500, a network connection unit_520, and a storage unit_540. The controller _500, the network connection unit_520, and the storage unit_540 are connected to each other via a bus. The SMF may be a node that handles the control plane. In addition, the SMF may be an SMF that supports the ATSSS function.

The controller_500 is a function unit for controlling the operations and functions of the entire SMF. Note that the controller_500 may process all of the functions that are not included in the other function units of the SMF (the network connection unit_520 and the storage unit_540). The controller_500 implements various processing operations in the SMF by reading out and performing various programs stored in the storage unit_540 as necessary.

The network connection unit_520 is a function unit through which the SMF connects to the AMF, and/or the UPF, and/or the PCF, and/or the UDM. In other words, the SMF can transmit and/or receive user data and/or control information to and/or from the AMF, and/or the UPF, and/or the PCF, and/or the UDM by using the network connection unit_520.

As described in detail with reference to FIG. 2, by using the network connection unit_520, the SMF in the 5GC can communicate with the AMF over the N11 interface, can communicate with the UPF over an N4 interface (an interface between the SMF and the UPF), can communicate with the PCF over the N7 interface, and can communicate with the UDM over an N10 interface (an interface between the SMF and the UDM).

The storage unit_540 is a function unit for storing programs, user data, control information, and the like necessary for each operation of the SMF.

Note that the SMF includes a Session Management function for establishment, modification, release, and the like of the PDU session, a function of IP address allocation to the UE and management of the IP address, a function of UPF selection and control, a UPF configuration function to route traffic to an appropriate destination (transmission destination), a function to transmit and/or receive an SM portion of NAS messages, a function to perform a notification of arrival of downlink data (downlink data notification), a function to provide SM information specific to an AN (for each AN) transmitted to the AN over the N2 interface via the AMF, a function to determine a session and service continuity (SSC) mode for a session, a roaming function, and the like. In addition, the SMF includes a function to create ATSSS rules and N4 rules from PCC rules received from the PCF. The ATSSS rules are information for controlling the MA PDU session transmitted from the SMF to the UE. The N4 rules are information for controlling the MA PDU session transmitted from the SMF to the UPF. In addition, the SMF includes a function to manage the PCC rules, the ATSSS rules, and the N4 rules in association with one another (which is also referred to as mapping). All of the functions are controlled by the controller_500.

### 2.9. Apparatus Configuration of UPF_230

Next, an example of an apparatus configuration of the UPF used in each embodiment will be described with reference to FIG. 5. The UPF includes a controller _500, a network connection unit_520, and a storage unit_540. The controller_500, the network connection unit_520, and the storage unit_540 are connected to each other via a bus. The UPF may be a node that handles the user plane. In addition, the UPF may be a UPF that supports the ATSSS function.

The controller_500 is a function unit for controlling the operations and functions of the entire UPF. Note that the controller_500 may process all of the functions that are not included in the other function units of the UPF (the network connection unit_520 and the storage unit_540). The controller_500 implements various processing operations in the UPF by reading out and performing various programs stored in the storage unit_540 as necessary.

The network connection unit_520 is a function unit through which the UPF connects to the base station apparatus, and/or the SMF, and/or the DN in the 5G AN. In other words, the UPF can transmit and/or receive user data and/or control information to and/or from the base station apparatus, and/or the SMF, and/or the DN in the 5G AN by using the network connection unit_520.

As described in detail with reference to FIG. 2, by using the network connection unit_520, the UPF in the 5GC can communicate with the base station apparatus over the N3 interface, can communicate with the SMF over the N4 interface, and can communicate with the DN over the N6 interface, and can communicate with the other UPF over an N9 interface (an interface between the UPFs).

The storage unit_540 is a function unit for storing programs, user data, control information, and the like necessary for each operation of the UPF.

Note that the UPF includes a function to serve as an anchor point for intra-RAT mobility or inter-RAT mobility, a function as an external PDU session point for interconnection with the DN (in other words, a function to serve as a gateway between the DN and the core network to transfer user data), a function to route and transfer packets, an uplink classifier (UL CL) function to support routing of multiple traffic flows to one DN, a branching point function to support a multi-homed PDU session, a Quality of Service (QoS) processing function for the user plane, an uplink traffic verification function, a function to trigger buffering of downlink packets and downlink data notification, and the like. In addition, the UPF also includes a function to determine, based on the N4 rules received from the SMF, whether to route the downlink traffic the 3GPP access or the non-3GPP access in a case that the MA PDU session has been established. All of the functions are controlled by the controller_500.

In addition, the UPF may be a gateway for IP communication and/or non-IP communication. In addition, the UPF may include a function to transfer IP communication or a function to perform conversion between non-IP communication and IP communication. Furthermore, the multiple gateways deployed may be gateways connecting the core network to a single DN. Note that the UPF may have connectivity with another NF or may be connected to each apparatus via another NF.

Note that the user plane refers to user data transmitted and/or received between the UE and the network. The user plane may be transmitted and/or received by using a PDU session. Furthermore, in the 5GS, the user plane may be transmitted and/or received over the interface between the UE and the NG RAN and/or the N3 interface and/or the N9 interface and/or the N6 interface. The user plane may hereinafter be expressed as a U-plane.

Furthermore, the control plane refers to a control message transmitted and/or received to perform communication control and the like of the UE. The control plane may be transmitted and/or received by using Non-Access-Stratum (NAS) signaling connection between the UE and the AMF. Furthermore, in the 5GS, the control plane may be transmitted and/or received by using the interface between the UE and the NG RAN and the N2 interface. Hereinafter, the control plane may be expressed as a control plane, or may be expressed as a C-plane.

Furthermore, the U-Plane (user plane or UP) may be a communication path for transmitting and/or receiving user data, or may include multiple bearers. Moreover, the C-Plane (control plane or CP) may be a communication path for transmitting and/or receiving control messages, or may include multiple bearers.

### 2.10. Apparatus Configuration of PCF _250

Next, an example of an apparatus configuration of the PCF used in each embodiment will be described with reference to FIG. 5. The PCF includes a controller _500, a network connection unit_520, and a storage unit_540. The controller_500, the network connection unit_520, and the storage unit_540 are connected to each other via a bus. In addition, the PCF may be a PCF that supports the ATSSS function.

The controller_500 is a function unit for controlling the operations and functions of the entire PCF. Note that the controller_500 may process all of the functions that are not included in the other function units of the PCF (the network connection unit_520 and the storage unit_540). The controller_500 implements various processing operations in the PCF by reading out and performing various programs stored in the storage unit_540 as necessary.

The network connection unit_520 is a function unit through which the PCF connects to the SMF and/or an application function (AF). In other words, the PCF can transmit and/or receive control information to and/or from the SMF and/or the AF by using the network connection unit_520.

The PCF may communicate with the SMF over the N7 interface by using the network connection unit_520. In addition, the PCF can communicate with the application function (AF) over the N5 interface (an interface between the PCF and the AF) by using the network connection unit_520.

The storage unit_540 is a function unit for storing programs, user data, control information, and the like necessary for each operation of the UPF.

Note that the PCF includes a function to support a unified policy framework, a function to provide policy rules for a control plane function to force the policy framework, a function to access subscription information, and the like. In addition, the PCF includes a function to generate a policy for the MA PDU session (also referred to as PCC rules), a policy for the SA PDU session, and URSP rules. The policies and rules are transmitted to the SMF, at least some of the policies and rules may be transmitted to the UE or transmitted to the UPF. All of the functions are controlled by the controller_500.

### 3. Highly Specialized Terminology and Identification Information Used in Each Embodiment

Next, highly specialized terminology and identification information used in each embodiment will be described in advance.

### 3.1. Description of Highly Specialized Terminology Used in Each Embodiment

First, highly specialized terminology used in each embodiment will be described.

A network refers to at least part of an access network, a core network, or a DN. In addition, one or more apparatuses included in at least part of the access network, the core network, or the DN may be referred to as a network or a network apparatus. In other words, the expression "a network transmits and/or receives a message and/or performs processing" may mean that an apparatus on a network (a network apparatus and/or a control apparatus) transmits and/or receives a message and/or performs processing. On the contrary, the expression "an apparatus on a network transmits and/or receives a message and/or performs processing" may mean that a network transmits and/or receives a message and/or performs processing.

In addition, a session management (SM) message (also referred to as a non-access-stratum (NAS) SM message) may be an NAS message used in a procedure for SM, or may be a control message transmitted and/or received between the UE and the SMF via the AMF. Furthermore, an SM message may include a PDU session establishment request message, a PDU session establishment accept message, a PDU session complete message, a PDU session reject message, a PDU session modification request message, a PDU session modification accept message, a PDU session modification response message, and the like. In addition, the procedure for SM may include a PDU session establishment procedure.

In addition, a 5G system (5GS) service may be a connection service provided using the core network. Furthermore, the 5GS service may be a service different from an EPS service, or a service similar to the EPS service.

In addition, a non-5GS service may be a service other than the 5GS service, and may include an EPS service and/or a non-EPS service.

In addition, a data network name (DNN) may be identification information for identifying a core network and/or an external network such as a DN. Furthermore, a DNN can also be used as information for selecting a gateway such as the UPF to connect to the core network. A DNN may correspond to an access point name (APN) in the EPS.

In addition, although a PDU session can be defined as association between the UE and the DN providing a PDU connectivity service, in particular it may be connectivity established between the UE and an external gateway or the DN. By establishing a PDU session in the 5GS over the access network and the core network, the UE can transmit and/or receive user data to and/or from the DN by using the PDU session. In this regard, the external gateway may be a UPF, an SCEF, or the like. By using the PDU session, the UE can transmit and/or receive user data to and/or from an apparatus such as an application server which is deployed in the DN. In addition, a PDU connectivity service is a service that provides exchange of PDUs between the UE and the DN. In addition, a PDU session includes only user plane resources on one access network (a 3GPP access network or a non-3GPP access network) and may be referred to as an SA PDU session. In other words, an SA PDU session may be a PDU session that is different from an MA PDU session and does not include user plane resources on the 3GPP access network and user plane resources on the non-3GPP access network at the same time.

Note that each apparatus (UE and/or the access network apparatus, and/or the core network apparatus) may manage the PDU session in association with one or more pieces of identification information. Note that these pieces of identification information may include one or more of a DNN, a TFT, or a PDU session type, application identification information, NSI identification information, access network identification information, and an SSC mode, or may further include other information. Furthermore, in a case that multiple PDU sessions are established, each piece of the identification information associated with the PDU session may be the same content or different content.

In addition, the MA PDU session may be a PDU session in which a PDU connectivity service that enables one 3GPP access network and one non-3GPP access network to be simultaneously used is provided. In addition, the MA PDU session may be a PDU session in which a PDU connectivity service that enables one 3GPP access network or one non-3GPP access network to be used at a certain time point is provided. In other words, the MA PDU session may include only user plane resources on the 3GPP access network, only user plane resources on the non-3GPP access network, or user plane resources on the 3GPP access network and user plane resources on the non-3GPP access network at the same time.

In other words, the UE communicating with the DN by using the MA PDU session may be the UE communicating with the DN by using only user plane resources on the 3GPP access network, or the UE communicating with the DN by using only user plane resources on the non-3GPP access network, or the UE communicating with the DN by using user plane resources on the 3GPP access network and user plane resources on the non-3GPP access network. With such a technique, by using the MA PDU session, the UE can transmit and/or receive user data to and/or from an apparatus such as an application server which is deployed in the DN.

Note that each apparatus (the UE, the access network apparatus, and/or the core network apparatus) may manage the MA PDU session in association with one or more pieces of identification information. Note that these pieces of identification information may include one or more of a DNN, a TFT, or a PDU session type, application identification information, NSI identification information, access network identification information, and an SSC mode, or may further include other information. Furthermore, in a case that multiple MA PDU sessions are established, pieces of identification information associated with the respective MA PDU sessions may include the same content or different content.

In addition, a protocol data unit or a packet data unit (PDU) session type indicates a type of a PDU session, and includes IPv4, IPv6, Ethernet (trade name), and Unstructured. Designation of IPv4 indicates that data is transmitted and/or received by using IPv4. Designation of IPv6 indicates that data is transmitted and/or received by using IPv6. Designation of Ethernet (trade name) indicates transmission and/or reception of Ethernet (trade name) frames. In addition, Ethernet (trade name) may indicate that communication using IP is not performed. Designation of Unstructured indicates that data is transmitted and/or received to and/or from the application server or the like in the DN by using a Point-to-Point (P2P) tunneling technique. As the P2P tunneling technique, for example, a UDP/IP encapsulation technique may be used. Note that a PDU session type may include an IP in addition to the above-described types. An IP can be designated in a case that the UE can use both IPv4 and IPv6. Note that an IP may also be expressed as IPv4v6.

In addition, a network slice (NS) is a logical network that provides specific network capability and network performance. The UE and/or a network can support network slices (NW slices or NSs) in the 5GS.

In addition, a network slice instance (NSI) includes an instance (entity) of the network function (NF) and a set of required resources, and forms an allocated network slice. Here, the NF is a processing function of a network, and has been employed or defined by the 3GPP. An NSI is an entity of one or more NSs configured in the core network. In addition, the NSI may include a virtual network function (NF) generated using a network slice template (NST). Here, the NST is associated with a resource request for providing a required communication service or capability, and is a logical expression of one or more NFs. In other words, the NSI may be an aggregation including multiple NFs in the core network. In addition, the NSI may be a logical network configured to classify the user data delivered through a service or the like. The NS may include one or more NFs. The NF included in the NS may be or may not be an apparatus shared by another NS. The UE and/or an apparatus on the network can be assigned to one or more NSs based on registration information such as NSSAI and/or S-NSSAI and/or UE usage type and/or one or more NSI IDs and/or based on APNs. Note that a UE usage type is a parameter value included in the registration information of the UE to be used for identifying the NSI. The UE usage type may be stored in an HSS. The AMF may select the SMF and the UPF based on the UE usage type.

In addition, Single Network Slice Selection Assistance Information (S-NSSAI) is information for identifying the NS. The S-NSSAI may include only a slice/service type (SST), or include both SST and a slice differentiator (SD). Here, the SST is information indicating an operation of the NS expected in terms of function and service. In addition, the SD may be information for interpolating the SST in a case that one NSI is selected from multiple NSIs indicated by the SST. The S-NSSAI may be information specific to each PLMN or may be standard information common to PLMNs. In addition, the network may store one or more pieces of S-NSSAI in the registration information of the UE as default S-NSSAI. Note that, in a case that the S-NSSAI is default S-NSSAI, the network may provide an NS related to the UE in a case that the UE does not transmit valid S-NSSAI to the network using a registration request message.

In addition, Network Slice Selection Assistance Information (NSSAI) is a group of S-NSSAI. Each piece of S-NSSAI included in NSSAI is information that assists the access network or the core network in selecting the NSI. The UE may store the NSSAI allowed by the network for each PLMN. In addition, the NSSAI may be information used to select the AMF.

In addition, a session and service continuity (SSC) mode indicates a mode of session and service continuity supported by the system and/or each apparatus in the 5G system (5GS). To be more specific, the SSC mode may be a mode indicating the type of session and service continuity supported by the PDU session established between the UE and the UPF. Note that the SSC mode may be a mode indicating the type of session and service continuity configured for each PDU session. Furthermore, the SSC mode may include three modes of SSC mode 1, SSC mode 2, and SSC mode 3. Note that the SSC mode associated with the PDU session need not be modified while the PDU session is continued.

In addition, SSC mode 1 is a mode in which the network maintains a connectivity service to be provided to the UE. Note that, in a case that the PDU session type associated with the PDU session is IPv4 or IPv6, the IP address may be maintained for session and service continuity.

Furthermore, SSC mode 1 may be a mode of session and service continuity in which the same UPF is continuously maintained regardless of an access technology used by the UE to connect to the network. To be more specific, SSC mode 1 may be a mode in which, even in a case that mobility of the UE occurs, session and service continuity is achieved without modifying the UPF used as a PDU session anchor for the established PDU session.

In addition, SSC mode 2 is a mode in which the network releases the connectivity service provided to the UE and the corresponding PDU session. Note that, in SSC mode 2, in a case that the PDU session type associated with the PDU session is IPv4, IPv6, or IPv4v6, the IP address assigned to the UE may be released in a case that the anchor for the PDU session is modified.

Furthermore, SSC mode 2 may be a mode of session and service continuity in which the same UPF is continuously maintained only in a serving area of the UPF. To be more specific, SSC mode 2 may be a mode in which, as long as the UE is in the serving area of the UPF, session and service continuity is achieved without modifying the UPF used by the established PDU session. Furthermore, SSC mode 2 may be a mode in which, in a case that mobility of the UE occurs such that the UE leaves the serving area of the UPF, session and service continuity is achieved by modifying the UPF used by the established PDU session.

In this case, the serving area of the UPF may be an area in which one UPF can provide a session and service continuity function, or a subset of the access network such as a RAT or a cell used by the UE to connect to a network. Furthermore, the subset of the access network may be a network including one or multiple RATs and/or cells.

Note that a modification of an anchor point of the PDU session in SSC mode 2 (hereinafter also referred to as a PDU session anchor or PSA) may be achieved by each apparatus performing a procedure for modifying a PSA in SSC mode 2. Note that the anchor or anchor point may be expressed as an endpoint.

In addition, SSC mode 3 is a mode in which the network ensures that the connectivity is not lost and a modification of the user plane is known to the UE. Note that, in SSC mode 3, in order to achieve better connectivity, a PDU session passing through a new PDU session anchor point may be established before the established PDU session is disconnected. Furthermore, in SSC mode 3, in a case that the PDU session type associated with the PDU session is IPv4, IPv6, or IPv4v6, the IP address assigned to the UE need not be maintained in a case that the anchor for the PDU session is modified.

Moreover, SSC mode 3 may be a mode of session and service continuity that permits a new PDU session and/or communication path through a new UPF to be established for the same DN before disconnection of the PDU session and/or the communication path established between the UE and the UPF. Furthermore, SSC mode 3 may be a mode of session and service continuity that permits the UE to be multi-homed. Furthermore, SSC mode 3 may be a mode in which session and service continuity using multiple PDU sessions and/or the UPFs associated with the PDU sessions is permitted. In other words, in SSC mode 3, each apparatus may achieve session and service continuity by using the multiple PDU sessions, or may achieve session and service continuity by using the multiple UPFs.

Here, in a case that each apparatus establishes a new PDU session and/or communication path, a new UPF may be selected by the network, or a new UPF may be a UPF optimal for a place at which the UE connects to the network. Furthermore, in a case that multiple PDU sessions and/or UPFs used by the PDU sessions are active, the UE may associate the application and/or flow communication with a newly established PDU session immediately or based on completion of communication.

Note that a modification of the anchor point of the PDU session in SSC mode 3 may be achieved by each apparatus performing a procedure for modifying a PSA in SSC mode 3.

In addition, the default SSC mode is an SSC mode used by the UE and/or a network in a case that no specific SSC mode is determined. Specifically, the default SSC mode may be an SSC mode used by the UE in a case that no SSC mode is requested by an application, and/or in a case that the UE has no policy for determining the SSC mode for an application. In addition, the default SSC mode may be an SSC mode used by a network in a case that no SSC mode requested by the UE.

Note that the default SSC mode may be configured for each DN, for each PDN, or for each UE and/or each subscriber, based on subscriber information and/or an operator policy and/or a policy of the UE. Furthermore, the default SSC mode may be information indicating SSC mode 1, SSC mode 2, or SSC mode 3.

In addition, IP address preservation is a technique for allowing the same IP address to be continuously used. In a case that IP address preservation is supported, the UE can continue to use the same IP address for communication of user data even in a case that the UE moves to a location out of the TA. In other words, in a case that IP address preservation is supported, each apparatus may be able to continue using the same IP address for communication of user data even in a case that the anchor point of the PDU session is modified.

In addition, a steering function may be a function by which UE that can use ATSSS steers, switches, or splits the traffic of the MA PDU session over the 3GPP access and the non-3GPP access. Here, the steering function may include a Multi-Path Transmission Control Protocol (MPTCP) function and an Access Traffic Steering, Switching, Splitting (ATSSS)-Low-Layer (LL) function.

In addition, the MPTCP function is a steering function for the layers above the IP layer and is applied to TCP traffic. The traffic to which the MPTCP function is applied may be referred to as an MPTCP flow. In addition, the MPTCP function of the UE can communicate with an MPTCP proxy function of the UPF by using the user plane of the 3GPP access and/or the non-3GPP access. In addition, in a case that the UE requests an MA PDU session and provides an MPTCP capability, the MPTCP function may be enabled, and in a case that the UPF agrees to enable the MPTCP function, the UPF may enable the MPTCP Proxy function. In addition, the network assigns one IP address/prefix for the MA PDU session and two IP addresses/prefixes (also referred to as link-specific multipath addresses). One of link-specific multipath addresses is used to establish a subflow over the 3GPP access, and the other is used to establish a subflow over the non-3GPP access. In addition, the link-specific multicast addresses are used only for the MPTCP function of the UE. Routing cannot be performed over N6. In addition, the network can transmit MPTCP proxy information (which may include the IP address, port number, and type of the MPTCP proxy) to the UE. Here, the type may be Type 1 (transport converter). In addition, the network may indicate a list of applications to which the MPTCP function is to be applied to the UE.

In addition, the ATSSS-LL function is a steering function for the layers below the IP layer, and is applied to all types of traffic (TCP traffic, User Data Protocol (UDP) traffic, Ethernet traffic, and the like). Traffic to which the ATSSS-LL function is applied may be referred to as a non-MPTCP flow. In addition, in the UPF, a steering function that is the same as or similar to the ATSSS-LL function may be supported. In addition, the ATSSS-LL function of the UE determines the steering, switching, or splitting of uplink traffic based on the ATSSS rules and the local conditions. In addition, in a case that the UE requests an MA PDU session and provides the ATSSS-LL capability, the ATSSS-LL function may be enabled, and in a case that the UE provides the ATSSS-LL capability, the ATSSS-LL function of the UPF may be enabled.

In addition, the ATSSS rules correspond to a list of one or more ATSSS rules. The ATSSS rule may include Rule Precedence and/or a Traffic Descriptor and/or an Access Selection Descriptor. Here, Rule Precedence in the ATSSS rule defines the order of the ATSSS rules evaluated by the UE. In a case that the ATSSS rules are received, that is, one or more ATSSS rules are received, the UE may refer to Rule Precedence of each ATSSS rule, and evaluate the ATSSS rules in order from rules with higher priority.

In addition, Traffic Descriptor in the ATSSS rule indicates when to apply the ATSSS rule. Traffic Descriptor in the ATSSS rule may include Application descriptors and/or IP descriptors and/or non-IP descriptors. In addition, Application descriptors may indicate information for identifying an application that generates traffic. In addition, IP descriptors may indicate information for identifying a destination of IP traffic. In addition, non-IP descriptors may indicate information for identifying a destination of non-IP traffic (e.g., Ethernet traffic or Unstructured traffic).

In addition, Access Selection Descriptor in the ATSSS rule may include a steering mode and/or a steering function. The steering mode may be information indicating whether the traffic of a service data flow (also referred to as an SDF) is distributed over the 3GPP access or the non-3GPP access. In addition, the steering mode may include four modes including Active-Standby, Smallest Delay, Load-Balancing, and Priority-based.

In addition, Active-Standby may be a mode in which an active access and a standby access are configured, and in a case that the active access is available, the service data flow (SDF) is steered to the active access, and in a case that the active access becomes unavailable, the SDF is switched to the standby access. In addition, Active-Standby may be a mode in which only the active access is configured, and in a case that the active access is available in a case that the standby access is not configured, the service data flow (SDF) is steered to the active access, and in a case that the active access is unavailable, the SDF is switched to the standby access.

In addition, Smallest Delay may be a mode in which the service data flow (SDF) is steered to an access with a minimum Round-Trip Time (RTT). In addition, in a case that this mode is configured, the UE and UPF may perform measurement to determine an RTT for communication over the 3GPP access and an RTT for communication over the non-3GPP access.

In addition, Load-Balancing may be a mode in which the service data flow (SDF) is transmitted over both accesses. In addition, in a case that Load-Balancing is specified, information indicating a ratio, between the 3GPP access and non-3GPP access, of the service data flow (SDF) to be transmitted may be included.

In addition, Priority-based may be a mode in which, for a high priority access, all traffic of service data flow (SDF) is steered until the access is determined to be congested. In addition, Priority-based may be a mode in which, in a case that the access is determined to be congested, the traffic of the SDF is transmitted to a low priority access as well as to a high priority access. Furthermore, Priority-based may be a mode in which, in a case that a high priority access is unavailable, all traffic of the SDF is transmitted to a low priority access.

In addition, the steering function may indicate which of the MPTCP function or the ATSSS-LL function is to be used to steer the traffic of the service data flow (also referred to as the SDF). In addition, this information may be used in a case that the UE supports both the MPTCP function and ATSSS-LL function.

In addition, UE Route Selection Policy (URSP) rules may include a list of one or more UE Route Selection Policy Rules (URSP). In addition, each URSP rule may include Rule Precedence and/or a traffic descriptor and/or a List of Route Selection Descriptors. Here, Rule Precedence in the URSP rule indicates the order of the URSP rules forced in the UE. In a case that the URSP rules are received, that is, in a case that one or more URSP rules are received, the UE may refer to Rule Precedence of each URSP rule, and apply the URSP rules in order from rules with higher priority.

In addition, Traffic descriptor in the URSP rule indicates when to apply the URSP rule. Traffic descriptor in the URSP rule may include Application descriptors, and/or IP descriptors, and/or Domain descriptors, and/or Non-IP descriptors, and/or a Data Network Name (DNN), and/or Connection Capabilities. In addition, Application Descriptors may include an OS ID and an OS application ID. In addition, the IP descriptors indicate information for identifying the destination of IP traffic, and may include, for example, an IP address, an IPv6 network prefix, a port number, a protocol number, and the like. In addition, Domain descriptors may indicate the Fully Qualified Domain Name (FQDN) of the transmission destination. In addition, non-IP descriptors may indicate information for identifying a destination of non-IP traffic (e.g., Ethernet traffic or Unstructured traffic). In addition, a DNN may be information related to the DNN provided by an application. In addition, Connection Capabilities may indicate information provided by an application of the UE in a case that the UE requests connection to a network by using a certain capability.

In addition, List of Route Selection Descriptors in the URSP rule may include one or more Root Selection Descriptors. Each Route Selection Descriptor may include Route Selection Descriptor Precedence and/or a Route selection components. Route Selection Descriptor Precedence indicates the order in which Route Selection Descriptors are applied. In a case that the Route Selection Descriptors have been received, that is, in a case that one or more Route Selection Descriptors have been received, the UE may refer to Rule Precedence of each Route Selection Descriptor, and apply the Route Selection Descriptors in order from descriptors with higher priority. In addition, the Route Selection Descriptor may include an SSC Mode Selection, and/or Network Slice Selection, and/or DNN Selection, and/or PDU Session Type Selection, and/or Non-Seamless Offload indication, and/or Access Type preference. In addition, SSC Mode Selection may indicate that traffic of an application is routed via a PDU session in a specified SSC mode. In addition, Network Slice Selection may indicate that traffic of the application is routed by using a PDU session that supports one or more pieces of indicated S-NSSAI. In addition, DNN Selection may indicate that traffic of the application is routed by using a PDU session that supports one or more indicated DNNs. Note that, in a case that the DNN is used in the Traffic descriptor, Route Selection Descriptor may not include DNN Selection. In addition, PDU session type selection may indicate that traffic of the application is routed by using a PDU session that supports the indicated PDU session type. In addition, Non-Seamless Offload indication may indicate that traffic of the application is offloaded to the non-3GPP access. In addition, Access Type preference may indicate an access type with which the PDU session is established in a case that the UE needs to establish a PDU session. Here, the access type may be 3GPP or non-3GPP or Multi-Access. In addition, Multi-Access may indicate that a PDU session is to be established as an MA PDU session using both the 3GPP access and the non-3GPP access.

### 3.2. Description of Identification Information Used in Each Embodiment

Next, the identification information used in each embodiment will be described.

First, first identification information is a DNN. In addition, the first identification information may be information indicating a DNN requested by the UE. In addition, the first identification information may be a DNN for identifying a DN serving as a connection destination of an MA PDU session or an SA PDU session of which establishment is requested.

In addition, second identification information is information indicating whether or not the UE supports the ATSSS function. In addition, information indicating whether or not the UE supports the ATSSS function may be expressed as an ATSSS capability. In addition, the second identification information may be information indicating whether or not the UE supports the MPTCP function corresponding to one function included in the ATSSS function, and/or information indicating whether or not the UE supports the ATSSS-LL function corresponding to another function included in the ATSSS function. In addition, information indicating whether or not to support the MPTCP function may be expressed as an MPTCP capability, and information indicating whether or not to support the ATSSS-LL function may be expressed as an ATSSS-LL capability. In addition, in a case that the UE supports only the MPTCP function, the UE can include the MPTCP capability in the second identification information. In addition, in a case that the UE supports only the ATSSS-LL function, the UE can include the ATSSS-LL capability in the second identification information. In addition, in a case that the UE supports the MPTCP function and the ATSSS-LL function, the UE can include the MPTCP capability and the ATSSS-LL capability in the second identification information.

In addition, third identification information is a PDU session ID. In addition, the third identification information may be information indicating a PDU session ID requested by the UE (information for identifying a PDU session). Specifically, in a case that the UE requests the establishment of an MA PDU session, the third identification information may be a PDU session ID for identifying the MA PDU session. Specifically, in a case that the UE requests the establishment of an SA PDU session, the third identification information may be a PDU session ID for identifying the SA PDU session.

In addition, fourth identification information is a PDU session type. In addition, the fourth identification information may be information indicating a PDU session type requested by the UE. In addition, in a case that the UE requests the establishment of an MA PDU session, the fourth identification information may be a PDU session type for the MA PDU session. In addition, in a case that the UE requests the establishment of an SA PDU session, the fourth identification information may be a PDU session type for identifying the SA PDU session. In addition, the fourth identification information may be any of IPv4, IPv6, IPv4v6, Unstructured, and Ethernet (trade name).

In addition, fifth identification information is an SSC mode. In addition, the fifth identification information may be information indicating an SSC mode requested by the UE. In addition, in a case that the UE requests the establishment of an MA PDU session, the fifth identification information may be an SSC mode for the MA PDU session. In addition, in a case that the UE requests the establishment of an SA PDU session, the fifth identification information may be an SSC mode for the SA PDU session. In addition, the fifth identification information may be any of SSC mode 1, SSC mode 2, and SSC mode 3.

In addition, sixth identification information is S-NSSAI. In addition, the sixth identification information may be information indicating S-NSSAI requested by the UE. In addition, in a case that the UE requests the establishment of an MA PDU session, the sixth identification information may be S-NSSAI for the MA PDU session. In addition, in a case that the UE requests the establishment of an SA PDU session, the sixth identification information may be S-NSSAI for the SA PDU session. In addition, in a case that the UE requests the establishment of the MA PDU session, the sixth identification information may be S-NSSAI allowed for both of the accesses (3GPP access and non-3GPP access). In addition, even in a case that the UE request the establishment of an SA PDU session and in a case that an MA PDU session has been established, specifically, the sixth identification information may be one or more pieces of S-NSSAI included in Allowed NSSAI (NSSAI allowed by the network) included in a Registration accept message received from the AMF in the Registration procedure performed by the UE to be registered with the 5GS.

In addition, seventh identification information is a Request type. Here, the seventh identification information may indicate any of Initial request, or Existing PDU Session, or Emergency Request, or Existing Emergency PDU Session or MA PDU request. In addition, Initial request may be specified in a case that the establishment of a new PDU session is requested. In addition, Existing PDU Session may be specified in a case that Existing PDU session is switched between the 3GPP access and the non-3GPP access or that the existing PDN connection in the EPC is handed over to a 5G PDU session. In addition, Emergency Request may be specified in a case that the establishment of a new PDU session is requested for an Emergency service. In addition, Existing Emergency PDU Session may be specified in a case that Existing PDU session for the Emergency service is switched between the 3GPP access and the non-3GPP access or that the existing PDN connection for Emergency service in the EPC is handed over to a 5G PDU session. In addition, MA PDU Request may be specified in a case that the establishment of an MA PDU session is requested by the UE. Note that, in a case that a network that does not support the MA PDU session receives the request, MA PDU Request may be interpreted as an initial request. Note that MA PDU Request may be expressed as an MA PDU Request indication.

In addition, eighth identification information is a PDU session ID. In addition, the eighth identification information may indicate a PDU session ID (also referred to as an old PDU session ID) indicating an old PDU session. Specifically, the eighth identification information may indicate a PDU session ID that is scheduled to be released in procedures of modifying the PSA of SSC mode 3 (a fourth PSA modification procedure, a fifth PSA modification procedure, and a sixth PSA modification procedure). For example, the eighth identification information may indicate a PDU session ID for identifying the MA PDU session in a case that the MA PDU session is scheduled to be released. In addition, the eighth identification information may indicate a PDU session ID for identifying the SA PDU session in a case that the SA PDU session is scheduled to be released.

In addition, ninth identification information is information indicating an access type. In addition, the ninth identification information may indicate the 3GPP access or the non-3GPP access. In addition, the ninth identification information may also indicate the 3GPP access and/or the non-3GPP access (untrusted non-3GPP access) and/or non-3GPP access (Trusted non-3GPP access). Specifically, the ninth identification information may indicate an access corresponding to user plane resources in the MA PDU session that is scheduled to be released in procedures of modifying the PSA of SSC mode 3 (the fourth PSA modification procedure, the fifth PSA modification procedure, and the sixth PSA modification procedure).

In addition, the eighth identification information may be transmitted along with the ninth identification information.

Specifically, in a case that the eighth identification information indicates a PDU session ID for identifying the MA PDU session, the ninth identification information may indicate that user plane resources over the 3GPP access are scheduled to be released in the established MA PDU session in procedures of modifying the PSA of SSC mode 3 (the fourth PSA modification procedure, the fifth PSA modification procedure, and the sixth PSA modification procedure) in a case that the eighth identification information indicates the 3GPP access.

In addition, in a case that the eighth identification information indicates a PDU session ID for identifying the MA PDU session, the ninth identification information may indicate that user plane resources over the non-3GPP access are scheduled to be released in the established MA PDU session in procedures for modifying the PSA of SSC mode 3 (the fourth PSA modification procedure, the fifth PSA modification procedure, and the sixth PSA modification procedure) in a case that the eighth identification information indicates the non-3GPP access.

In addition, in a case that the eighth identification information indicates a PDU session ID for identifying the MA PDU session, the ninth identification information may indicate that user plane resources over the non-3GPP access (untrusted non-3GPP access) are scheduled to be released in the established MA PDU session in procedures for modifying the PSA of SSC mode 3 (the fourth PSA modification procedure, the fifth PSA modification procedure, and the sixth PSA modification procedure) in a case that the eighth identification information indicates the non-3GPP access (untrusted non-3GPP access).

In addition, in a case that the eighth identification information indicates a PDU session ID for identifying the MA PDU session, the ninth identification information may indicate that user plane resources over the non-3GPP access (Trusted non-3GPP access) are scheduled to be released in the established MA PDU session in procedures for modifying the PSA of SSC mode 3 (the fourth PSA modification procedure, the fifth PSA modification procedure, and the sixth PSA modification procedure) in a case that the eighth identification information indicates the non-3GPP access (Trusted non-3GPP access).

In addition, tenth identification information may be information having content in which the content of two or more kinds of the identification information among the first to the ninth identification information is combined.

In addition, 11th identification information is a DNN. In addition, the 11th identification information may be information indicating the DNN determined by the network.

In addition, the 11th identification information may be information determined by the network based on the first to eighth identification information, and/or network capability information, and/or the operator policy, and/or a state of the network, and/or user registration information, and/or the like. In addition, the 11th identification information may be the same as the first identification information.

In addition, 12th identification information may be information indicating whether or not the network supports the ATSSS function. In addition, the information indicating whether or not the network supports the ATSSS function may be expressed as an ATSSS capability. In addition, the 12th identification information may be information indicating whether or not the network supports the MPTCP function corresponding to one function included in the ATSSS function, and/or information indicating whether or not the network supports the ATSSS-LL function corresponding to another function included in the ATSSS function. In addition, information indicating whether or not to support the MPTCP function may be expressed as an MPTCP capability, and information indicating whether or not to support the ATSSS-LL function may be expressed as an ATSSS-LL capability. In addition, in a case that the network supports only the MPTCP function, the MPTCP capability can be included in the 12th identification information. In addition, in a case that the network supports only the ATSSS-LL function, the ATSSS-LL capability can be included in the 12th identification information. In addition, in a case that the network supports the MPTCP function and the ATSSS-LL function, the MPTCP capability and the ATSSS-LL capability can be included in the 12th identification information.

In addition, the 12th identification information may be information determined by the network based on the first to eighth identification information, and/or network capability information, and/or the operator policy, and/or a state of the network, and/or user registration information, and/or the like.

In addition, 13th identification information is a PDU session ID. In addition, the 13th identification information may be information indicating a PDU session ID determined by the network (information for identifying the PDU session). Specifically, the 13th identification information may be the PDU session ID for the SA PDU session or the PDU session ID for the MA PDU session. More specifically, in a case that the network allows an MA PDU session to be established, the 13th identification information may be the PDU session ID for identifying the MA PDU session. In addition, in a case that the network allows an SA PDU session to be established, the 13th identification information may be the PDU session ID for identifying the SA PDU session.

Furthermore, the 13th identification information may be information determined by the network based on the first to eighth identification information, and/or network capability information, and/or the operator policy, and/or a state of the network, and/or the user registration information, and/or the like. In addition, the 13th identification information may be the same as the third identification information.

Additionally, 14th identification information is a PDU session type. In addition, the 14th identification information may be information indicating the PDU session type determined by the network. The 14th identification information may be any of IPv4, IPv6, IPv4v6, Unstructured, and Ethernet (trade name). In addition, the 14th identification information may be information indicating the PDU session type corresponding to the PDU session to be established. In addition, in a case that the network allows an SA PDU session to be established, the 14th identification information may be the PDU session type for the SA PDU session. In addition, in a case that the network allows an MA PDU session to be established, the 14th identification information may be the PDU session type for the MA PDU session.

Furthermore, the 14th identification information may be information determined by the network based on the first to eighth identification information, and/or network capability information, and/or the operator policy, and/or a state of the network, and/or the user registration information, and/or the like. In addition, the 14th identification information may be the same as the fourth identification information.

In addition, 15th identification information is an SSC mode. In addition, the 15th identification information may be information indicating an SSC mode determined by the network. In addition, the 15th identification information may be any of SSC mode 1, SSC mode 2, and SSC mode 3. In addition, the 15th identification information may be information indicating the SSC mode corresponding to the PDU session to be established. In addition, in a case that the network allows an SA PDU session to be established, the 15th identification information may be the SSC mode for the SA PDU session. In addition, in a case that the network allows an MA PDU session to be established, the 15th identification information may be the SSC mode for the MA PDU session.

Furthermore, the 15th identification information may be information determined by the network based on the first to eighth identification information, and/or network capability information, and/or the operator policy, and/or a state of the network, and/or the user registration information, and/or the like. In addition, the 15th identification information may be the same as the fifth identification information.

In addition, 16th identification information is S-NSSAI. In addition, the 16th identification information may be information indicating S-NSSAI determined by the network. In addition, the 16th identification information may be information indicating S-NSSAI corresponding to the PDU session to be established. In addition, in a case that the network allows an MA PDU session to be established, the 16th identification information may be S-NSSAI allowed for both accesses (3GPP access and non-3GPP access). In addition, in a case that the network allows an SA PDU session to be established, the 16th identification information may be S-NSSAI allowed for either of the accesses (3GPP access or non-3GPP access). Specifically, the 16th identification information may be one or more pieces of S-NSSAI included in Allowed NSSAI (NSSAI allowed by the network) included in a Registration accept message received from the AMF in the Registration procedure performed for the UE to be registered with the 5GS.

Furthermore, the 16th identification information may be information determined by the network based on the first to eighth identification information, and/or network capability information, and/or the operator policy, and/or a state of the network, and/or the user registration information, and/or the like. In addition, the 16th identification information may be the same as the sixth identification information.

In addition, 17th identification information is information indicating whether or not the network has allowed an MA PDU session to be established. In addition, the 17th identification information may be information indicating that the network has allowed the MA PDU session to be established. In addition, the 17th identification information may be information determined based on the first to eighth identification information, and/or network capability information, and/or the operator policy, and/or a state of the network, and/or the user registration information, and/or the like.

In addition, 18th identification information is information indicating whether or not the network has allowed an SA PDU session to be established. In addition, the 18th identification information may be information indicating that the network has allowed the SA PDU session to be established. In addition, the 18th identification information may be information determined based on the first to eighth identification information, and/or network capability information, and/or the operator policy, and/or a state of the network, and/or the user registration information, and/or the like.

In addition, 19th identification information is information indicating an access type. In addition, the 19th identification information may indicate the 3GPP access or the non-3GPP access. In addition, the 19th identification information may also indicate the 3GPP access and/or the non-3GPP access (untrusted 3GPP access) and/or non-3GPP access (Trusted 3GPP access). In addition, the 19th identification information may be information indicating, in a case that the network has allowed the MA PDU session to be established (the network has allowed user plane resources for both accesses to be established), the access corresponding to the user plane resources allowed to be established. Here, the access for the user plane resources allowed to be established may be the 3GPP access and/or the non-3GPP access.

In addition, the 19th identification information may be information determined based on the first to eighth identification information, and/or network capability information, and/or the operator policy, and/or a state of the network, and/or the user registration information, and/or the like.

In addition, 20th identification information is ATSSS rules. In addition, the 20th identification information may be information determined based on the first to eighth identification information, and/or network capability information, and/or the operator policy, and/or a state of the network, and/or the user registration information, and/or the like.

In addition, 21st identification information may be information having content in which the content of two or more kinds of identification information among the above-described 11th to 20th identification information is combined.

### 4. Procedure 1 for Modifying PSA in SSC Mode 2

Next, a procedure for modifying a PSA (UPF_230 in the present embodiment) in a case that a first MA PDU session has been established and SSC mode 2 has been applied to the first MA PDU session will be described, the first MA PDU using user plane resources over the 3GPP access (resources for UE to communicate with the DN_300 over the base station apparatus_110 and the UPF_230) and user plane resources over the non-3GPP access (resources for the UE to communicate with the DN_300 via the base station apparatus_120, the N3IWF_240, and the UPF_230 or resources for the UE to communicate with the DN_300 via the TNAP, TNGF, and UPF_230).

Procedures for modifying a PSA may include a first PSA modification procedure and a second PSA modification procedure.

Here, the first PSA modification procedure is a procedure for modifying a PSA (all PSAs) to be used in the first MA PDU session. In other words, the first PSA modification procedure can be said to be a procedure for modifying a PSA used in user plane resources over the 3GPP access and a PSA used in user plane resources over the non-3GPP access among PSAs used in the first MA PDU session.

In addition, the second PSA modification procedure is a procedure for modifying a PSA (some PSAs) used in the first MA PDU session. In other words, the second PSA modification procedure can be said to be a procedure for modifying only a PSA used in user plane resources over either of the accesses (the 3GPP access or the non-3GPP access) among PSAs used in the first MA PDU session. In other words, the second PSA modification procedure can be said to be a procedure for modifying a PSA used in user plane resources over either of the accesses (the 3GPP access or the non-3GPP access) and not modifying a PSA used in user plane resources over the other access (the non-3GPP access or the 3GPP access) among PSAs used in the first MA PDU session.

### 4.1. First PSA Modification Procedure

Next, the first PSA modification procedure will be described. As described above, the first PSA modification procedure is a procedure for modifying a PSA (all PSAs) used in the first MA PDU session in a case that the first MA PDU session has been established and SSC mode 2 is applied to the first MA PDU session, the first MA PDU session using user plane resources over the 3GPP access and user plane resources over the non-3GPP access. Each apparatus performs the first PSA modification procedure to transition from a first communication state illustrated in FIG. 2 to a second communication state illustrated in FIG. 14. In addition, as the first PSA modification procedure is performed, all PSAs are modified from the UPF_230 to UPF_232.

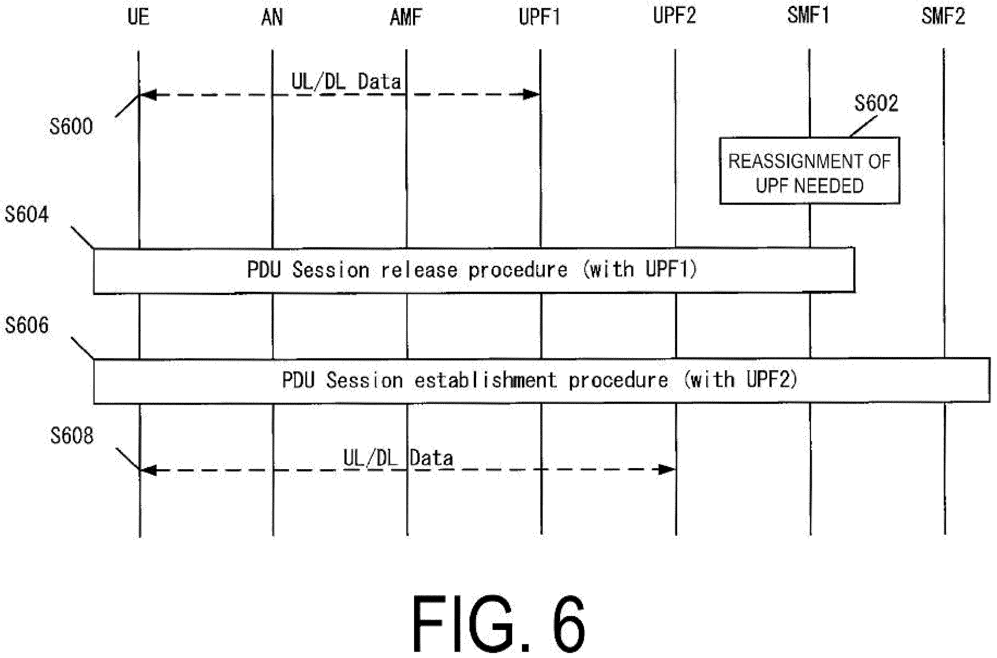

The first PSA modification procedure will be described below using FIG. 6. Here, UPF 1, UPF 2, and SMF 1 in FIG. 6 correspond to the UPF_230, the UPF_232, and the SMF_220, respectively.

First, the UE is in a state of being able to transmit and/or receive user data to and/or from the DN_300 using the first MA PDU session (S600). The PSA at this time is the UPF_230 as described above. The UE may or may not actually transmit and/or receive user data in S600.

Next, the SMF determines whether or not the UPF_230 (also referred to as a "serving UPF") being used in the first MA PDU session needs to be reassigned (S602). The SMF may determine that the UPF_230 needs to be reassigned in a case that, for example, it is not possible to maintain user plane resources over the 3GPP access and/or user plane resources over the non-3GPP access, and/or throughputs of communication over the 3GPP access and/or communication over the non-3GPP access are extremely decreased, and/or the UPF_230 is in an overflow state, and/or the UE has moved, and/or an operator policy or a network policy has been modified, and/or there is a request from another NF, and/or the like.

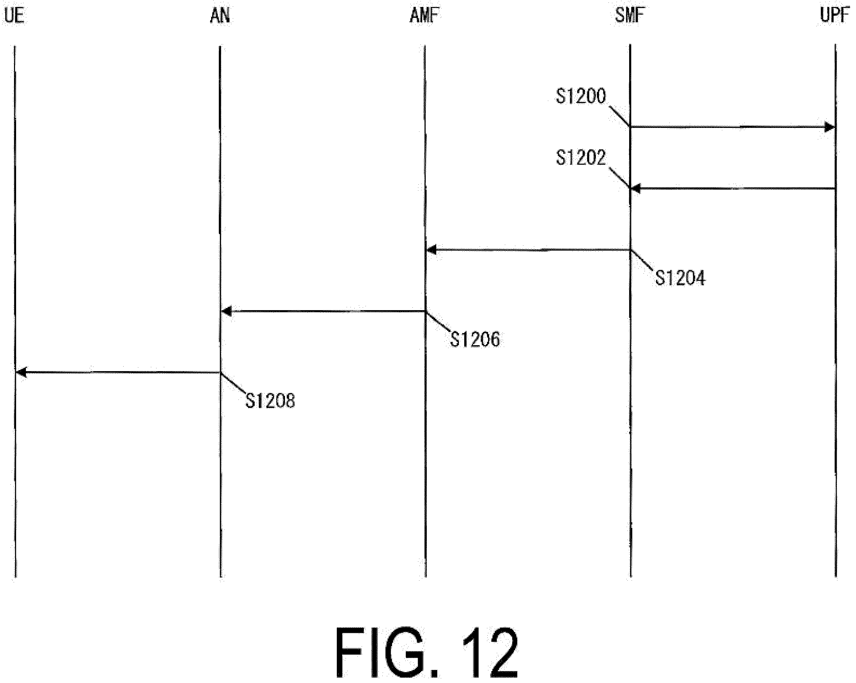

In a case that the SMF has determined that the UPF_230 does not need to be reassigned, each apparatus may skip, that is, omit the steps from S604. In a case that the SMF has determined that the UPF_230 needs to be reassigned, each apparatus may perform steps from S604. Here, a case that it has been determined that the UPF_230 needs to be reassigned will be described. Next, the PDU session release procedure of S604 will be described with reference to FIG. 12.

The PDU session release procedure is initiated by the SMF transmitting an N4 session release request message to the UPF_230 (S1200). The N4 session release request message may include an N4 session ID and/or an access type. The N4 session ID may be an identifier for generating an SMF and identifying an N4 session provided for the UPF and/or context of the N4 session in a case that a new PDU session is established or the UPF for an established PDU session is modified. In addition, the N4 session ID is information stored in the SMF and the UPF. In addition, the SMF may also store the relationship between the N4 session ID and the PDU session ID for given UE. In addition, the access type may indicate access for the first MA PDU session desired to release in user plane resources, and here may indicate the 3GPP access and the non-3GPP access. In addition, the SMF may transmit the N4 session release request message to the UPF_230 to request release of the first MA PDU session of the UE and/or release of user plane resources over the 3GPP access and user plane resources over the non-3GPP access in the first MA PDU session and/or release of the N4 sessions corresponding to the first MA PDU session. Note that the SMF may not transmit the access type to the UPF_230.

Next, in a case that the N4 session release request message is received, the UPF_230 checks information included in the N4 session release request message. The UPF_230 may release, for the SMF, the first MA PDU session of the UE and/or release user plane resources over the 3GPP access and user plane resources over the non-3GPP access in the first MA PDU session and/or release the N4 session corresponding to the first MA PDU session, based on the N4 session release request message and/or information included in the N4 session release request message.

In addition, by transmitting to the SMF the N4 session release response message, the UPF_230 may inform the SMF that the N4 session release request message has been received, and/or the first MA PDU session of the UE has been released, and/or user plane resources over the 3GPP access and user plane resources over the non-3GPP access have been released in the first MA PDU session, and/or the N4 session corresponding to the first MA PDU session has been released (S1202). The N4 session release response message may include the N4 session ID and/or access type included in the N4 session release request message. Note that, in a case that the UPF_230 has not received an access type from the SMF, the message may include no access type. In addition, the message may include an access type even in a case that the UPF_230 has not received an access type from the SMF. In the case that the access type is included, it may indicate the 3GPP access and the non-3GPP access.

Next, in a case that the N4 session release response message is received, the SMF checks the information included in the N4 session release response message. The SMF may consider that the UPF_230 has received the N4 session release request message, and/or the UPF_230 has released the first MA PDU session of the UE, and/or the UPF_230 has released user plane resources over the 3GPP access and user plane resources over the non-3GPP access in the first MA PDU session, and/or the UPF_230 has released the N4 session corresponding to the first MA PDU session, based on the N4 session release response message and/or the information included in the N4 session release response message.

Then, the SMF transmits an N1 SM container and/or an N2 SM resource release request message to the AMF (S 1204). In addition, although the SMF also transmits a PDU session release command message, the PDU session release command message may be included in the N1 SM container and transmitted. The PDU session release command message may include a PDU session ID, and/or an access type, and/or a cause value. In addition, the N2 SM resource release request message may include a PDU session ID and/or an access type. Here, the PDU session ID is information for identifying the first MA PDU session. In addition, the access type may indicate an access desired to release, and here, may include the 3GPP access and the non-3GPP access. In addition, the cause value may also indicate that re-establishment of the MA PDU session for the same DN is required. The SMF may transmit the PDU session release command message, and/or the N1 SM container, and/or the N2 SM resource release request message to indicate the release of the first MA PDU session of the UE

Next, in a case that the N1 SM container and/or the N2 SM resource release request message is received, the AMF checks the information included in the N1 SM container and/or the N2 SM resource release request message. The AMF may receive the PDU session release command message, and/or the N1 SM container, and/or the N2 SM resource release request message to consider that the release of the first MA PDU session of the UE has been indicated.

Then, the AMF transmits the NAS message to the UE over the access network (S1206 and S1208). Here, the NAS message includes the N1 SM container. That is, the PDU session release command message received from the SMF may be included in the NAS message and transmitted. In addition, the access network may be of the 3GPP access or the non-3GPP access. In other words, the NAS message is transmitted over the 3GPP access or the non-3GPP access. In addition, which access is to be used to transmit the NAS message may be determined by the SMF or the AMF. In a case that the SMF determines an access, the SMF may inform the AMF of information about the access over which the NAS message is to be transmitted to allow the AMF to identify the access for the transmission based on the information. In addition, in a case that the AMF determines an access, any access may be identified from among accesses included in the access type received from the SMF.

In a case that the NAS message is transmitted over the 3GPP access, the AMF transmits the NAS message to the base station apparatus_110, and the base station apparatus_110 that has received the NAS message transmits the NAS message to the UE.

In addition, in a case that the NAS message is transmitted over the non-3GPP access, transmission destinations differ depending on whether the non-3GPP access used in the first MA PDU session is the Untrusted Non-3GPP Access or the Trusted Non-3GPP Access.

In a case that the non-3GPP access used in the first MA PDU session is the Untrusted Non-3GPP Access, the AMF transmits the NAS message to the N3IWF_240, the N3IWF_240 that has received the NAS message may transmit the NAS message to the base station apparatus_120, and the base station apparatus_120 that has received the NAS message may transmit the NAS message to the UE.

In addition, in a case that the non-3GPP access used in the first MA PDU session is Trusted Non-3GPP Access, the AMF may transmit the NAS message to the TNGF, the TNGF that has received the NAS message transmits the NAS message to the TNAP, and the TNAP that has received the NAS message may transmit the NAS message to the UE.

The AMF may transmit the NAS message to notify the UE that release of the first MA PDU session of the UE and/or release of user plane resources over the 3GPP access and user plane resources over the non-3GPP access in the first MA PDU session has been indicated.

In a case that the UE receives the NAS message, the UE checks the information included in the NAS message. The UE may receive a PDU session release command message, and/or an N1 SM container, and/or an NAS message to consider that the release of the first MA PDU session of the UE has been indicated. Then, the UE may release the first MA PDU session based on the NAS message and/or the information included in the NAS message.

With the above operation, the PDU session release procedure of S604 is completed. In a case that the PDU session release procedure is completed, the UE becomes in a state of being unable to communicate with the DN_300 because the first MA PDU session has been released. In addition, the UE is in a state of being registered with the 5GS over the 3GPP access and/or the non-3GPP access.

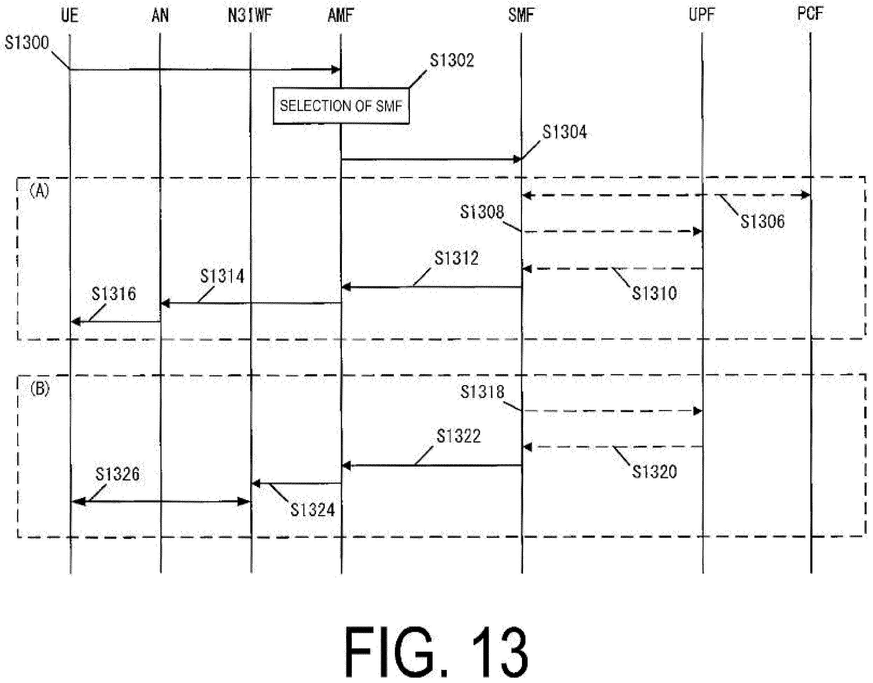

Next, each apparatus performs the PDU session establishment procedure of S606 to establish a new (second) MA PDU session with the same DN (DN_300) as the DN (DN_300) in the first communication state. Note that, in this section, the PDU session establishment procedure is also referred to as an MA PDU session establishment procedure. The MA PDU session establishment procedure will be described with reference to FIG. 13.

In addition, in a case that each apparatus has successfully completed the MA PDU session establishment procedure, it may establish a new (second) MA PDU session. Specifically, each apparatus can establish a second MA PDU session using user plane resources over the 3GPP access and user plane resources over the non-3GPP access.

In addition, in a case that each apparatus has not successfully completed (abnormally completed) the MA PDU session establishment procedure, it is not able to establish a second MA PDU session.

In addition, the MA PDU session establishment procedure may be a procedure initiated by the UE. In addition, by performing the MA PDU session establishment procedure multiple times, each apparatus may establish multiple MA PDU sessions.

In addition, although the description below assumes that the 3GPP access, the non-3GPP access, and the 5G Core Network (5GC) are all managed/operated by the same operator, the embodiments below can be applied to a case that the accesses and network are operated by different operators.

The UE may determine to initiate the MA PDU session establishment procedure to establish the second MA PDU session based on information stored in the UE in advance, and/or information previously received from the access network, and/or information previously received from the core network (including identification information received in the registration procedure, and/or the URSP rules previously received from the PCF, and/or the like), and/or the like.

First, the UE initiates the MA PDU session establishment procedure by transmitting an NAS message including the N1SM container including a PDU session establishment request message to the AMF over the access network (S1300). The NAS message is transmitted over the N1 interface. The NAS message may be an uplink NAS transport (UL NAS TRANSPORT) message.

Here, the access network includes the 3GPP access (also referred to as a 3GPP access network) and the non-3GPP access (also referred to as a non-3GPP access network). In other words, in a case that the UE transmits the NAS message over the 3GPP access, the UE transmits the NAS message to the AMF via the base station apparatus_110. In addition, in a case that the UE transmits the NAS message over the non-3GPP access (untrusted non-3GPP access), the UE transmits the NAS message to the AMF via the base station apparatus_120 and the N3IWF. In addition, in a case that the UE transmits the NAS message over the non-3GPP access (Trusted non-3GPP access), the UE transmits the NAS message to the AMF via the TNAP and the TNGF. As described above, although the communication path to the AMF varies depending on which access is used by the UE to transmit the NAS message, the communication path from the AMF to the SMF may be the same. Here, the NAS message is described as being transmitted over the 3GPP access.

In addition, by including and transmitting at least one type of the first to tenth identification information in the PDU session establishment request message and/or the N1 SM container and/or the NAS message for transmission, the UE can notify the network side of the request from the UE.

In addition, the first identification information is a DNN for identifying the DN serving as a connection destination of the MA PDU session (the second MA PDU session) of which establishment is requested and is preferably configured to the same DNN as the DNN for identifying the DN that was communicating in the first MA PDU session.

In addition, the UE may include the second identification information in the PDU session establishment request message and/or the N1 SM container and/or the NAS message to notify the network side whether or not the UE supports the ATSSS function and/or whether or not the UE supports the MPTCP function and/or ATSSS-LL function.

In addition, the third identification information may also be a PDU session ID for identifying an MA PDU session (a second MA PDU session) of which establishment is requested, and may be a PDU session ID different from the PDU session ID configured for the first MA PDU session or may be the same PDU session ID.

In addition, the fourth identification information is a PDU session type of an MA PDU session (a second MA PDU session) of which establishment is requested, and is preferably configured to the same PDU session type as the PDU session type configured for the first MA PDU session.

In addition, the fifth identification information is an SSC mode of the MA PDU session (a second MA PDU session) of which establishment is requested, and is preferably configured to an SSC mode configured for the first MA PDU session, that is, SSC mode 2, but may be configured to SSC mode 1 or 3.

In addition, the sixth identification information may be the S-NSSAI of the MA PDU session (the second MA PDU session) of which establishment is requested, and is preferably configured to S-NSSAI allowed for both accesses (the 3GPP access and the non-3GPP access) by the network in the Registration procedure.

In addition, by including the seventh identification information indicating the MA PDU Request in the PDU session establishment request message and/or the N1 SM container, and/or the NAS message, the UE may notify the network side that the PDU session establishment request message has been transmitted to establish a (new) second MA PDU session and/or that the ATSSS-LL function and/or the MPTCP function are applied to steer the traffic of the second MA PDU session.

Note that the UE may include and transmit the first to tenth identification information in a control message of a lower layer than the NAS layer (e.g., an RRC layer, a MAC layer, an RLC layer, or a PDCP layer) or a control message of a higher layer than the NAS layer.

Next, in a case that the NAS message is received, the AMF can consider that the UE has made a request, and/or recognize the content of the information and the like (messages, containers, and information) included in the NAS message.

Here, the AMF may reject the establishment of the second MA PDU session in a case that, although the UE has been registered with both accesses, the S-NSSAI indicated by the sixth identification information received from the UE is not allowed for either access. In addition, the AMF may reject the establishment of the second MA PDU session in a case that the AMF does not support the ATSSS function.

In addition, in a case that the establishment of the second MA PDU session is to be rejected, each apparatus may skip, that is, omit the steps from S1302. In addition, the establishment of the second MA PDU session may be rejected in a case that the MA PDU session establishment procedure is not successfully completed.

In addition, in a case that the establishment of the second MA PDU session is to be rejected, the AMF may transmit to the UE an NAS message including information indicating that the establishment of the second MA PDU session is rejected. In addition, at this time, the AMF does not need to transmit at least some of the information and the like (messages, containers, and information) included in the NAS message received from the UE to the SMF.

In addition, in a case that the establishment of the second MA PDU session is to be rejected, the AMF may transmit to the SMF information indicating that the establishment of the second MA PDU session is to be rejected and the SMF may transmit to the UE an NAS message including the N1 SM container including the PDU session establishment reject message. At this time, the PDU session establishment reject message, and/or the N1 SM container, and/or the NAS message may include the information indicating that the establishment of the second MA PDU session is to be rejected.

Next, the AMF selects the SMF as a destination to which at least some of the information and the like (messages, containers, and information) included in the NAS message received from the UE is to be transferred (S 1302). Note that the AMF may select the SMF as a transfer destination based on information included in the NAS message (messages, containers, and information), and/or the subscriber information, and/or the capability information of the network, and/or the operator policy, and/or the state of the network, and/or the user registration information, and/or context held by the AMF, and/or the like. In addition, the AMF may select the SMF supporting the MA PDU session and/or the ATSSS function. Here, it is assumed that the SMF_220 supporting the MA PDU session and/or the ATSSS function has been selected.

Next, the AMF transmits, to the selected SMF, at least some of the information and the like (messages, containers, and information) included in the NAS message received from the UE over the N11 interface (S1304). The AMF may transmit, to the SMF, information indicating that the UE has been registered with both accesses.

Next, in a case that information and the like (messages, containers, and information) transmitted from the AMF is received, the SMF can consider that the UE has made a request and/or recognize the content of the information and the like (messages, containers, and information) received from the AMF.

Then, the SMF may or may not perform third condition fulfillment determination. The third condition fulfillment determination may be intended to determine whether or not to accept the request from the UE. In the third condition fulfillment determination, the SMF determines whether the third condition fulfillment determination is true or false. In a case that the SMF determines that the third condition fulfillment determination is true, the procedures of (A) and/or (B) of FIG. 13 may be initiated. In addition, in a case that the third condition fulfillment determination is determined to be false, a procedure for rejecting the request from the UE may be initiated.

Note that the third condition fulfillment determination may be performed based on information received from the AMF (messages, containers, and information), and/or subscriber information, and/or network capability information, and/or the operator policy, and/or the state of the network, and/or user registration information, and/or the context held by the SMF, and/or the like.

For example, in a case that the network allows the request from the UE, the third condition fulfillment determination may be determined to be true. In addition, in a case that the network does not allow the request from the UE, the third condition fulfillment determination may be determined to be false. Furthermore, in a case that the network to which the UE is connected and/or an apparatus in the network supports the function requested by the UE, the third condition fulfillment determination may be determined to be true, and in a case that network and/or the apparatus does not support the function requested by the UE, the third condition fulfillment determination may be determined to be false. Moreover, in a case that the transmitted and/or received identification information is allowed, the third condition fulfillment determination may be determined to be true, and in a case that the transmitted and/or received identification information is not allowed, the third condition fulfillment determination may be determined to be false. In addition, in a case that the network allows establishment of a second MA PDU session (allows establishment of a second MA PDU session using user plane resources over the 3GPP access and user plane resources over the non-3GPP access), the third condition fulfillment determination may be determined to be true. In addition, in a case that the network rejects establishment of a second MA PDU session (rejects establishment of a second MA PDU session using user plane resources over the 3GPP access and user plane resources over the non-3GPP access), the third condition fulfillment determination may be determined to be false. Note that conditions for determining whether the third condition fulfillment determination is true or false may not be limited to the above-described conditions.

Next, each step of the procedure of (A) of FIG. 13 will be described.

First, the SMF may select the PCF. For example, as for the SMF, in a case that the seventh identification information indicates the Initial request or an MA PDU Request, that is, in a case that the present procedure is performed to newly establish a (second) MA PDU session, the SMF may select an appropriate PCF based on information received from the AMF, or the like. For example, the SMF may select a PCF supporting the ATSSS function. In addition, the SMF may use the PCF that has already been selected, that is, may use the PCF that has been used in the first MA PDU session, in a case that the seventh identification information indicates an existing PDU session or an existing emergency PDU session. In other words, the PCF need not be selected, and a different PCF may be selected.

Next, the SMF may transmit at least some of the information and the like (messages, containers, and information) received from the AMF to the PCF (S1306).

Furthermore, in a case that the SMF determines to allow the establishment of a second MA PDU session, the SMF may further transmit, to the PCF, "information indicating that the establishment of the second MA PDU session has been allowed" and/or "information indicating that the establishment of the user plane resources over the 3GPP access and user plane resources over the non-3GPP access has been allowed" and/or "information (access type) indicating the access corresponding to the user plane resources allowed to be established". Here, the "information (access type) indicating the access corresponding to the user plane resources allowed to be established" may indicate the 3GPP access and/or the non-3GPP access.

Next, in a case that the information and the like (messages, containers, and information) transmitted from the SMF is received, the PCF can consider that the UE has made a request the establishment of the second MA PDU session and/or recognize the content of the information and the like (messages, containers, and information) received from the SMF.

Note that the PCF may further make determination similar to the above-described determination by the SMF based on the information received from the SMF (messages, containers, and information), and/or the operator policy, and/or the subscriber information, and/or the like. In this case, the information similar to the information transmitted from the SMF to the PCF may be transmitted from the PCF to the SMF.

In a case that the PCF detects that the above-described determination has been made by the SMF, the PCF may not make (may skip) the determination.

In addition, the above-described determination may be made only by the PCF, with no need for the SMF to make the determination. In this case, the information and the like (messages, containers, and information) transmitted from the SMF to the PCF may be only at least a portion of the information and the like (messages, containers, and information) received from the AMF. In other words, in a case that the above-described determination has been made by the SMF, the information generated by the SMF and additionally transmitted to the PCF may not be transmitted. In such a case, in a case that the PCF determines to allow the establishment of a second MA PDU session, the PCF may further transmit, to the SMF, "information indicating that the establishment of the second MA PDU session has been allowed" and/or "information indicating that the establishment of the user plane resources over the 3GPP access and user plane resources over the non-3GPP access has been allowed" and/or "information (access type) indicating the access corresponding to the user plane resources allowed to be established" (S1306). Here, the "information (access type) indicating the access corresponding to the user plane resources allowed to be established" may be the 3GPP access and/or the non-3GPP access.

Then, in a case that the PCF detects that the establishment of the second MA PDU session has been allowed (the establishment of the second MA PDU session using the user plane resources over the 3GPP access and the user plane resources over the non-3GPP access has been allowed) based on the information received from the SMF (messages, containers, and information), or the PCF allows the establishment of the second MA PDU session (the establishment of the second MA PDU session using the user plane resources over the 3GPP access and the user plane resources over the non-3GPP access has been allowed) based on the information received from the SMF (messages, containers, and information), the PCF may generate PCC rules for the second MA PDU session.

Then, in a case that the PCF has generated the PCC rules for the second MA PDU session, the PCF may transmit the PCC rules to the SMF. In addition, the PCF may explicitly indicate that the establishment of the second MA PDU session has been allowed by transmitting, to the SMF, the information indicating that the establishment of the second MA PDU session has been allowed, or may implicitly indicate that the establishment of the second MA PDU session has been allowed by transmitting the PCC rules to the SMF.

In addition, in a case that the PCF has generated a policy for an SA PDU session, the PCF may transmit the policy to the SMF.

Next, in a case that the information transmitted from the PCF is received, the SMF can recognize the content of the information. Then, in a case that the PCC rules from the PCF are received, the SMF generates ATSSS rules (20th identification information) and N4 rules from the PCC rules. Here, the ATSSS rules are information for controlling the second MA PDU session transmitted from the SMF to the UE, and the N4 rules are information for controlling the second MA PDU session transmitted from the SMF to the UPF. In addition, the SMF may associate (or map) the PCC rules, the ATSSS rules and the N4 rules with (or to) one another for management.

In addition, in a case that the fourth identification information indicates any of IPv4, IPv6, or IPv4v6, the SMF may assign an IP address or an IP prefix to the second MA PDU session. In addition, in a case that the fourth identification information indicates unstructured, the SMF may assign an IPv6 address to the second MA PDU session. In addition, in a case that the fourth identification information indicates Ethernet (trade name), the SMF may assign neither a MAC address nor an IP address to the second MA PDU session.

Next, the SMF selects the UPF with which the second MA PDU session is to be established and transmits an N4 session establishment request message to the selected UPF over the N4 interface (S1308). Here, the SMF may select one or more UPFs based on the information received from the AMF, and/or the information received from the PCF, and/or the subscriber information, and/or the network capability information, and/or the operator policy, and/or the state of the network, and/or the user registration information, and/or the context held by the SMF, and/or the like. In addition, in a case that multiple UPFs are selected, the SMF may transmit an N4 session establishment request message to each of the UPFs. In addition, in a case that the establishment of the second MA PDU session is allowed, the SMF may select a UPF supporting the MA PDU session and/or the ATSSS function. In this case, it is assumed that the UPF_232 has been selected.

In a case that the second MA PDU session is allowed to be established, the N4 rules may be included and transmitted in the N4 session establishment request message.

Next, in a case that the N4 session establishment request message is received (S1308), the UPF can recognize the content of the information received from the SMF. In addition, the UPF creates a context for the second MA PDU session. In addition, the UPF may be configured to operate according to the N4 rules in a case that it has received the N4 rules from the SMF. In other words, the UPF may configure whether to route the downlink traffic in the established second MA PDU session over the 3GPP access or the non-3GPP access. Note that application of the N4 rules to UPF may be performed after S1318. Furthermore, the UPF may transmit an N4 session establishment response message to the SMF over the N4 interface based on the reception of the N4 session establishment request message and/or the creation of the context for the second MA PDU session (S1310).

Next, in a case that the N4 session establishment response message is received as a response message to the N4 session establishment request message, the SMF can recognize the content of the information received from the UPF. In addition, the SMF may perform address assignment of an address to be assigned to the UE based on the reception of the PDU session establishment request message, and/or the selection of the UPF, and/or the reception of the N4 session establishment response message, and/or the like.

Next, the SMF may transmit to the AMF the N1 SM container and/or N2 SM information, and/or the PDU session ID (the 13th identification information), and/or access type (the 19th identification information) over the N11 interface, based on the reception of the PDU session establishment request message and/or the selection of the UPF, and/or the reception of the N4 session establishment response message, and/or completion of address assignment of the address to be assigned to the UE, and/or the like (S1312). Here, the N1 SM container may include a PDU session establishment accept message, and the PDU session establishment accept message may include an ATSSS container Information Element (IE).

Next, the AMF that has received the N1 SM container and/or the N2 SM information, and/or the PDU session ID (the 13th identification information), and/or the access type (the 19th identification information) transmits the NAS message to the UE over the access network (S1314) (S1316). Here, the NAS message is transmitted over the N1 interface. Furthermore, the NAS message may be a downlink NAS transport (DL NAS transport) message.

Specifically, in a case that the AMF transmits an N2 PDU session request message to the access network (S1314), the access network that has received the N2 PDU session request message transmits the NAS message to the UE (S1316). Here, the N2 PDU session request message may include the NAS message and/or the N2 SM information. In addition, the NAS message may include the PDU session ID (the 13th identification information) and/or the access type (the 19th identification information) and/or the N1 SM container. The N1 SM container may include the PDU session establishment accept message.

Here, the access network includes the 3GPP access and the non-3GPP access. In other words, in a case that the AMF transmits the NAS message over the 3GPP access, the AMF transmits the NAS message to the UE via the base station apparatus_110. In addition, in a case that the AMF transmits the NAS message over the non-3GPP access (untrusted non-3GPP access), the AMF transmits the NAS message to the UE via the N3IWF and the base station apparatus_120. In addition, in a case that the AMF transmits the NAS message over the non-3GPP access (Trusted non-3GPP access), the AMF transmits the NAS message to the UE via the TNGF and the TNAP.

In addition, although the AMF preferably transmits the NAS message to the UE by using an access identical to the access over which it received the NAS message from the UE, the AMF may transmit the NAS message over a different access. Here, description will be continued on the assumption that the NAS message is transmitted over the 3GPP access (the base station apparatus_110).

In addition, the PDU session establishment accept message may be a response message to the PDU session establishment request. In addition, the PDU session establishment accept message may indicate that the establishment of the second MA PDU session has been accepted.

Here, the SMF and/or AMF may transmit the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message to indicate that at least some of the request from the UE made using the PDU session establishment request message has been accepted.

In addition, the SMF and/or AMF may include and transmit at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message. The SMF and/or AMF may transmit at least one piece of the identification information to notify the UE of the content of the identification information.

For example, in a case that the establishment of the second MA PDU session has been allowed (the establishment of the user plane resources for the 3GPP access and the user plane resources for the non-3GPP access has been allowed), at least one piece of the 11th to 21st identification information may be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message.

Note that the SMF and/or AMF may select and determine which type of identification information is to be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, based on each piece of received identification information, and/or the subscriber information, and/or the network capability information, and/or the operator policy, and/or the state of the network, and/or the user registration information, and/or the context held by the SMF and/or the AMF, and/or the like.

Here, the 11th identification information may be the same as the first identification information. In addition, the 12th identification information may indicate an MPTCP capability and/or an ATSSS-LL capability of the network. In addition, the 13th identification information may be the same as the third identification information. In addition, the 14th identification information may be the same as the fourth identification information. In addition, the 15th identification information may be the same as the fifth identification information and, for example, may be SSC mode 2. In addition, the 16th identification information may be the same as the sixth identification information. In addition, the 17th identification information may indicate that the network has allowed the establishment of the second MA PDU session. In addition, the 19th identification information may indicate the 3GPP access or the non-3GPP access. In addition, the 20th identification information may indicate the ATSSS rules.

In addition, by including and transmitting at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, the UE may be notified that the establishment of the second MA PDU session has been allowed, and/or the establishment of the user plane resources over the 3GPP access and the user plane resources over the non-3GPP access has been allowed, and/or the access type corresponding to the user plane resources allowed to be established.

Next, the UE receives the NAS message over the N1 interface (S1316). In a case that the NAS message is received, the UE can consider that the request from the UE through the PDU session establishment request message has been allowed and/or recognize the content of the information included in the NAS message and the like (messages, containers, and information). That is, the UE can consider that the establishment of the second MA PDU session has been allowed, and/or the establishment of the user plane resources over the 3GPP access and the user plane resources over the non-3GPP access has been allowed, and/or recognize the access type corresponding to the user plane resources allowed to be established.

With the above operation, the procedure of (A) of FIG. 13 is completed successfully.

At this stage, the UE is in a state in which the user plane resources over the 3GPP access have been established. The UE may be in a state of being able to communicate with the DN using the second MA PDU session using user plane resources over the 3GPP access. That is, the UE may be in a state of being able to communicate with the DN over the 3GPP access and the UPF_232. However, the UE may be in a state in which the user plane resources over the non-3GPP access have not been established.

Next, each step of the procedure of (B) of FIG. 13 will be described.

First, the SMF may transmit an N4 session modification request message to the already selected UPF_232 over the N4 interface (S1318). Here, the N4 session modification request message does not need to be transmitted including the N4 rules, but may include the N4 rules.

Next, in a case that the N4 session establishment request message is received (S1318), the UPF_232 can recognize the content of the information received from the SMF. Then, the UPF_232 may transmit an N4 session modification response message to the SMF over the N4 interface (S1320).

Next, in a case that the N4 session modification response message is received, the SMF can recognize the content of the information received from the UPF.

The SMF then transmits to the AMF N2 SM information and/or a PDU session ID (the 13th identification information) and/or access type (the 19th identification information) over the N11 interface (S1322). Here, although the SMF does not need to transmit to the AMF the N1 SM container transmitted in S1312, it may transmit the container.

Next, the AMF receives the N2 SM information, and/or the PDU session ID (the 13th identification information), and/or the access type (the 19th identification information).

Next, in a case that the second MA PDU session uses an untrusted non-3GPP access, the AMF may transmit an N2 PDU session request message to the N3IWF. In addition, in a case that the second MA PDU session uses a Trusted non-3GPP access, the AMF may transmit an N2 PDU session request message to the TNGF and/or TNAP. Here, the N2 PDU session request message may include the N2 SM information. In addition, although the N2 PDU session request message does not need to include the NAS message, it may include the message. Here, it is assumed that the N2 PDU session request message is transmitted to the N3IWF (S 1324).

Next, the N3IWF performs a procedure for establishment of an IPsec child security association (SA) with the UE over the access network (S 1326).

Specifically, the N3IWF transmits an IKE Create_Child_SA request message to the UE according to the IKEv2 standard described in RFC 7296 to establish IPsec Child SA in the second MA PDU session (user plane resources over the non-3GPP access in the second MA PDU session). Here, the IKE Create_Child_SA request message may indicate that the requested IPsec Child SA operates in the tunnel mode. In addition, the IKE Create_Child_SA request message may also include the PDU session ID associated with this Child SA.

Next, in a case that the IPsec Child SA is accepted, the UE transmits an IKE Create_Child_SA response message to the N3IWF.

In addition, the SMF and/or AMF may include and transmit at least one piece of the 11th to 21st identification information in the PDU session ID (the 13th identification information), and/or the access type (the 19th identification information), and/or the N2 SM information, and/or the N2 PDU session request message. The SMF and/or the AMF may transmit at least one piece of the identification information to notify the UE and/or the N3IWF and/or the access network of the content of the identification information.

Note that the content of the 11th to 21st identification information may be the same as the content in the procedure of (A).

However, in a case that the 19th identification information only indicates 3GPP access in the procedure of (A), the 19th identification information in the procedure of (B) may indicate non-3GPP access only.

The UE may consider that the user plane resources over the non-3GPP access have been established based on the reception of the IKE Create_Child_SA request message, and/or the transmission of the IKE Create_Child_SA response message.

Note that application of the N4 rules to the UPF may be performed after S1318, and application of the ATSSS rules to the UE may be performed at this stage.

With the above operation, the procedure of (B) of FIG. 13 is successfully completed.

In a case that the procedure of (B) of FIG. 13 is successfully completed, the UE is in a state in which the user plane resources over the non-3GPP access have been established. That is, the UE may be in a state of being able to communicate with the DN over the non-3GPP access and the UPF_232.

In addition, in a case that the procedures of (A) and (B) of FIG. 13 are successfully completed, the UE may become in a state of being able to communicate with the DN using the second MA PDU session using the user plane resources over the 3GPP access and the user plane resources over the 3GPP access. Moreover, successful completion of the procedures of (A) and (B) of FIG. 13 may mean successful completion of the PDU session establishment procedure.

Next, each step of a procedure for rejecting a request from the UE to be performed in a case that the third condition fulfillment determination is false in FIG. 13 will be described. This procedure may be initiated in a case that the establishment of the second MA PDU session is rejected, as described above.

Specifically, the SMF transmits a PDU session establishment reject message to the UE via the AMF. Specifically, the SMF transmits the PDU session establishment reject message to the AMF over the N11 interface. In a case that the PDU session establishment request message is received from the SMF, the AMF transmits to the UE an NAS message including the PDU session establishment reject message by using the N1 interface.

Here, the SMF may transmit the PDU session establishment reject message to indicate that the request from the UE made with the PDU session establishment request message has been rejected.

The UE can consider that the request from the UE made with the PDU session establishment request message has been rejected by receiving the PDU session establishment reject message. That is, the UE can consider that the request to establish a second MA PDU session has been rejected by the network.

With the above operation, the procedure for rejecting the request of the UE is completed. In addition, the completion of the procedure for rejecting the request of the UE may mean that the PDU session establishment procedure is not successfully completed (is abnormally completed). In this case, the (new) second MA PDU session cannot be established. In addition, in this case, the UE may become in a state of being unable to communicate with the DN because the first MA PDU session has already been released and the second MA PDU session has not been established. In addition, in this case, the remaining steps of FIG. 6 may be skipped.

With the above operation, the PDU session establishment procedure of S606 is completed.

In a case that the PDU session establishment procedure is successfully completed, the UE becomes in a state in which the second MA PDU session has been established using the user plane resources over the 3GPP access and the user plane resources over the non-3GPP access and is in a state of being able to communicate with the DN_300 using the second MA PDU session (S608). Note that the PSA at this time is the UPF_232.

With the above operation, the first PSA modification procedure is completed.

In a case that the first PSA modification procedure is completed, the state transitions from the first communication state illustrated in FIG. 2 (a state in which the first MA PDU session using the user plane resources over the 3GPP access and the user plane resources over the non-3GPP access has been established) to the second communication state illustrated in FIG. 14 (a state in which the second MA PDU session using the user plane resources over the 3GPP access and the user plane resources over the non-3GPP access has been established). In addition, as the first PSA modification procedure is performed, the PSA is modified from the UPF_230 to UPF_232.

### 4.2. Second PSA Modification Procedure

Next, the second PSA modification procedure will be described. As described above, the second PSA modification procedure is a procedure for modifying a PSA (some PSAs) used in the first MA PDU session in a case that the first MA PDU session using the user plane resources over the 3GPP access and the user plane resources over the non-3GPP access has been established and SSC mode 2 is applied to the first MA PDU session. Here, a case that only a PSA used in the user plane resources over the non-3GPP access is modified and a PSA used in the user plane resources over the 3GPP access is not modified will be described. Each apparatus performs the second PSA modification procedure to transition from the first communication state illustrated in FIG. 2 to a third communication state illustrated in FIG. 15. In addition, as the second PSA modification procedure is performed, the PSAs are modified from the UPF_230 to the UPF_230 and the UPF_232.

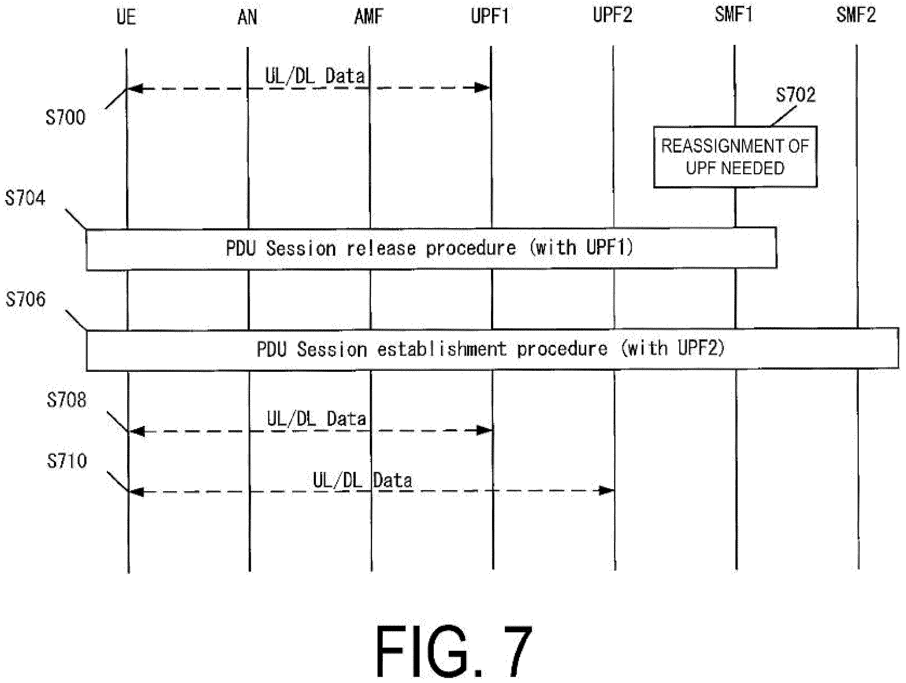

Next, the second PSA modification procedure will be described using FIG. 7. Here, the UPF 1, UPF 2, and SMF 1 in FIG. 7 correspond to the UPF_230, the UPF_232, and the SMF_220, respectively.

First, the UE is in a state of being able to transmit and/or receive user data to and/or from the DN_300 using the first MA PDU session (S700). The PSA at this time is the UPF_230 as described above. The UE may or may not actually transmit and/or receive user data in S700.

Next, the SMF determines whether or not the UPF_230 (also referred to as a "serving UPF") being used in the first MA PDU session needs to be reassigned (S702). The SMF may determine that the UPF_230 needs to be reassigned in a case that, for example, it is not possible to maintain the user plane resources over the non-3GPP access and/or throughputs of communication over the non-3GPP access is extremely decreased, and/or the UPF_230 is in an overflow state, and/or the UE has moved, and/or an operator policy or a network policy has been modified, and/or there is a request from another NF, and/or the like.

In a case that the SMF has determined that the UPF_230 does not need to be reassigned, each apparatus may skip, that is, omit the steps from S704. In a case that the SMF has determined that the UPF_230 needs to be reassigned, each apparatus may perform steps from S704. Here, a case that it has been determined that the UPF_230 needs to be reassigned will be described. Next, the PDU session release procedure of S704 will be described with reference to FIG. 12.

The PDU session release procedure is initiated by the SMF transmitting an N4 session release request message to the UPF_230 (S1200). The N4 session release request message may include an N4 session ID and/or an access type. The N4 session ID may be an identifier for generating an SMF and identifying an N4 session provided for the UPF and/or context of the N4 session in a case that a new PDU session is established or the UPF for an established PDU session is modified. In addition, the N4 session ID is information stored in the SMF and the UPF. In addition, the SMF may also store the relationship between the N4 session ID and the PDU session ID for given UE. In addition, the access type may indicate access desired to release in the user plane resources of the first MA PDU session, and here it may indicate the non-3GPP access. In addition, the SMF may transmit an N4 session release request message to the UPF_230 to request release of the first MA PDU session of the UE, and/or release of the user plane resources over the non-3GPP access in the first MA PDU session, and/or release of the N4 session corresponding to the first MA PDU session (or the user plane resources over the non-3GPP access).

Next, in a case that the N4 session release request message is received, the UPF_230 checks information included in the N4 session release request message. The UPF_230 may release, for the SMF, the first MA PDU session of the UE, and/or release the user plane resources over the non-3GPP access in the first MA PDU session, and/or release the N4 session corresponding to the first MA PDU session (or the user plane resources over the non-3GPP access), based on the N4 session release request message and/or information included in the N4 session release request message.

In addition, by transmitting to the SMF the N4 session release response message, the UPF_230 may inform the SMF that the N4 session release request message has been received, and/or the first MA PDU session of the UE has been released, and/or the user plane resources over the non-3GPP access in the first MA PDU session has been released, and/or the N4 session corresponding to the first MA PDU session (or the user plane resources over the non-3GPP access) has been released (S1202). The N4 session release response message may include the N4 session ID and/or access type included in the N4 session release request message. Note that, in a case that the UPF_230 has not received an access type from the SMF, the message may include no access type. In addition, the message may include an access type even in a case that the UPF_230 has not received an access type from the SMF. In the case that the access type is included, it may indicate the non-3GPP access.

Next, in a case that the N4 session release response message is received, the SMF checks the information included in the N4 session release response message. The SMF may consider that the UPF_230 has received the N4 session release request message, and/or the UPF_230 has released the first MA PDU session of the UE, and/or the UPF_230 has released the user plane resources over the non-3GPP access in the first MA PDU session, and/or the UPF_230 has released the N4 session corresponding to the first MA PDU session (or the user plane resources over the non-3GPP access), based on the N4 session release response message and/or the information included in the N4 session release response message.

Then, the SMF transmits an N1 SM container, and/or an N2 SM resource release request message to the AMF (S 1204). In addition, although the SMF also transmits a PDU session release command message, the PDU session release command message may be included in the N1 SM container and transmitted. The PDU session release command message may include a PDU session ID, and/or an access type, and/or a cause value. In addition, the N2 SM resource release request message may include a PDU session ID and/or an access type. Here, the PDU session ID is information for identifying the first MA PDU session. In addition, the access type may also indicate access desired to release, and here, it may indicate the non-3GPP access. In addition, the cause value may also indicate that establishment of an SA PDU session for the same DN is required. The SMF may transmit a PDU session release command message, and/or an N1 SM container, and/or an N2 SM resource release request message to indicate the release of the first MA PDU session of the UE, and/or the release of the user plane resources over the non-3GPP access in the first MA PDU session.

Next, in a case that the N1 SM container and/or the N2 SM resource release request message is received, the AMF checks the information included in the N1 SM container and/or the N2 SM resource release request message. The AMF may receive the N1 SM container, and/or the N2 SM resource release request message to consider that the release of the first MA PDU session of the UE, and/or the release of the user plane resources over the non-3GPP access in the first MA PDU session have been indicated.

Then, the AMF transmits the NAS message to the UE over the access network (S1206 and S1208). Here, the NAS message includes the N1 SM container. That is, the PDU session release command message received from the SMF may be included in the NAS message and transmitted. In addition, the access network may be of the 3GPP access or the non-3GPP access. In other words, the NAS message may be transmitted over the 3GPP access or the non-3GPP access. In addition, whether to transmit the NAS message over the 3GPP access or the non-3GPP access may be determined by the SMF or the AMF. In a case that the SMF determines an access, the SMF may inform the AMF of the access over which the NAS message is to be transmitted to allow the AMF to identify the access for the transmission based on the information. In addition, in a case that the AMF determines an access, any access may be identified from among accesses included in the access type received from the SMF.

In a case that the NAS message is transmitted over the 3GPP access, the AMF transmits the NAS message to the base station apparatus_110, and the base station apparatus_110 that has received the NAS message transmits the NAS message to the UE.

In addition, in a case that the NAS message is transmitted over the non-3GPP access, transmission destinations differ depending on whether the non-3GPP access used in the first MA PDU session is Untrusted Non-3GPP Access or Trusted Non-3GPP access.

In a case that the non-3GPP access used in the first MA PDU session is the Untrusted Non-3GPP Access, the AMF transmits the NAS message to the N3IWF_240, the N3IWF_240 that has received the NAS message may transmit the NAS message to the base station apparatus_120, and the base station apparatus_120 that has received the NAS message may transmit the NAS message to the UE.

In addition, in a case that the non-3GPP access used in the first MA PDU session is Trusted Non-3GPP Access, the AMF may transmit the NAS message to the TNGF, the TNGF that has received the NAS message transmits the NAS message to the TNAP, and the TNAP that has received the NAS message may transmit the NAS message to the UE.

The AMF may transmit the NAS message to notify the UE that the release of the first MA PDU session of the UE, and/or the release of the user plane resources over the non-3GPP access in the first MA PDU session have been indicated.

In a case that the UE receives the NAS message, the UE checks the information included in the NAS message. The UE may consider, based on the NAS message and/or information included in the NAS message, that release of the first MA PDU session of the UE and/or the release of the user plane resources over the non-3GPP access in the first MA PDU session have been indicated. Then, the UE may release the user plane resources over the non-3GPP access in the first MA PDU session based on the NAS message and/or the information included in the NAS message.

With the above operation, the PDU session release procedure of S604 is completed. Although the UE releases the user plane resources over the non-3GPP access in the first MA PDU session in a case that the PDU session release procedure is completed, the UE becomes in a state of being able to communicate with the DN_300 using the first MA PDU session because the first MA PDU session using the user plane resources over the 3GPP access is maintained. In addition, the UE is in a state of been registered with the 5GS over the 3GPP access and/or the non-3GPP access.

Next, each apparatus performs a PDU session establishment procedure of S706 to establish a (first) new SA PDU session over the non-3GPP access with the same DN (DN_300) as the DN (DN_300) in the first communication state. Note that, in this section, the PDU session establishment procedure is also referred to as an SA PDU session establishment procedure. The SA PDU session establishment procedure will be described with reference to FIG. 13.

Note that a case that the non-3GPP access is the untrusted non-3GPP access will be described. However, this embodiment can also be applied to a case that the non-3GPP access is Trusted non-3GPP access by replacing the base station apparatus_120 and the N3IWF with the TNAP and TNGF.

At the stage prior to performing the SA PDU session establishment procedure, the UE is in a state of being registered with a 5GS over the non-3GPP access, and thus the UE may be in a state in which IPsec SA for NAS signaling is established between the UE and the N3IWF.

First, the UE initiates the SA PDU session establishment procedure by transmitting to the AMF an NAS message including the N1 SM container including a PDU session establishment request message over the access network (the base station apparatus_120) (S1300). The NAS message is transmitted over the N1 interface (S 1300). The NAS message may be an uplink NAS transport (UL NAS TRANSPORT) message. Specifically, the PDU session establishment request message is transmitted to the N3IWF using the IPsec SA for NAS signaling, and the N3IWF transfers the received PDU session establishment request message to the AMF.

In addition, by including and transmitting at least one type of the first to tenth identification information in the PDU session establishment request message and/or the N1 SM container and/or the NAS message, the UE can notify the network side of the request from the UE.

In addition, the first identification information is a DNN for identifying the DN serving as a connection destination of the SA PDU session (a first SA PDU session) of which establishment is requested and is preferably configured to the same DNN as the DNN for identifying the DN that was communicating in the first MA PDU session.

In addition, the UE may include the second identification information in the PDU session establishment request message and/or the N1 SM container and/or the NAS message to notify the network side whether or not the UE supports the ATSSS function and/or whether or not the UE supports the MPTCP function and/or ATSSS-LL function.

In addition, the third identification information is a PDU session ID for identifying an SA PDU session (the first SA PDU session) of which establishment is requested, and needs to be configured to a PDU session ID different from the PDU session ID configured for the first MA PDU session.

In addition, the fourth identification information is a PDU session type of the SA PDU session (the first SA PDU session) of which establishment is requested, and is preferably configured to the same PDU session type as the PDU session type configured for the first MA PDU session.

In addition, the fifth identification information is an SSC mode of the SA PDU session (the first SA PDU session) of which establishment is requested, and is preferably configured to an SSC mode configured for the first MA PDU session, that is, SSC mode 2, but may be configured to SSC mode 1 or 3.

In addition, the sixth identification information may be S-NSSAI of the SA PDU session (the first SA PDU session) of which establishment is requested, and is preferably configured to S-NSSAI allowed for both accesses (the 3GPP access and the non-3GPP access) by the network in the Registration procedure.

In addition, by including the seventh identification information indicating Initial request or Existing PDU Session in the PDU session establishment request message, and/or the N1 SM container, and/or the NAS message, the UE may notify the network side that the PDU session establishment request message has been transmitted to establish a first (new) SA PDU session and/or the ATSSS-LL function and/or the MPTCP function are applied to steer the traffic of the first MA PDU session and/or the first SA PDU session.

Note that the UE may include and transmit the first to tenth identification information in a control message of a lower layer than the NAS layer (e.g., an RRC layer, a MAC layer, an RLC layer, or a PDCP layer) or a control message of a higher layer than the NAS layer.

Next, in a case that the NAS message is received, the AMF can consider that the UE has made a request, and/or recognize the content of the information and the like (messages, containers, and information) included in the NAS message.

Here, the AMF may reject the establishment of the first SA PDU session in a case that, although the UE has been registered with both accesses, the S-NSSAI indicated by the sixth identification information received from the UE is not allowed for either access. In addition, the AMF may reject the establishment of the first SA PDU session in a case that the AMF does not support the ATSSS function.

In addition, in a case that the establishment of the first SA PDU session is to be rejected, each apparatus may skip, that is, omit the steps from S1302. In addition, the establishment of the first SA PDU session may be rejected in a case that the SA PDU session establishment procedure is not successfully completed.

In addition, in a case that the establishment of the first SA PDU session is to be rejected, the AMF may transmit an NAS message including information indicating that the establishment of the first SA PDU session is rejected to the UE. In addition, at this time, the AMF does not need to transmit at least some of the information and the like (messages, containers, and information) included in the NAS message received from the UE to the SMF.

In addition, in a case that the establishment of the first SA PDU session is to be rejected, the AMF may transmit to the SMF information indicating that the establishment of the first SA PDU session is to be rejected to allow the SMF to transmit to the UE an NAS message including the N1 SM container including the PDU session establishment reject message. At this time, the PDU session establishment reject message, and/or the N1 SM container, and/or the NAS message may include the information indicating that the establishment of the first SA PDU session is to be rejected.

Next, the AMF selects the SMF as a destination to which at least some of the information and the like (messages, containers, and information) included in the NAS message received from the UE is to be transferred (S1302). Note that the AMF may select the SMF as a transfer destination based on information included in the NAS message (messages, containers, and information), and/or the subscriber information, and/or the capability information of the network, and/or the operator policy, and/or the state of the network, and/or the user registration information, and/or context held by the AMF, and/or the like. In addition, the AMF may select the SMF supporting the MA PDU session and/or the ATSSS function. Here, it is assumed that the SMF_220 supporting the MA PDU session and/or the ATSSS function has been selected.

Next, the AMF transmits, to the selected SMF, at least some of the information and the like (messages, containers, and information) included in the NAS message received from the UE over the N11 interface (S1304). In addition, the AMF may transmit, to the SMF, information indicating that the UE has been registered with both accesses.

Next, in a case that information and the like (messages, containers, and information) transmitted from the AMF is received, the SMF can consider that the UE has made a request and/or recognize the content of the information and the like (messages, containers, and information) received from the AMF.

Here, the SMF may or may not perform the third condition fulfillment determination. The third condition fulfillment determination may be intended to determine whether or not to accept the request from the UE. In the third condition fulfillment determination, the SMF determines whether the third condition fulfillment determination is true or false. In a case that the SMF determines that the third condition fulfillment determination is true, the procedure of (B) of FIG. 13 may be initiated. In addition, in a case that the third condition fulfillment determination is determined to be false, a procedure for rejecting the request from the UE may be initiated.

Note that the third condition fulfillment determination may be performed based on information received from the AMF (messages, containers, and information), and/or subscriber information, and/or network capability information, and/or the operator policy, and/or the state of the network, and/or user registration information, and/or the context held by the SMF, and/or the like.

For example, in a case that the network allows the request from the UE, the third condition fulfillment determination may be determined to be true. In addition, a case that the network does not allow the request from the UE, the third condition fulfillment determination may be determined to be false. Furthermore, in a case that the network to which the UE is connected and/or an apparatus in the network supports the function requested by the UE, the third condition fulfillment determination may be determined to be true, and in a case that network and/or the apparatus does not support the function requested by the UE, the third condition fulfillment determination may be determined to be false. Moreover, in a case that the transmitted and/or received identification information is allowed, the third condition fulfillment determination may be determined to be true, and in a case that the transmitted and/or received identification information is not allowed, the third condition fulfillment determination may be determined to be false. In addition, in a case that the network allows the establishment of the first SA PDU session, the third condition fulfillment determination may be determined to be true. In addition, in a case that the network rejects the establishment of the first SA PDU session, the third condition fulfillment determination may be determined to be false. Note that conditions for determining whether the third condition fulfillment determination is true or false may not be limited to the above-described conditions.

Next, each step of the procedure of (B) of FIG. 13 will be described.

First, the SMF may select the PCF. For example, as for the SMF, in a case that the seventh identification information indicates the Initial request, that is, in a case that the present procedure is performed to newly establish a (first) SA PDU session, the SMF may select an appropriate PCF based on information received from the AMF, or the like. For example, the SMF may select a PCF supporting the ATSSS function. In addition, the SMF may use the PCF that has already been selected, that is, a PCF that has been used in the first MA PDU session, in a case that the seventh identification information indicates Existing PDU Session. In other words, a new PCF may or may not be selected.

Next, the SMF may transmit to the PCF at least some of the information and the like (messages, containers, and information) received from the AMF (not illustrated).

Furthermore, in a case that the SMF determines to allow the establishment of a first SA PDU session, the SMF may further transmit, to the PCF, "information indicating that the establishment of a first SA PDU session has been allowed" and/or "information (access type) indicating the access corresponding to the first SA PDU session of which establishment is allowed". Here, the "information (access type) indicating the access corresponding to the first SA PDU session of which establishment is allowed" may be the non-3GPP access.

Next, in a case that the information and the like (messages, containers, and information) transmitted from the SMF is received, the PCF can consider that the UE has requested the establishment of the first SA PDU session and/or recognize the content of the information and the like (messages, containers, and information) received from the SMF.

Note that the PCF may further make determination similar to the above-described determination by the SMF based on the information received from the SMF (messages, containers, and information), and/or the operator policy, and/or the subscriber information, and/or the like. In this case, information similar to the information transmitted from the SMF to the PCF may be transmitted from the PCF to the SMF.

In addition, in a case that the PCF detects that the above-described determination has been made by the SMF, the PCF need not make (may skip) the determination.

In addition, the above-described determination may be made only by the PCF without being made by the SMF. In this case, the information or the like (messages, containers, and information) transmitted from the SMF to the PCF may be only at least a portion (messages, containers, and information) received from the AMF. In other words, in a case that the above-described determination has been made by the SMF, the information generated by the SMF and additionally transmitted to the PCF may not be transmitted. In a case that the PCF determines to allow the establishment of the first SA PDU session in this case, the PCF may further transmit, to the SMF, "information indicating that the establishment of the first SA PDU session has been allowed" and/or "information (access type) indicating the access corresponding to the first SA PDU session of which establishment has been allowed". Here, the "information (access type) indicating the access corresponding to the first SA PDU session of which establishment has been allowed" may indicate the non-3GPP access.

Then, the PCF may generate PCC rules (also referred to as policies or routing rules) for the first SA PDU session in a case that it is detected that the establishment of the first SA PDU session has been allowed based on information and the like received from the SMF (messages, containers, and information) or in a case that it is detected that the establishment of the first SA PDU session has been allowed based on the information and the like received from the SMF (the messages, containers, and information).

Then, in the case that the PCF has generated the PCC rules for the first SA PDU session, the PCF may transmit the PCC rules to the SMF. In addition, the PCF may explicitly indicate that the establishment of the first SA PDU session has been allowed by transmitting the information indicating that the establishment of the first SA PDU session has been allowed, or may implicitly indicate that the establishment of the first SA PDU session has been allowed by transmitting the PCC rules to the SMF.

Next, in a case that the information transmitted from the PCF is received, the SMF can recognize the content of the information. Then, in a case that the PCC rules from the PCF is received, the SMF may generate ATSSS rules (20th identification information) and N4 rules from the PCC rules. Here, the ATSSS rules are information for controlling the first MA PDU session and/or the first SA PDU session transmitted from the SMF to the UE, and the N4 rules are information for controlling the first MA PDU session and/or the first SA PDU session transmitted from the SMF to the UPF. In addition, the SMF may associate (or map) the PCC rules, the ATSSS rules and the N4 rules with (or to) one another for management.

In addition, in a case that the fourth identification information indicates any of IPv4, IPv6, or IPv4v6, the SMF may assign an IP address or an IP prefix to the first SA PDU session. In addition, in a case that the fourth identification information indicates unstructured, the SMF may assign an IPv6 address to the first SA PDU session. In addition, in a case that the fourth identification information indicates Ethernet (trade name), the SMF may assign neither a MAC address nor an IP address to the first SA PDU session.

Next, the SMF selects the UPF with which the first SA PDU session is to be established and transmits an N4 session establishment request message to the selected UPF over the N4 interface (S1318). Here, the SMF may select one or more UPFs based on the information received from the AMF, and/or the information received from the PCF, and/or the subscriber information, and/or the network capability information, and/or the operator policy, and/or the state of the network, and/or the user registration information, and/or the context held by the SMF, and/or the like. In addition, in a case that multiple UPFs are selected, the SMF may transmit an N4 session establishment request message to each of the UPFs. In addition, in a case that the establishment of the first SA PDU session has been allowed, the SMF may select a UPF supporting the first SA PDU session and/or the ATSSS function. Here, it is assumed that the UPF_232 has been selected.

In addition, in a case that the first SA PDU session has been allowed to be established, the N4 rules may be included and transmitted in an N4 session establishment request message.

Next, in a case that the N4 session establishment request message is received (S1318), the UPF can recognize the content of the information received from the SMF. In addition, the UPF creates a context for the first SA PDU session. In addition, the UPF may be configured to operate according to the N4 rules in a case that it has received the N4 rules from the SMF. In other words, the UPF may configure whether to route the downlink traffic in the established SA PDU session over the 3GPP access or the non-3GPP access. Furthermore, the UPF may transmit an N4 session establishment response message to the SMF over the N4 interface based on the reception of the N4 session establishment request message and/or the creation of the context for the first SA PDU session (S 1320).

Next, in a case that the N4 session establishment response message is received as a response message to the N4 session establishment request message, the SMF can recognize the content of the information received from the UPF. In addition, the SMF may perform address assignment of an address to be assigned to the UE based on the reception of the PDU session establishment request message, and/or the selection of the UPF, and/or the reception of the N4 session establishment response message, and/or the like.

Next, the SMF may transmit to the AMF the N1 SM container, and/or N2 SM information, and/or the PDU session ID (the 13th identification information), and/or access type (the 19th identification information) over the N11 interface, based on the reception of the PDU session establishment request message, and/or the selection of the UPF, and/or the reception of the N4 session establishment response message, and/or completion of address assignment of the address to be assigned to the UE, and/or the like (S1322). Here, the N1 SM container may include a PDU session establishment accept message, and the PDU session establishment accept message may include an ATSSS container Information Element (IE).

Next, the AMF that has received the N1 SM container, and/or the N2 SM information, and/or the PDU session ID (the 13th identification information), and/or the access type (the 19th identification information) transmits an NAS message to the UE via the N3IWF and the access network (S1324) (S1326). Here, the NAS message is transmitted over the N1 interface. Furthermore, the NAS message may be a downlink NAS transport (DL NAS transport) message.

Specifically, in a case that the AMF transmits an N2 PDU session request message to the N3IWF (S1324), the N3IWF that has received the N2 PDU session request message transmits an NAS message to the UE over the access network (the base station apparatus_120) (S1326). Here, the N2 PDU session request message may include the NAS message and/or the N2 SM information. In addition, the NAS message may include the PDU session ID (the 13th identification information) and/or the access type (the 19th identification information) and/or the N1 SM container. The N1 SM container may include the PDU session establishment accept message.

In addition, the PDU session establishment accept message may be a response message to the PDU session establishment request. In addition, the PDU session establishment accept message may indicate that the establishment of the PDU session has been accepted.

Here, the SMF and/or AMF may transmit the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message to indicate that at least some of the request from the UE made using the PDU session establishment request message has been accepted.

In addition, the SMF and/or AMF may include and transmit at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message. The SMF and/or the AMF may transmit at least one piece of the identification information to notify the UE of the content of the identification information.

In addition, in a case that the establishment of the SA PDU session has been allowed, at least one piece of the 11th to 21st identification information may be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message.

Note that the SMF and/or AMF may select and determine which type of identification information is to be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, based on each piece of received identification information, and/or the subscriber information, and/or the network capability information, and/or the operator policy, and/or the state of the network, and/or the user registration information, and/or the context held by the SMF and/or the AMF, and/or the like.

Here, the 11th identification information may be the same as the first identification information. In addition, the 12th identification information may indicate the MPTCP capability and/or the ATSSS-LL capability of the network. In addition, the 13th identification information may be the same as the third identification information. In addition, the 14th identification information may be the same as the fourth identification information. In addition, the 15th identification information may be the same as the fifth identification information and, for example, may be SSC mode 2. In addition, the 16th identification information may be the same as the sixth identification information. In addition, the 18th identification information may indicate that the network has allowed the establishment of the first SA PDU session. In addition, the 19th identification information may indicate the non-3GPP access. In addition, the 20th identification information may indicate the ATSSS rules.

In addition, by including and transmitting at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, the UE may be notified that the establishment of the first SA PDU session has been allowed, and/or notified of the access type corresponding to the first SA PDU session allowed to be established.

Next, the UE receives the NAS message over the N1 interface (S1326). In a case that the NAS message is received, the UE can consider that the request from the UE through the PDU session establishment request message has been allowed and/or recognize the content of the information included in the NAS message and the like (messages, containers, and information). That is, the UE can consider that the establishment of the first SA PDU session has been allowed, and/or recognize the access type corresponding to the first SA PDU session allowed to be established.

With the above operation, the procedure of (B) of FIG. 13 is successfully completed.

In a case that the procedure of (B) of FIG. 13 is successfully completed, the UE becomes in a state in which the first SA PDU session over the non-3GPP access has been established. In other words, the UE may become in a state of being able to communicate with the DN using the first SA PDU session over the non-3GPP access. That is, the UE may be in a state of being able to communicate with the DN over the non-3GPP access and the UPF_232.

Moreover, successful completion of the procedures of (B) of FIG. 13 may mean successful completion of the PDU session establishment procedure.

Next, each step of a procedure for rejecting a request from the UE to be performed in a case that the third condition fulfillment determination is false in FIG. 13 will be described. This procedure may be initiated in a case that the establishment of the first SA PDU session is rejected as described above.

Specifically, the SMF transmits a PDU session establishment reject message to the UE via the AMF. Specifically, the SMF transmits the PDU session establishment reject message to the AMF over the N11 interface. In a case that the PDU session establishment request message is received from the SMF, the AMF transmits an NAS message including the PDU session establishment reject message to the UE by using the N1 interface.

Here, the SMF may transmit the PDU session establishment reject message to indicate that the request from the UE made with the PDU session establishment request message has been rejected.

The UE can consider that the request from the UE made with the PDU session establishment request message has been rejected by receiving the PDU session establishment reject message. That is, the UE can consider that the request to establish the SA PDU session has been rejected by the network.

With the above operation, the procedure for rejecting the request of the UE is completed. In addition, the completion of the procedure for rejecting the request of the UE may mean that the PDU session establishment procedure is not successfully completed (is abnormally completed). In this case, a first SA PDU session over the non-3GPP access cannot be established. However, in this case, because the first MA PDU session using the user plane resources over the 3GPP access remains maintained, the UE is in a state of being able to communicate with the DN using this first MA PDU session. In addition, in this case, the remaining steps of FIG. 7 may be skipped.

With the above operation, the PDU session establishment procedure of S706 is completed.

In a case that the PDU session establishment procedure is successfully completed, the UE becomes in a state in which the first MA PDU session using the user plane resources over the 3GPP access and the first SA PDU session over the non-3GPP access have been established, and is in a state of being able to communicate with the DN_300 using the first MA PDU session and the first SA PDU session (S708) (S710). Note that the PSAs at this time are the UPF_230 and the UPF_232.

With the above operation, the second PSA modification procedure is completed.

In a case that the second PSA modification procedure is completed, the state transitions from the first communication state illustrated in FIG. 2 (a state in which the first MA PDU session using the user plane resources over the 3GPP access and the user plane resources over the non-3GPP access has been established) to the third communication state illustrated in FIG. 15 (a state in which the first MA PDU session using the user plane resources over the 3GPP access and the first SA PDU session over the non-3GPP access have been established). In addition, as the second PSA modification procedure is performed, the PSAs are modified from the UPF_230 to the UPF_230 and the UPF_232.

Here, although the case that only a PSA used in the user plane resources over the non-3GPP access is modified and a PSA used in the user plane resources over the 3GPP access is not modified has been described in Section 4.2, the embodiment can be applied to a case that access to modify a PSA is the opposite. That is, the embodiment can be applied by switching the non-3GPP access to the 3GPP access for the access type in which information is exchanged between apparatuses.

### 5. Procedure 2 for Modifying PSA in SSC mode 2

Next, a procedure for modifying a PSA in a case that a first MA PDU session using user plane resources over one access (either 3GPP access or non-3GPP access) and a first SA PDU session over the other access (either non-3GPP access or 3GPP access) have been established and SSC mode 2 is applied to the first MA PDU session and the first SA PDU session will be described.

There may be a third PSA modification procedure for the PSA modification procedure. Here, the third PSA modification procedure is a procedure in which a PSA of the first SA PDU session is modified.

### 5.1. Third PSA Modification Procedure

Next, the third PSA modification procedure will be described. As described above, the third PSA modification procedure is a procedure for modifying a PSA of the first SA PDU session in a case that the first MA PDU session using only user plane resources over one access (either 3GPP access or non-3GPP access) and the first SA PDU session over the other access (either non-3GPP access or 3GPP access) have been established and SSC mode 2 is applied to the first MA PDU session and the first SA PDU session. Here, the case that the first MA PDU session using the user plane resources over the 3GPP access and the first SA PDU session over the non-3GPP access (untrusted non-3GPP access) are established will be described. Note that the following description can also be applied to the case that the first MA PDU session using the user plane resources over the 3GPP access and the first SA PDU session over the non-3GPP access (Trusted non-3GPP access) are established by replacing the base station apparatus_120 and the N3IWF with a TNAP and a TNGF. Specifically, a case that each apparatus performs the third PSA modification procedure to transition from the third communication state illustrated in FIG. 15 to the first communication state illustrated in FIG. 2 will be described. In addition, as the third PSA modification procedure is performed, the PSAs are modified from the UPF_230 and the UPF_232 to the UPF_230.

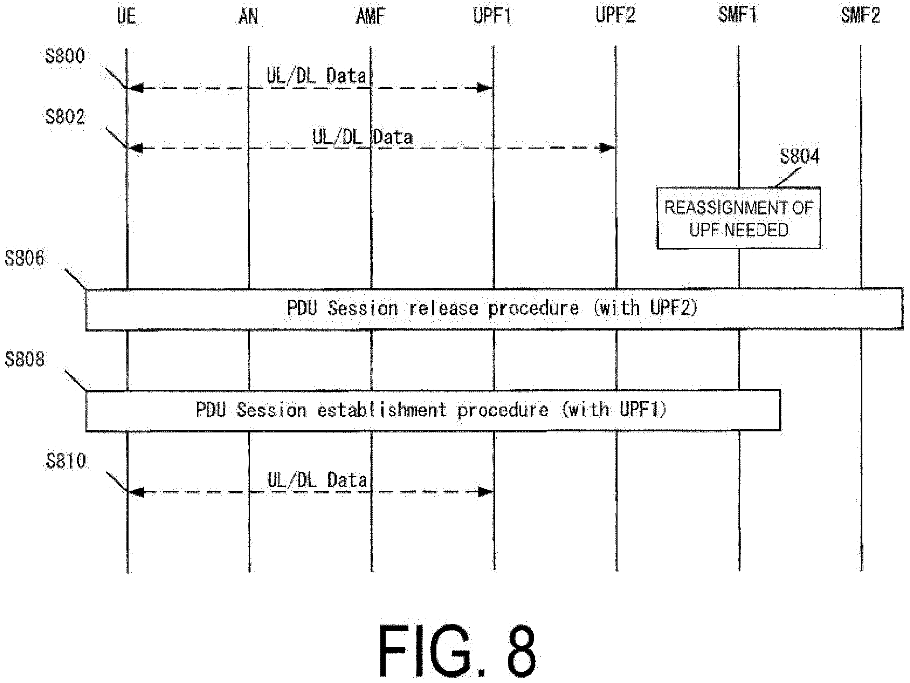

Next, the third PSA modification procedure will be described using FIG. 8. Here, the UPF 1, the UPF 2, and the SMF 1 in FIG. 8 correspond to the UPF_230, the UPF_232, and the SMF_220, respectively.

First, the UE is in a state of being able to transmit and/or receive user data with the DN_300 using the first MA PDU session using the user plane resources over the 3GPP access described above and the first SA PDU session over the non-3GPP access (S800) (S802). The PSAs at this time are the UPF_230 and the UPF_232 as described above. The UE may or may not actually transmit and/or receive user data in S800 and S802.

Next, the SMF determines whether or not the UPF_232 (also referred to as a "serving UPF") being used in the first SA PDU session needs to be reassigned (S804). The SMF may determine that the UPF_232 needs to be reassigned in a case that, for example, it is not possible to maintain the user plane resources over the non-3GPP access and/or throughputs of communication over the non-3GPP access is extremely decreased, and/or the UPF_230 is in an overflow state, and/or the UE has moved, and/or an operator policy or a network policy has been modified, and/or there is a request from another NF, and/or the like.

In a case that the SMF has determined that the UPF_232 does not need to be reassigned, each apparatus may skip, that is, omit the steps from S806. In a case that the SMF has determined that the UPF_230 needs to be reassigned, each apparatus may perform steps from S806. Here, a case that it has been determined that the UPF_232 needs to be reassigned will be described. Next, the PDU session release procedure of S806 will be described with reference to FIG. 12.

The PDU session release procedure is initiated by the SMF transmitting an N4 session release request message to the UPF_232 (S 1200). The N4 session release request message may include an N4 session ID and/or an access type. The N4 session ID may be an identifier for generating an SMF and identifying an N4 session provided for the UPF and/or context of the N4 session in a case that a new PDU session is established or the UPF for an established PDU session is modified. In addition, the N4 session ID is information stored in the SMF and the UPF. In addition, the SMF may also store the relationship between the N4 session ID and the PDU session ID for given UE. In addition, the access type may also indicate access to release in the first SA PDU session, and here, it may indicate the non-3GPP access. In addition, the SMF may request release of the first SA PDU session of the UE and/or release of the N4 session corresponding to the first SA PDU session by transmitting an N4 session release request message to the UPF_230. Note that the SMF may not transmit the access type to the UPF_232.

Next, in a case that the N4 session release request message is received, the UPF_232 checks information included in the N4 session release request message. The UPF_232, for the SMF, may release the first SA PDU session of the UE and/or release the N4 session corresponding to the first SA PDU session, based on the N4 session release request message and/or information included in the N4 session release request message.

In addition, by transmitting to the SMF an N4 session release response message, the UPF_232 may inform the SMF that the N4 session release request message has been received, and/or the first SA PDU session of the UE has been released, and/or the N4 session corresponding to the first SA PDU session has been released (S 1202). The N4 session release response message may include the N4 session ID and/or access type included in the N4 session release request message. Note that, in a case that the UPF_232 has not received an access type from the SMF, the message may include no access type. In addition, the message may include the access type even in a case that the UPF_232 has not received an access type from the SMF. In the case that the access type is included, it may indicate the non-3GPP access.

Next, in a case that the N4 session release response message is received, the SMF checks the information included in the N4 session release response message. The SMF may consider that the UPF_232 has received the N4 session release request message, and/or the UPF_232 has released the first SA PDU session of the UE, and/or the UPF_232 has released the N4 session corresponding to the first SA PDU session, based on the N4 session release response message and/or the information included in the N4 session release response message.

Then, the SMF transmits an N1 SM container, and/or an N2 SM resource release request message to the AMF (S 1204). In addition, although the SMF also transmits a PDU session release command message, the PDU session release command message may be included and transmitted in the N1 SM container. The PDU session release command message may include a PDU session ID, and/or an access type, and/or a cause value. Here, the PDU session ID is information for identifying the first SA PDU session. In addition, the access type may also indicate access desired to release, and here, it may indicate the non-3GPP access. In addition, the cause value may indicate that re-establishment of the MA PDU session for the same DN, or addition to the MA PDU session for the same DN, or addition of user plane resources to the MA PDU session for the same DN is required. The SMF may transmit a PDU session release command message, and/or an N1 SM container, and/or an N2 SM resource release request message to indicate the release of the first SA PDU session of the UE, and/or the addition of the user plane resources to the MA PDU session for the same DN.

Next, in a case that the N1 SM container and/or the N2 SM resource release request message is received, the AMF checks the information included in the N1 SM container and/or the N2 SM resource release request message. The AMF may receive the PDU session release command message, and/or the N1 SM container, and/or the N2 SM resource release request message to consider that the release of the first SA PDU session of the UE, and/or the addition of the user plane resources to the MA PDU session for the same DN have been indicated.

Then, the AMF transmits an NAS message to the UE over the non-3GPP access (S1206 and S1208). Here, the NAS message includes the N1 SM container. That is, the PDU session release command message received from the SMF may be included in the NAS message and transmitted.

Specifically, the AMF transmits the NAS message to the N3IWF_240, the N3IWF_240 that has received the NAS message transmits the NAS message to the base station apparatus_120, and the base station apparatus_120 that has received the NAS message transmits the NAS message to the UE.

The AMF may transmit the PDU session release command message, and/or the N1 SM container, and/or the NAS message to notify the UE that the release of the first SA PDU session of the UE, and/or the addition of the user plane resources to the MA PDU session for the same DN have been indicated.

Next, in a case that the UE receives the NAS message, the UE checks the information included in the NAS message. Then, the UE may receive the PDU session release command message, and/or the N1 SM container, and/or the NAS message to consider that the release of the first SA PDU session of the UE, and/or the addition of the user plane resources to the MA PDU session for the same DN have been indicated. Then, the UE may release the first SA PDU session based on the NAS message and/or the information included in the NAS message.

As described above, the PDU session release procedure of S604 is completed. In a case that the PDU session release procedure is completed, the UE releases the first SA PDU session. However, because the first MA PDU session using the user plane resources over the 3GPP access remains maintained, the UE is in a state of being able to communicate with the DN_300 using this first MA PDU session. In addition, the UE is in a state of being registered with the 5GS over the 3GPP access and/or the non-3GPP access.

Next, each apparatus performs the PDU session establishment procedure of S808 to establish user plane resources over the non-3GPP access with the same DN (DN_300) as the DN (DN_300) in the third communication state, that is, to add user plane resources over the non-3GPP access in the first MA PDU session using the user plane resources over the 3GPP access. Note that, in this section, the PDU session establishment procedure is also referred to as an MA PDU session establishment procedure. The MA PDU session establishment procedure will be described with reference to FIG. 13.

Note that a case in which the non-3GPP access is the untrusted non-3GPP access will be described. However, this embodiment can also be applied a case in which the non-3GPP access is Trusted non-3GPP access by replacing the base station apparatus_120 and the N3IWF with the TNAP and TNGF.

At the stage prior to performing the MA PDU session establishment procedure, the UE is in a state of being registered with the 5GS over the non-3GPP access, and thus the UE may be in a state in which IPsec SA for NAS signaling is established between the UE and the N3IWF.

In addition, although the description below assumes that the 3GPP access, the non-3GPP access, and the 5G Core Network (5GC) are all managed/operated by the same operator, the embodiments below can be applied to a case that the accesses and network are operated by different operators.

The UE may determine to initiate the MA PDU session establishment procedure to add the user plane resources over the non-3GPP access in the first MA PDU session, based on information stored in the UE in advance, and/or information previously received from the access network, and/or information previously received from the core network (including identification information received in the registration procedure, and/or URSP rules previously received from the PCF, and/or the like), and/or the like.

First, the UE initiates the MA PDU session establishment procedure by transmitting to the AMF an NAS message including the N1SM container including a PDU session establishment request message over the access network (S1300). The NAS message is transmitted over the N1 interface. The NAS message may be an uplink NAS transport (UL NAS TRANSPORT) message.

Here, the access network includes the 3GPP access (also referred to as a 3GPP access network) and the non-3GPP access (also referred to as a non-3GPP access network). In other words, in a case that the UE transmits the NAS message over the 3GPP access, the UE transmits the NAS message to the AMF via the base station apparatus_110. In addition, in a case that the UE transmits the NAS message over the non-3GPP access (untrusted non-3GPP access), the UE transmits the NAS message to the AMF via the base station apparatus_120 and the N3IWF. In addition, in a case that the UE transmits the NAS message over the non-3GPP access (Trusted non-3GPP access), the UE transmits the NAS message to the AMF via the TNAP and the TNGF. As described above, although the communication path to the AMF varies depending on which access is used by the UE to transmit the NAS message, the communication path from the AMF to the SMF may be the same. Here, the NAS message is described as being transmitted over the non-3GPP access.

In addition, by including and transmitting at least one type of the first to tenth identification information in the PDU session establishment request message and/or the N1 SM container and/or the NAS message, the UE can notify the network side of the request from the UE.

In addition, the first identification information is a DNN for identifying the DN serving as a connection destination of the user plane resources of which establishment (addition) is requested and is preferably configured to the same DNN as the DNN for identifying the DN with which communication has been performed in the first MA PDU session and/or the first SA PDU session.

In addition, the UE may include the second identification information in the PDU session establishment request message and/or the N1 SM container and/or the NAS message to notify the network side whether or not the UE supports the ATSSS function and/or whether or not the UE supports the MPTCP function and/or ATSSS-LL function.

In addition, the third identification information may also be a PDU session ID for identifying an MA PDU session of the user plane resources of which establishment (addition) is requested, may be a PDU session ID different from the PDU session ID configured for the first SA PDU session, or may be the same PDU session ID as the PDU session ID configured for the first MA PDU session. Here, in a case that the third identification information is configured to the same PDU session ID as the PDU session ID of the first MA PDU session, it may mean that the UE requests the addition to the first MA PDU session.

In addition, the fourth identification information is a PDU session type of the MA PDU session of the user plane resources of which establishment (addition) is requested, and is preferably configured to the same PDU session type as the PDU session type configured for the first MA PDU session and/or the first SA PDU session.

In addition, the fifth identification information is an SSC mode of the MA PDU session of the user plane resources of which establishment (addition) is requested, and is preferably configured to the SSC mode configured for the first MA PDU session and/or the first SA PDU session, that is, SSC mode 2, but may be configured to SSC mode 1 or 3.

In addition, the sixth identification information is S-NSSAI of the MA PDU session of the user plane resources of which establishment (addition) is requested, and is preferably configured to S-NSSAI allowed for both accesses (the 3GPP access and the non-3GPP access) by the network in the Registration procedure.

In addition, by including the seventh identification information indicating the MA PDU Request in the PDU session establishment request message and/or the N1 SM container, and/or the NAS message, the UE may notify the network side that the PDU session establishment request message has been transmitted to establish a new MA PDU session (to add the user plane resources) and/or the ATSSS-LL function and/or the MPTCP function are applied to steer the traffic of the first MA PDU session.

Note that the UE may include and transmit the first to tenth identification information in a control message of a lower layer than the NAS layer (e.g., an RRC layer, a MAC layer, an RLC layer, or a PDCP layer) or a control message of a higher layer than the NAS layer.

Next, in a case that the NAS message is received, the AMF can consider that the UE has made a request, and/or recognize the content of the information and the like (messages, containers, and information) included in the NAS message.

Here, the AMF may reject the establishment of the first MA PDU session (addition of the user plane resources to the first MA PDU session) in a case that the UE has been registered with both accesses and that the S-NSSAI indicated by the sixth identification information received from the UE is not allowed for either access. In addition, the AMF may reject the establishment of the first MA PDU session (addition of the user plane resources to the first MA PDU session) in a case that the AMF does not support the ATSSS function.

In addition, in a case that the establishment of the first MA PDU session (addition of the user plane resources to the first MA PDU session) is to be rejected, each apparatus may skip, that is, omit the steps from S1302. In addition, the establishment of the first MA PDU session (addition of the user plane resources to the first MA PDU session) may be rejected in a case that the MA PDU session establishment procedure is not successfully completed.

In addition, in a case that the establishment of the first MA PDU session (addition of the user plane resources to the first MA PDU session) is to be rejected, the AMF may transmit to the UE an NAS message including information indicating that the establishment of the first MA PDU session (addition of the user plane resources to the first MA PDU session) is to be rejected. In addition, at this time, the AMF does not need to transmit to the SMF at least some of the information and the like (messages, containers, and information) included in the NAS message received from the UE.

In addition, in a case that the establishment of the first MA PDU session (addition of the user plane resources to the first MA PDU session) is to be rejected, the AMF may transmit to the SMF information indicating reject of the establishment of the first MA PDU session (addition of the user plane resources to the first MA PDU session), and the SMF may transmit to the UE an NAS message including an N1 SM container including a PDU session establishment reject message. At this time, the PDU session establishment reject message, and/or the N1 SM container, and/or the NAS message may include the information indicating that the establishment of the first MA PDU session (addition of the user plane resources to the first MA PDU session) is to be rejected.

Next, the AMF selects the SMF as a destination to which at least some of the information and the like (messages, containers, and information) included in the NAS message received from the UE is to be transferred (S 1302). Note that the AMF may select the SMF as a transfer destination based on information included in the NAS message (messages, containers, and information), and/or the subscriber information, and/or the capability information of the network, and/or the operator policy, and/or the state of the network, and/or the user registration information, and/or context held by the AMF, and/or the like. In addition, the AMF may select the SMF supporting the MA PDU session and/or the ATSSS function. Here, it is assumed that the SMF_220 supporting the MA PDU session and/or the ATSSS function has been selected.

Next, the AMF transmits, to the selected SMF, at least some of the information and the like (messages, containers, and information) included in the NAS message received from the UE over the N11 interface (S1304). The AMF may transmit, to the SMF, information indicating that the UE has been registered with both accesses.

Next, in a case that information and the like (messages, containers, and information) transmitted from the AMF is received, the SMF can consider that the UE has made a request and/or recognize the content of the information and the like (messages, containers, and information) received from the AMF.

Here, the SMF may or may not perform the third condition fulfillment determination. The third condition fulfillment determination may be intended to determine whether or not to accept the request from the UE. In the third condition fulfillment determination, the SMF determines whether the third condition fulfillment determination is true or false. In a case that the SMF determines that the third condition fulfillment determination is true, the procedure of (B) of FIG. 13 may be initiated. In addition, in a case that the third condition fulfillment determination is determined to be false, a procedure for rejecting the request from the UE may be initiated.

Note that the third condition fulfillment determination may be performed based on information received from the AMF (messages, containers, and information), and/or subscriber information, and/or network capability information, and/or the operator policy, and/or the state of the network, and/or user registration information, and/or the context held by the SMF, and/or the like.

For example, in a case that the network allows the request from the UE, the third condition fulfillment determination may be determined to be true. In addition, in a case that the network does not allow the request from the UE, the third condition fulfillment determination may be determined to be false. Furthermore, in a case that the network to which the UE is connected and/or an apparatus in the network supports the function requested by the UE, the third condition fulfillment determination may be determined to be true, and in a case that network and/or the apparatus does not support the function requested by the UE, the third condition fulfillment determination may be determined to be false. Moreover, in a case that the transmitted and/or received identification information is allowed, the third condition fulfillment determination may be determined to be true, and in a case that the transmitted and/or received identification information is not allowed, the third condition fulfillment determination may be determined to be false. In addition, in a case that the network allows the establishment of the first MA PDU session (addition of the user plane resources to the first MA PDU session), the third condition fulfillment determination may be determined to be true. In addition, in a case that the network rejects the establishment of the first MA PDU session (addition of the user plane resources to the first MA PDU session), the third condition fulfillment determination may be determined to be false. Note that conditions for determining whether the third condition fulfillment determination is true or false may not be limited to the above-described conditions.

Next, each step of the procedure of (B) of FIG. 13 will be described.

First, the SMF may select the PCF. For example, as for the SMF, in a case that the seventh identification information indicates the Initial request or an MA PDU Request, that is, in a case that the present procedure is performed to newly establish a first MA PDU session (to add the user plane resources to the first MA PDU session), the SMF may select an appropriate PCF based on information received from the AMF, or the like. For example, the SMF may select a PCF supporting the ATSSS function. In addition, the SMF may use the PCF that has already been selected, that is, may use the PCF that has been used in the first SA PDU session, in a case that the seventh identification information indicates an existing PDU session or an existing emergency PDU session. In other words, the PCF need not be selected, but a different PCF may be selected.

Next, the SMF may transmit to the PCF at least some of the information and the like (messages, containers, and information) received from the AMF (not illustrated).

Furthermore, in a case that the SMF determines to allow the establishment of the first MA PDU session (addition of the user plane resources to the first MA PDU session), the SMF may further transmit, to the PCF, "information indicating that the establishment of the first MA PDU session (addition of the user plane resources to the first MA PDU session) has been allowed" and/or "information indicating the establishment (addition) of the user plane resources over the non-3GPP access has been allowed" and/or "information (access type) indicating the access corresponding to the user plane resources of which establishment (addition) has been allowed". Here, the "information (access type) indicating the access corresponding to the user plane resources of which establishment (addition) has been allowed" may indicate the non-3GPP access.

Next, in a case that the information and the like (messages, containers, and information) transmitted from the SMF is received, the PCF can consider that the UE has requested the establishment of the first MA PDU session (addition of the user plane resources to the first MA PDU session) and/or recognize the content of the information and the like (messages, containers, and information) received from the SMF.

Note that the PCF may further make determination similar to the above-described determination by the SMF based on the information received from the SMF (messages, containers, and information), and/or the operator policy, and/or the subscriber information, and/or the like. In this case, information similar to the information transmitted from the SMF to the PCF may be transmitted from the PCF to the SMF.

In addition, in a case that the PCF detects that the above-described determination has been made by the SMF, the PCF may not make (may skip) the determination.

In addition, the above-described determination may be made only by the PCF without being made by the SMF. In this case, the information or the like (messages, containers, and information) transmitted from the SMF to the PCF may be only at least a portion (messages, containers, and information) received from the AMF. In other words, in a case that the above-described determination has been made by the SMF, the information generated by the SMF and additionally transmitted to the PCF may not be transmitted. In this case, in a case that the PCF determines to allow the establishment of the first MA PDU session (addition of the user plane resources to the first MA PDU session), the SMF may further transmit, to the PCF, "information indicating that the establishment of the first MA PDU session (addition of the user plane resources to the first MA PDU session) has been allowed" and/or "information indicating the establishment (addition) of the user plane resources over the non-3GPP access has been allowed" and/or "information (access type) indicating the access corresponding to the user plane resources of which establishment (addition) has been allowed". Here, the "information (access type) indicating the access corresponding to the user plane resources of which establishment (addition) has been allowed" may indicate the non-3GPP access.

Then, the PCF may generate PCC rules for the first MA PDU session in a case that the PCF detects that the establishment of the first MA PDU session (addition of the user plane resources to the first MA PDU session) has been allowed based on the information received from the SMF (the messages, containers, and information) or in a case that the PCF allows the establishment of the first MA PDU session (addition of the user plane resources to the first MA PDU session) based on the information received from the SMF (the messages, containers, and information).

Then, in the case that the PCF has generated the PCC rules for the first MA PDU session, the PCF may transmit the PCC rules to the SMF. In addition, the PCF may explicitly indicate that the establishment of the first MA PDU session (addition of the user plane resources to the first MA PDU session) has been allowed by transmitting the information indicating that the establishment of the first MA PDU session (addition of the user plane resources to the first MA PDU session) has been allowed, or may implicitly indicate that the establishment of the first MA PDU session (addition of the user plane resources to the first MA PDU session) has been allowed by transmitting the PCC rules to the SMF.

Next, in a case that the information transmitted from the PCF is received, the SMF can recognize the content of the information. Then, in a case that the PCC rules are received from the PCF, the SMF generates ATSSS rules (20th identification information) and N4 rules from the PCC rules. Here, the ATSSS rules are information for controlling the first MA PDU session transmitted from the SMF to the UE, and the N4 rules are information for controlling the first MA PDU session transmitted from the SMF to the UPF. In addition, the SMF may associate (or map) the PCC rules, the ATSSS rules and the N4 rules with (or to) one another for management.

In addition, in a case that the fourth identification information indicates any of IPv4, IPv6, or IPv4v6, the SMF may assign an IP address or an IP prefix to the first MA PDU session. In addition, in a case that the fourth identification information indicates unstructured, the SMF may assign an IPv6 address to the first MA PDU session. In addition, in a case that the fourth identification information indicates Ethernet (trade name), the SMF may assign neither a MAC address nor an IP address to the first MA PDU session.

Next, the SMF selects the UPF with which the first MA PDU session is to be established and transmits an N4 session establishment request message to the selected UPF over the N4 interface (S1318). Here, the SMF may select one or more UPFs based on the information received from the AMF, and/or the information received from the PCF, and/or the subscriber information, and/or the network capability information, and/or the operator policy, and/or the state of the network, and/or the user registration information, and/or the context held by the SMF, and/or the like. In addition, in a case that multiple UPFs are selected, the SMF may transmit an N4 session establishment request message to each of the UPFs. In addition, in a case that the establishment of the first MA PDU session (addition of the user plane resources to the first MA PDU session) has been allowed, the SMF may select a UPF supporting the MA PDU session and/or the ATSSS function. Here, it is assumed that the UPF_230 has been selected.

In addition, in a case that the first MA PDU session (addition of the user plane resources to the first MA PDU session) has been allowed to be established, the N4 rules may be included and transmitted in an N4 session establishment request message.

Next, in a case that the N4 session establishment request message is received (S1318), the UPF can recognize the content of the information received from the SMF. In addition, the UPF creates a context for the first MA PDU session. In addition, the UPF may be configured to operate according to the N4 rules in a case that it has received the N4 rules from the SMF. In other words, the UPF may configure whether to route the downlink traffic in the established (added) first MA PDU session including user plane resources over the 3GPP access or the non-3GPP access. Furthermore, the UPF may transmit an N4 session establishment response message to the SMF over the N4 interface based on the reception of the N4 session establishment request message and/or the creation of the context for the first MA PDU session (S1320).

Next, in a case that the N4 session establishment response message is received as a response message to the N4 session establishment request message, the SMF can recognize the content of the information received from the UPF. In addition, the SMF may perform address assignment of an address to be assigned to the UE based on the reception of the PDU session establishment request message, and/or the selection of the UPF, and/or the reception of the N4 session establishment response message, and/or the like.

Next, the SMF may transmit to the AMF the N1 SM container, and/or N2 SM information, and/or the PDU session ID (the 13th identification information), and/or access type (the 19th identification information) over the N11 interface, based on the reception of the PDU session establishment request message, and/or the selection of the UPF, and/or the reception of the N4 session establishment response message, and/or completion of address assignment of the address to be assigned to the UE, and/or the like (S1322). Here, the N1 SM container may include a PDU session establishment accept message, and the PDU session establishment accept message may include an ATSSS container IE (Information Element).

Next, the AMF that has received the N1 SM container, and/or the N2 SM information, and/or the PDU session ID (the 13th identification information), and/or the access type (the 19th identification information) transmits an NAS message to the UE via the N3IWF and the access network (S1324) (S1326). Here, the NAS message is transmitted over the N1 interface. Furthermore, the NAS message may be a downlink NAS transport (DL NAS transport) message.

Specifically, in a case that the AMF transmits an N2 PDU session request message to the N3IWF (S1324), the N3IWF that has received the N2 PDU session request message transmits an NAS message to the UE over the access network (the base station apparatus_120) (S1326). Here, the N2 PDU session request message may include the NAS message and/or the N2 SM information. In addition, the NAS message may include the PDU session ID (the 13th identification information) and/or the access type (the 19th identification information) and/or the N1 SM container. The N1 SM container may include the PDU session establishment accept message.

In addition, the PDU session establishment accept message may be a response message to the PDU session establishment request. In addition, the PDU session establishment accept message may indicate that the establishment of the first MA PDU session (addition of the user plane resources to the first MA PDU session) has been accepted.

Here, the SMF and/or AMF may transmit the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message to indicate that at least a portion of the request from the UE made using the PDU session establishment request message has been accepted.

In addition, the SMF and/or AMF may include and transmit at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message. The SMF and/or AMF may transmit at least one piece of the identification information to notify the UE of the content of the identification information.

In addition, in a case that the establishment of the first MA PDU session (addition of the user plane resources to the first MA PDU session) has been allowed, at least one piece of the 11th to 21st identification information may be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message.

Note that the SMF and/or AMF may select and determine which type of identification information is to be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, based on each piece of received identification information, and/or the subscriber information, and/or the network capability information, and/or the operator policy, and/or the state of the network, and/or the user registration information, and/or the context held by the SMF and/or the AMF, and/or the like.

Here, the 11th identification information may be the same as the first identification information. In addition, the 12th identification information may indicate an MPTCP capability and/or an ATSSS-LL capability of the network. In addition, the 13th identification information may be the same as the third identification information. In addition, the 14th identification information may be the same as the fourth identification information. In addition, the 15th identification information may be the same as the fifth identification information and, for example, may be SSC mode 2. In addition, the 16th identification information may be the same as the sixth identification information. In addition, the 17th identification information may indicate that the establishment of the first MA PDU session (addition of the user plane resources to the first MA PDU session) has been allowed by the network In addition, the 19th identification information may indicate the non-3GPP access. In addition, the 20th identification information may indicate the ATSSS rules.

In addition, by including and transmitting at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, the UE may be notified that the establishment of the first MA PDU session (addition of the user plane resources to the first MA PDU session) has been allowed, and/or the establishment (addition) of the user plane resources over the non-3GPP access has been allowed, and/or the access type corresponding to the user plane resources of which establishment (addition) has been allowed.

Next, the UE receives the NAS message over the N1 interface (S 1326). In a case that the NAS message is received, the UE can consider that the request from the UE through the PDU session establishment request message has been allowed and/or recognize the content of the information included in the NAS message (messages, containers, and information). That is, the UE can consider that the establishment of the first MA PDU session (addition of the user plane resources to the first MA PDU session) has been allowed, and/or the establishment of the user plane resources over the non-3GPP access has been allowed, and/or recognize the access type corresponding to the user plane resources of which establishment (addition) has been allowed.

With the above operation, the procedure of (B) of FIG. 13 is successfully completed.

In a case that the procedure of (B) of FIG. 13 is successfully completed, the UE becomes in a state in which the user plane resources over the non-3GPP access have been established. In other words, the UE becomes in a state in which the user plane resources over the non-3GPP access have been established (added) in the first MA PDU session using the already-established user plane resources over the 3GPP access. In other words, the UE may become in a state of being able to communicate with the DN using the first MA PDU session using the user plane resources over the 3GPP access and the user plane resources over the non-3GPP access.

Moreover, successful completion of the procedures of (B) of FIG. 13 may mean successful completion of the PDU session establishment procedure.

Next, each step of a procedure for rejecting a request from the UE to be performed in a case that the third condition fulfillment determination is false in FIG. 13 will be described. This procedure may be initiated in a case that the establishment of the first MA PDU session (addition of the user plane resources to the first MA PDU session) is rejected as described above.

First, the SMF transmits a PDU session establishment reject message to the UE via the AMF. Specifically, the SMF transmits the PDU session establishment reject message to the AMF over the N11 interface. In a case that the PDU session establishment request message is received from the SMF, the AMF transmits to the UE an NAS message including the PDU session establishment reject message by using the N1 interface.

Here, the SMF may transmit the PDU session establishment reject message to indicate that the request from the UE made with the PDU session establishment request message has been rejected.

The UE can consider that the request from the UE made with the PDU session establishment request message has been rejected by receiving the PDU session establishment reject message. That is, the UE can consider that the request to establish the SA PDU session has been rejected by the network.

With the above operation, the procedure for rejecting the request of the UE is completed. In addition, the completion of the procedure for rejecting the request of the UE may mean that the PDU session establishment procedure is not successfully completed (is abnormally completed). In this case, user plane resources over the non-3GPP access may not be established. In other words, the UE has no user plane resources over the non-3GPP access established (added) in the first MA PDU session using the already-established user plane resources over the 3GPP access. However, in this case, because the first MA PDU session using the user plane resources over the 3GPP access remains maintained, the UE is in a state of being able to communicate with the DN using this first MA PDU session. In addition, in this case, the remaining steps of FIG. 8 may be skipped.

With the above operation, the PDU session establishment procedure of S808 is completed.

In a case that the PDU session establishment procedure is successfully completed, the UE becomes in a state in which the first MA PDU session has been established using the user plane resources over the 3GPP access and the user plane resources over the non-3GPP access and is in a state of being able to communicate with the DN_300 using the first MA PDU session (S810). Note that the PSA at this time is the UPF_230.

With the above operation, the third PSA modification procedure is completed.

In a case that the third PSA modification procedure is completed, the state transitions from the third communication state illustrated in FIG. 15 (a state in which the first MA PDU session using the user plane resources over the 3GPP access and the first SA PDU session over the non-3GPP access have been established) to the first communication state illustrated in FIG. 2 (a state in which the first MA PDU session using the user plane resources over the 3GPP access and the user plane resources over the non-3GPP access has been established). In addition, as the third PSA modification procedure is performed, the PSAs are modified from the UPF_230 and the UPF_232 to the UPF_230.

Here, although the case that only a PSA used in the user plane resources over the non-3GPP access is modified and a PSA used in the user plane resources over the 3GPP access is not modified has been described in Section 4.2, the embodiment can be applied vice versa, where the access for which a PSA is to be modified is not the non-3GPP access but the 3GPP access. That is, the embodiment can be applied to a case where the access type of which information is exchanged between apparatuses is replaced from the non-3GPP access to the 3GPP access.

### 6. Procedure 1 for Modifying PSA in SSC mode 3

Next, a procedure for modifying a PSA (UPF_230 in the present embodiment) in a case that a first MA PDU session has been established and SSC mode 3 has been applied to the first MA PDU session will be described, the first MA PDU session using user plane resources over the 3GPP access (resources for UE to communicate with the DN_300 over the base station apparatus_110 and the UPF_230) and user plane resources over the non-3GPP access (resources for the UE to communicate with the DN_300 via the base station apparatus_120, the N3IWF_240, and the UPF_230 or resources for the UE to communicate with the DN_300 via the TNAP, TNGF, and UPF_230).

Procedures for modifying a PSA may include a fourth PSA modification procedure and a fifth PSA modification procedure.

Here, the fourth PSA modification procedure is a procedure for modifying a PSA (all PSAs) to be used in a first MA PDU session. In other words, the fourth PSA modification procedure can be said to be a procedure for modifying a PSA used in user plane resources over the 3GPP access and a PSA used in user plane resources over the non-3GPP access among PSAs used in the first MA PDU session.

In addition, the fifth PSA modification procedure is a procedure for modifying a PSA (some PSAs) used in a first MA PDU session. In other words, the fifth PSA modification procedure can be said to be a procedure for modifying only a PSA used in user plane resources over either of the accesses (the 3GPP access or the non-3GPP access) among PSAs used in the first MA PDU session. In other words, the fifth PSA modification procedure can be said to be a procedure for modifying a PSA used in user plane resources over either of the accesses (the 3GPP access or the non-3GPP access) and not modifying a PSA used in user plane resources over the other access (the non-3GPP access or the 3GPP access) among PSAs used in the first MA PDU session.

### 6.1. Fourth PSA Modification Procedure

Next, the fourth PSA modification procedure will be described. As described above, the fourth PSA modification procedure is a procedure for modifying a PSA (all PSAs) used in the first MA PDU session in a case that the first MA PDU session using the user plane resources over the 3GPP access and the user plane resources over the non-3GPP access has been established and SSC mode 3 is applied to the first MA PDU session. Each apparatus performs the fourth PSA modification procedure to transition from the first communication state illustrated in FIG. 2 to the second communication state illustrated in FIG. 14. In addition, as the fourth PSA modification procedure is performed, all PSAs are modified from the UPF_230 to UPF_232.

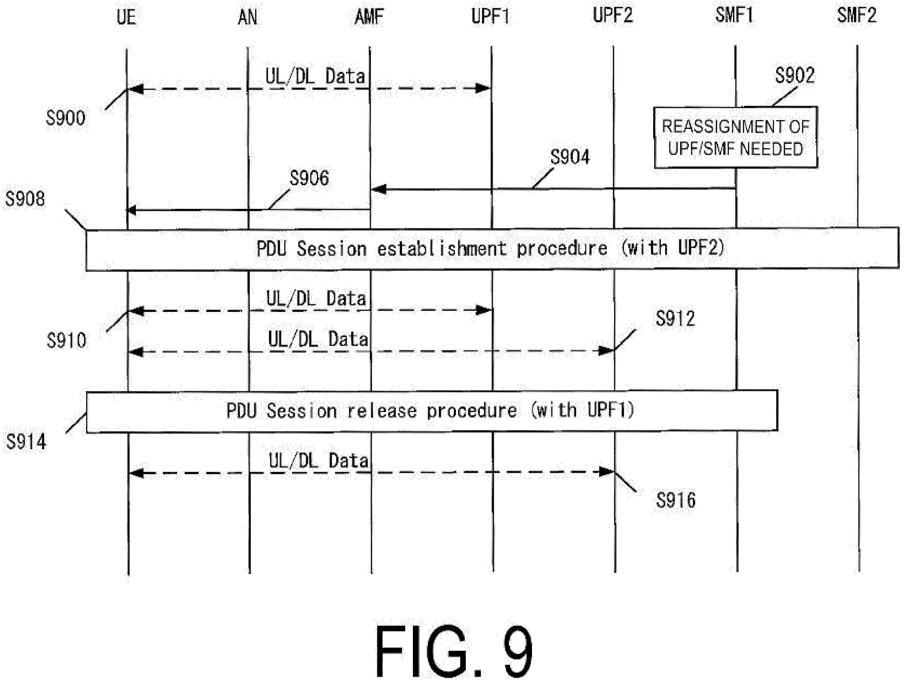

The fourth PSA modification procedure will be described below using FIG. 9. Here, the UPF 1, the UPF 2, and the SMF 1 in FIG. 9 correspond to the UPF_230, the UPF_232, and the SMF_220, respectively.

First, the UE is in a state of being able to transmit and/or receive user data to and/or from the DN_300 using the first MA PDU session (S900). The PSA at this time is the UPF_230 as described above. The UE may or may not actually transmit and/or receive user data in S900.

Next, the SMF determines whether or not reassignment of the UPF_230 (also referred to as a "serving UPF") being used in the first MA PDU session and/or the SMF is needed (S902). The SMF may determine that the UPF_230 and/or the SMF need to be reassigned in a case that, for example, it is not possible to maintain the user plane resources over the 3GPP access and/or the user plane resources over the non-3GPP access, and/or throughputs of communication over the 3GPP access and/or communication over the non-3GPP access are extremely decreased, and/or the UPF_230 is in an overflow state, and/or the UE has moved, and/or an operator policy or a network policy has been modified, and/or there is a request from another NF, and/or the like.

In a case that the SMF has determined that the UPF_230 and/or the SMF do not need to be reassigned, each apparatus may skip, that is, omit the steps from S904. In a case that the SMF has determined that the UPF_230 and/or the SMF need to be reassigned, each apparatus may perform steps from S904. Here, a case that it is determined that the SMF does not need to be reassigned and the UPF_230 needs to be reassigned will be described.

Next, the SMF transmits an N1 SM container, and/or N2 SM information to the AMF (S904). Here, the N1 SM container may include a PDU session modification command message. In addition, the PDU session modification command message may include a PDU session ID, and/or an access type, and/or a cause value. In addition, the N2 SM information may include a PDU session ID and/or an access type. Here, the PDU session ID included in the N1 SM container and/or the N2 SM information is information for identifying a PDU session (a first MA PDU session) for performing reassignment. In addition, the access type may indicate an access desired to be modified, and here, may indicate the 3GPP access and the non-3GPP access. In addition, the cause value may also indicate that re-establishment of the MA PDU session for the same DN is required.

In addition, the SMF may transmit the PDU session modification command message, and/or the N1 SM container, and/or the N2 SM information to indicate a configuration modification of the first MA PDU session of the UE, and/or a configuration modification of the user plane resources over the 3GPP access and the user plane resources over the non-3GPP access in the first MA PDU session, and/or re-establishment of the MA PDU session for the same DN.

Next, the AMF receives the N1 SM container, and/or the N2 SM information from the SMF (S904). In addition, the AMF may receive the PDU session modification command message, and/or the N1 SM container, and/or the N2 SM information to consider that a configuration modification of the first MA PDU session of the UE, and/or a configuration modification of the user plane resources over the 3GPP access and the user plane resources over the non-3GPP access in the first MA PDU session, and/or re-establishment of the MA PDU session for the same DN have been indicated.

Next, the AMF transmits an N2 PDU session request message to the access network (S906). Here, the N2 PDU session request message may include an NAS message and/or the N2 SM information. In addition, the NAS message may also include a PDU session ID and/or an N1 SM container. The access network that has received the N2 session request message transmits the NAS message to the UE (S906).

Here, the access network may be of the 3GPP access or the non-3GPP access. That is, the N2 PDU session request message may be transmitted over the 3GPP access or the non-3GPP access. In addition, which access is to be used to transmit the N2 PDU session request message may be determined by the SMF or the AMF. In a case that the SMF determines an access, the SMF may inform the AMF of information about the access over which the N2 PDU session request message is to be transmitted to allow the AMF to identify the access for the transmission based on the information. In addition, in a case that the AMF determines an access, any access may be identified from among accesses included in the access type received from the SMF.

In a case that the N2 PDU session request message is transmitted over the 3GPP access, the AMF transmits the N2 PDU session request message to the base station apparatus_110, and the base station apparatus_110 that has received the message transmits the NAS message to the UE.

In addition, in a case that the N2 PDU session request message is transmitted over the non-3GPP access, transmission destinations differ depending on whether the non-3GPP access used in the first MA PDU session is Untrusted Non-3GPP Access or Trusted Non-3GPP access.

In a case that the non-3GPP access used in the first MA PDU session is the Untrusted Non-3GPP Access, the AMF transmits the N2 PDU session request message to the N3IWF_240, the N3IWF_240 that has received the message may transmit the NAS message to the base station apparatus_120, and the base station apparatus_120 that has received the message may transmit the NAS message to the UE.

In addition, in a case that the non-3GPP access used in the first MA PDU session is Trusted Non-3GPP Access, the AMF may transmit the N2 PDU session request message to the TNGF, the TNGF that has received the message transmits the NAS message to the TNAP, and the TNAP that has received the message may transmit the NAS message to the UE.

The AMF may transmit the N2 PDU session request message to notify the UE that a configuration modification of the first MA PDU session of the UE, and/or a configuration modification of the user plane resources over the 3GPP access and the user plane resources over the non-3GPP access in the first MA PDU session, and/or re-establishment of the MA PDU session for the same DN have been indicated.

Next, in a case that the UE receives the NAS message, the UE checks the information included in the NAS message. Then, the UE may consider, based on the NAS message and/or the information included in the NAS message, that the configuration modification of the first MA PDU session of the UE, and/or the configuration modification of the user plane resources over the non-3GPP access in the first MA PDU session, and/or the re-establishment of the MA PDU session for the same DN have been indicated. Then, the UE may determine to initiate the PDU session establishment procedure based on the NAS message and/or the information included in the NAS message (S908).

Next, each apparatus performs the PDU session establishment procedure of S908 to establish a (new) second MA PDU session with the same DN (DN_300) as the DN (DN_300) in the first communication state. Note that, in this section, the PDU session establishment procedure is also referred to as an MA PDU session establishment procedure. The MA PDU session establishment procedure will be described with reference to FIG. 13.

In addition, in a case that each apparatus has successfully completed the MA PDU session establishment procedure, the (new) second MA PDU session can be established. Specifically, each apparatus can establish a second MA PDU session using user plane resources over the 3GPP access and user plane resources over the non-3GPP access.

In addition, in a case that the MA PDU session establishment procedure is not successfully completed (is abnormally completed), each apparatus cannot establish a (new) second MA PDU session.

In addition, the MA PDU session establishment procedure may be a procedure initiated by the UE. In addition, by performing the MA PDU session establishment procedure multiple times, each apparatus may establish multiple MA PDU sessions.

In addition, although the description below assumes that the 3GPP access, the non-3GPP access, and the 5G Core Network (5GC) are all managed/operated by the same operator, the embodiments below can be applied to a case that the accesses and network are operated by different operators.

The UE may determine to initiate the MA PDU session establishment procedure to establish the second MA PDU session based on information stored in advance in the UE, and/or information previously received from the access network, and/or information previously received from the core network (including identification information received in the registration procedure, and/or the URSP rules previously received from the PCF, and/or the like), and/or the like.

First, the UE initiates the MA PDU session establishment procedure by transmitting to the AMF an NAS message including the N1SM container including a PDU session establishment request message over the access network (S1300). The NAS message is transmitted over the N1 interface. The NAS message may be an uplink NAS transport (UL NAS TRANSPORT) message.

Here, the access network includes the 3GPP access (also referred to as a 3GPP access network) and the non-3GPP access (also referred to as a non-3GPP access network). In other words, in a case that the UE transmits the NAS message over the 3GPP access, the UE transmits the NAS message to the AMF via the base station apparatus_110. In addition, in a case that the UE transmits the NAS message over the non-3GPP access (untrusted non-3GPP access), the UE transmits the NAS message to the AMF via the base station apparatus_120 and the N3IWF. In addition, in a case that the UE transmits the NAS message over the non-3GPP access (Trusted non-3GPP access), the UE transmits the NAS message to the AMF via the TNAP and the TNGF. As described above, although the communication path to the AMF varies depending on which access is used by the UE to transmit the NAS message, the communication path from the AMF to the SMF may be the same. Here, in the description, it is assumed that the NAS message is transmitted over the 3GPP access.

In addition, by including and transmitting at least one type of the first to tenth identification information in the PDU session establishment request message and/or the N1 SM container and/or the NAS message, the UE can notify the network side of the request from the UE.

In addition, the first identification information is a DNN for identifying the DN serving as a connection destination of the MA PDU session (the second MA PDU session) of which establishment is requested and is preferably configured to the same DNN as the DNN for identifying the DN with which communication is performed in the first MA PDU session.

In addition, the UE may include the second identification information in the PDU session establishment request message and/or the N1 SM container and/or the NAS message to notify the network side whether or not the UE supports the ATSSS function and/or whether or not the UE supports the MPTCP function and/or ATSSS-LL function.

In addition, the third identification information is a PDU session ID for identifying the MA PDU session (the second MA PDU session) of which establishment is requested, and needs to be configured to a PDU session ID different from the PDU session ID configured for the first MA PDU session.

In addition, the fourth identification information is a PDU session type of the MA PDU session (the second MA PDU session) of which establishment is requested, and is preferably configured to the same PDU session type as the PDU session type configured for the first MA PDU session.

In addition, the fifth identification information is an SSC mode of the MA PDU session (the second MA PDU session) of which establishment is requested, and is preferably configured to an SSC mode configured for the first MA PDU session, that is, SSC mode 2, but may be configured to SSC mode 1 or 3.

In addition, the sixth identification information is S-NSSAI of the MA PDU session (the second MA PDU session) of which establishment is requested, and is preferably configured to S-NSSAI allowed for both accesses (the 3GPP access and the non-3GPP access) by the network in the Registration procedure.

In addition, by including the seventh identification information indicating the MA PDU Request in the PDU session establishment request message and/or the N1 SM container, and/or the NAS message, the UE may notify the network side that the PDU session establishment request message has been transmitted to establish a (new) second MA PDU session and/or that the ATSSS-LL function and/or the MPTCP function are applied to steer the traffic of the second MA PDU session.

In addition, the eighth identification information may indicate a PDU session ID for indicating the PDU session (the first MA PDU session) that is scheduled to be released. In addition, by transmitting the eighth identification information, it may be indicated that the first MA PDU session is scheduled to be released.

In addition, the ninth identification information may indicate an access corresponding to user plane resources in the PDU session (the first MA PDU session) that is scheduled to be released. That is, the ninth identification information may indicate the 3GPP access or the non-3GPP access. In addition, as for the non-3GPP access, the ninth identification information may individually provide a notification of untrusted non-3GPP access or a notification of Trusted non-3GPP access. In other words, the ninth identification information may indicate the 3GPP access and the non-3GPP access (untrusted non-3GPP access) or the 3GPP access and the non-3GPP access (Trusted non-3GPP access). In addition, by including the eighth and ninth identification information together, it may be indicated that the user plane resources over the 3GPP access and the user plane resources over the non-3GPP access are scheduled to be released in the first MA PDU session.

Note that the UE may include and transmit the first to tenth identification information in a control message of a lower layer than the NAS layer (e.g., an RRC layer, a MAC layer, an RLC layer, or a PDCP layer) or a control message of a higher layer than the NAS layer.

Next, in a case that the NAS message is received, the AMF can consider that the UE has made a request, and/or recognize the content of the information and the like (messages, containers, and information) included in the NAS message.

Here, the AMF may reject the establishment of the second MA PDU session in a case that the UE has been registered with both accesses and the S-NSSAI indicated by the sixth identification information received from the UE is not allowed for either access. In addition, the AMF may reject the establishment of the second MA PDU session in a case that the AMF does not support the ATSSS function.

In addition, in a case that the establishment of the second MA PDU session is to be rejected, each apparatus may skip, that is, omit the steps from S1302. In addition, the establishment of the second MA PDU session may be rejected in a case that the MA PDU session establishment procedure is not successfully completed.

In addition, in a case that the establishment of the second MA PDU session is to be rejected, the AMF may transmit an NAS message including information indicating that the establishment of the second MA PDU session is rejected to the UE. In addition, at this time, the AMF does not need to transmit to the SMF at least some of the information and the like (messages, containers, and information) included in the NAS message received from the UE.

In addition, in a case that the establishment of the second MA PDU session is to be rejected, the AMF may transmit to the SMF information indicating that the establishment of the second MA PDU session is to be rejected and the SMF may transmit to the UE an NAS message including the N1 SM container including the PDU session establishment reject message. At this time, the PDU session establishment reject message, and/or the N1 SM container, and/or the NAS message may include the information indicating that the establishment of the second MA PDU session is to be rejected.

Next, the AMF selects the SMF as a destination to which at least some of the information and the like (messages, containers, and information) included in the NAS message received from the UE is to be transferred (S1302). Note that the AMF may select the SMF as a transfer destination based on information included in the NAS message (messages, containers, and information), and/or the subscriber information, and/or the capability information of the network, and/or the operator policy, and/or the state of the network, and/or the user registration information, and/or context held by the AMF, and/or the like. In addition, the AMF may select the SMF supporting the MA PDU session and/or the ATSSS function. Here, it is assumed that the SMF_220 supporting the MA PDU session and/or the ATSSS function has been selected.

Next, the AMF transmits, to the selected SMF, at least some of the information and the like (messages, containers, and information) included in the NAS message received from the UE over the N11 interface (S1304). The AMF may transmit, to the SMF, information indicating that the UE has been registered with both accesses.

Next, in a case that information and the like (messages, containers, and information) transmitted from the AMF are received, the SMF can consider that the UE has made a request and/or recognize the content of the information and the like (messages, containers, and information) received from the AMF.

Here, the SMF may or may not perform the third condition fulfillment determination. The third condition fulfillment determination may be intended to determine whether or not to accept the request from the UE. In the third condition fulfillment determination, the SMF determines whether the third condition fulfillment determination is true or false. In a case that the third condition fulfillment determination is determined to be true, the SMF may initiate the procedure of (A) and/or (B) of FIG. 13. In addition, in a case that the third condition fulfillment determination is determined to be false, a procedure for rejecting the request from the UE may be initiated.

Note that the third condition fulfillment determination may be performed based on information received from the AMF (messages, containers, and information), and/or subscriber information, and/or network capability information, and/or the operator policy, and/or the state of the network, and/or user registration information, and/or the context held by the SMF, and/or the like.

For example, in a case that the network allows the request from the UE, the third condition fulfillment determination may be determined to be true. In addition, in a case that the network does not allow the request from the UE, the third condition fulfillment determination may be determined to be false. Furthermore, in a case that the network to which the UE is connected and/or an apparatus in the network supports the function requested by the UE, the third condition fulfillment determination may be determined to be true, and in a case that network and/or the apparatus does not support the function requested by the UE, the third condition fulfillment determination may be determined to be false. Moreover, in a case that the transmitted and/or received identification information is allowed, the third condition fulfillment determination may be determined to be true, and in a case that the transmitted and/or received identification information is not allowed, the third condition fulfillment determination may be determined to be false. In addition, in a case that the network allows establishment of a second MA PDU session (allows establishment of a second MA PDU session using user plane resources over the 3GPP access and user plane resources over the non-3GPP access), the third condition fulfillment determination may be determined to be true. In addition, in a case that the network rejects establishment of a second MA PDU session (rejects establishment of a second MA PDU session using user plane resources over the 3GPP access and user plane resources over the non-3GPP access), the third condition fulfillment determination may be determined to be false. Note that conditions for determining whether the third condition fulfillment determination is true or false may not be limited to the above-described conditions.

Next, each step of the procedure of (A) of FIG. 13 will be described.

First, the SMF may select the PCF. For example, in a case that the SMF the seventh identification information indicates the Initial request or an MA PDU Request, that is, in a case that the present procedure is performed to newly establish a (second) MA PDU session, the SMF may select an appropriate PCF based on information received from the AMF, or the like. For example, the SMF may select a PCF supporting the ATSSS function. In addition, the SMF may use the PCF that has already been selected, that is, the PCF that has been used in the first MA PDU session, in a case that the seventh identification information indicates Existing PDU Session. In other words, a new PCF may or may not be selected.

Next, the SMF may transmit at least some of the information and the like (messages, containers, and information) received from the AMF to the PCF (S1306).

Furthermore, in a case that the SMF determines to allow the establishment of a second MA PDU session, the SMF may further transmit, to the PCF, "information indicating that the establishment of the second MA PDU session has been allowed" and/or "information indicating that the establishment of the user plane resources over the 3GPP access and user plane resources over the non-3GPP access has been allowed" and/or "information (access type) indicating the access corresponding to the user plane resources allowed to be established". Here, the "information (access type) indicating the access corresponding to the user plane resources allowed to be established" may indicate the 3GPP access and/or the non-3GPP access.

Next, in a case that the information and the like (messages, containers, and information) transmitted from the SMF are received, the PCF can consider that the UE has made a request the establishment of the second MA PDU session and/or recognize the content of the information and the like (messages, containers, and information) received from the SMF.

Note that the PCF may further make determination similar to the above-described determination by the SMF based on the information received from the SMF (messages, containers, and information), and/or the operator policy, and/or the subscriber information, and/or the like. In this case, information similar to the information transmitted from the SMF to the PCF may be transmitted from the PCF to the SMF.

In addition, in a case that the PCF detects that the above-described determination has been made by the SMF, the PCF may not make (may skip) the determination.

In addition, the above-described determination may be made only by the PCF without being made by the SMF. In this case, the information or the like (messages, containers, and information) transmitted from the SMF to the PCF may be only at least a portion (messages, containers, and information) received from the AMF. In other words, in a case that the above-described determination has been made by the SMF, the information generated by the SMF and additionally transmitted to the PCF may not be transmitted. In such a case, in a case that the PCF determines to allow the establishment of a second MA PDU session, the PCF may further transmit, to the SMF, "information indicating that the establishment of the second MA PDU session has been allowed" and/or "information indicating that the establishment of the user plane resources over the 3GPP access and user plane resources over the non-3GPP access has been allowed" and/or "information (access type) indicating the access corresponding to the user plane resources allowed to be established" (S1306). Here, the "information (access type) indicating the access corresponding to the user plane resources allowed to be established" may indicate the 3GPP access and/or the non-3GPP access.

Then, in a case that the PCF detects that the establishment of the second MA PDU session has been allowed (the establishment of the second MA PDU session using the user plane resources over the 3GPP access and the user plane resources over the non-3GPP access) based on the information received from the SMF (messages, containers, and information), or the PCF allows the establishment of the second MA PDU session (the establishment of the second MA PDU session using the user plane resources over the 3GPP access and the user plane resources over the non-3GPP access has been allowed) based on the information received from the SMF (messages, containers, and information), the PCF may generate PCC rules for the second MA PDU session.

Then, in a case that the PCF has generated the PCC rules for the second MA PDU session, the PCF may transmit the PCC rules to the SMF. In addition, the PCF may explicitly indicate that the establishment of the second MA PDU session has been allowed by transmitting, to the SMF, the information indicating that the establishment of the second MA PDU session has been allowed, or may implicitly indicate that the establishment of the second MA PDU session has been allowed by transmitting the PCC rules to the SMF.

In addition, in a case that the PCF has generated a policy for an SA PDU session, the PCF may transmit the policy to the SMF.

Next, in a case that the information transmitted from the PCF is received, the SMF can recognize the content of the information. Then, in a case that the PCC rules are received from the PCF, the SMF generates ATSSS rules (20th identification information) and N4 rules from the PCC rules. Here, the ATSSS rules are information for controlling the second MA PDU session transmitted from the SMF to the UE, and the N4 rules are information for controlling the second MA PDU session transmitted from the SMF to the UPF. In addition, the SMF may associate (or map) the PCC rules, the ATSSS rules and the N4 rules with (or to) one another for management.

In addition, in a case that the fourth identification information indicates any of IPv4, IPv6, or IPv4v6, the SMF may assign an IP address or an IP prefix to the second MA PDU session. In addition, in a case that the fourth identification information indicates unstructured, the SMF may assign an IPv6 address to the second MA PDU session. In addition, in a case that the fourth identification information indicates Ethernet (trade name), the SMF may assign neither a MAC address nor an IP address to the second MA PDU session.

Next, the SMF selects the UPF with which the second MA PDU session is to be established and transmits an N4 session establishment request message to the selected UPF over the N4 interface (S1308). Here, the SMF may select one or more UPFs based on the information received from the AMF, and/or the information received from the PCF, and/or the subscriber information, and/or the network capability information, and/or the operator policy, and/or the state of the network, and/or the user registration information, and/or the context held by the SMF, and/or the like. In addition, in a case that multiple UPFs are selected, the SMF may transmit an N4 session establishment request message to each of the UPFs. In addition, in a case that the establishment of the second MA PDU session is allowed, the SMF may select a UPF supporting the MA PDU session and/or the ATSSS function. Here, it is assumed that the UPF_232 has been selected.

In a case that the second MA PDU session is allowed to be established, the N4 rules may be included and transmitted in the N4 session establishment request message.

Next, in a case that the N4 session establishment request message is received (S1308), the UPF can recognize the content of the information received from the SMF. In addition, the UPF creates a context for the second MA PDU session. In addition, the UPF may be configured to operate according to the N4 rules in a case that it has received the N4 rules from the SMF. In other words, the UPF may configure whether to route the downlink traffic in the established second MA PDU session over the 3GPP access or the non-3GPP access. Note that application of the N4 rules to UPF may be performed after S1318. Furthermore, the UPF may transmit an N4 session establishment response message to the SMF over the N4 interface based on the reception of the N4 session establishment request message and/or the creation of the context for the second MA PDU session (S1310).

Next, in a case that the N4 session establishment response message is received as a response message to the N4 session establishment request message, the SMF can recognize the content of the information received from the UPF. In addition, the SMF may perform address assignment of an address to be assigned to the UE based on the reception of the PDU session establishment request message, and/or the selection of the UPF, and/or the reception of the N4 session establishment response message, and/or the like.

Next, the SMF may transmit to the AMF the N1 SM container and/or N2 SM information, and/or the PDU session ID (the 13th identification information), and/or access type (the 19th identification information) over the N11 interface, based on the reception of the PDU session establishment request message and/or the selection of the UPF, and/or the reception of the N4 session establishment response message, and/or completion of address assignment of the address to be assigned to the UE, and/or the like (S1312). Here, the N1 SM container may include a PDU session establishment accept message, and the PDU session establishment accept message may include an ATSSS container Information Element (IE).

Next, the AMF that has received the N1 SM container and/or the N2 SM information, and/or the PDU session ID (the 13th identification information), and/or the access type (the 19th identification information) transmits the NAS message to the UE over the access network (S1314) (S1316). Here, the NAS message is transmitted over the N1 interface. Furthermore, the NAS message may be a downlink NAS transport (DL NAS transport) message.

Specifically, in a case that the AMF transmits an N2 PDU session request message to the access network (S1314), the access network that has received the N2 PDU session request message transmits the NAS message to the UE (S1316). Here, the N2 PDU session request message may include the NAS message and/or the N2 SM information. In addition, the NAS message may include the PDU session ID (the 13th identification information) and/or the access type (the 19th identification information) and/or the N1 SM container. The N1 SM container may include the PDU session establishment accept message.

Here, the access network includes the 3GPP access and the non-3GPP access. In other words, in a case that the AMF transmits the NAS message over the 3GPP access, the AMF transmits the NAS message to the UE via the base station apparatus_110. In addition, in a case that the AMF transmits the NAS message over the non-3GPP access (untrusted non-3GPP access), the AMF transmits the NAS message to the UE via the N3IWF and the base station apparatus_120. In addition, in a case that the AMF transmits the NAS message over the non-3GPP access (Trusted non-3GPP access), the AMF transmits the NAS message to the UE via the TNGF and the TNAP.

In addition, although the AMF preferably transmits the NAS message to the UE by using an access identical to the access over which the AMF received the NAS message from the UE, the AMF may transmit the NAS message over a different access. Here, description will be continued on the assumption that the NAS message is transmitted over the 3GPP access (the base station apparatus_110).

In addition, the PDU session establishment accept message may be a response message to the PDU session establishment request. In addition, the PDU session establishment accept message may indicate that the establishment of the PDU session has been accepted.

Here, the SMF and/or AMF may transmit the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message to indicate that at least some of the request from the UE made using the PDU session establishment request message has been accepted.

In addition, the SMF and/or AMF may include and transmit at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message. The SMF and/or AMF may transmit at least one piece of the identification information to notify the UE of the content of the identification information.

For example, in a case that the establishment of the second MA PDU session has been allowed (the establishment of the user plane resources for the 3GPP access and the user plane resources for the non-3GPP access has been allowed), at least one piece of the 11th to 21st identification information may be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message.

Note that the SMF and/or AMF may select and determine which type of identification information is to be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message based on each piece of received identification information, and/or the subscriber information, and/or the network capability information, and/or the operator policy, and/or the state of the network, and/or the user registration information, and/or the context held by the SMF and/or the AMF, and/or the like.

Here, the 11th identification information may be the same as the first identification information. In addition, the 12th identification information may indicate an MPTCP capability and/or an ATSSS-LL capability of the network. In addition, the 13th identification information may be the same as the third identification information. In addition, the 14th identification information may be the same as the fourth identification information. In addition, the 15th identification information may be the same as the fifth identification information and, for example, may be SSC mode 2. In addition, the 16th identification information may be the same as the sixth identification information. In addition, the 17th identification information may indicate that the network has allowed the establishment of the second MA PDU session. In addition, the 19th identification information may indicate the 3GPP access or the non-3GPP access. In addition, the 20th identification information may indicate the ATSSS rules.

In addition, by including and transmitting at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, the UE may be notified of the fact that the establishment of the second MA PDU session has been allowed, and/or the fact that the establishment of the user plane resources over the 3GPP access and the user plane resources over the non-3GPP access has been allowed, and/or the access type corresponding to the user plane resources allowed to be established.

Next, the UE receives the NAS message over the N1 interface (S1316). In a case that the NAS message is received, the UE can consider that the request from the UE through the PDU session establishment request message has been allowed and/or recognize the content of the information included in the NAS message and the like (messages, containers, and information). That is, the UE can consider that the establishment of the second MA PDU session has been allowed, and/or the establishment of the user plane resources over the 3GPP access and the user plane resources over the non-3GPP access has been allowed, and/or recognize the access type corresponding to the user plane resources allowed to be established.

With the above operation, the procedure of (A) of FIG. 13 is completed successfully.

At this stage, the UE becomes in a state in which the user plane resources over the 3GPP access has been established. The UE may become in a state of being able to communicate with the DN using the new (second) MA PDU session using the user plane resources over the 3GPP access. In other words, the UE may be in a state of being able to communicate with the DN using the second MA PDU session using the user plane resources over the 3GPP access newly established through the procedure of (A) of FIG. 13, in addition to the first MA PDU session using the user plane resources over the 3GPP access and the user plane resources over the non-3GPP access. However, a state in which the user plane resources over the non-3GPP access have not been established for the second MA PDU session may be allowed.

Next, each step of the procedure of (B) of FIG. 13 will be described.

First, the SMF may transmit an N4 session modification request message to the already selected UPF_232 over the N4 interface (S 1318). Here, the N4 session modification request message does not need to be transmitted including the N4 rules, but may include the N4 rules.

Next, in a case that the N4 session establishment request message is received (S1318), the UPF_232 can recognize the content of the information received from the SMF. Then, the UPF_232 may transmit an N4 session modification response message to the SMF over the N4 interface (S1320).

Next, in a case that the N4 session modification response message is received, the SMF can recognize the content of the information received from the UPF.

The SMF then transmits N2 SM information and/or a PDU session ID (the 13th identification information) and/or access type (the 19th identification information) to the AMF over the N11 interface (S1322). Here, although the SMF does not need to transmit the N1 SM container transmitted in S 13 12 to the AMF, it may transmit the container.

Next, the AMF receives the N2 SM information, and/or the PDU session ID (the 13th identification information), and/or the access type (the 19th identification information).

Next, in a case that the second MA PDU session uses an untrusted non-3GPP access, the AMF may transmit an N2 PDU session request message to the N3IWF. In addition, in a case that the second MA PDU session uses a Trusted non-3GPP access, the AMF may transmit an N2 PDU session request message to the TNGF and/or TNAP. Here, the N2 PDU session request message may include the N2 SM information. In addition, although the N2 PDU session request message does not need to include the NAS message, it may include the message. Here, it is assumed that the N2 PDU session request message is transmitted to the N3IWF (S1324).

Next, the N3IWF performs a procedure for establishing an IPsec child security association (SA) between the N3IWF and the UE over the access network (S1326).

Specifically, the N3IWF transmits an IKE Create_Child_SA request message to the UE according to the IKEv2 standard described in RFC 7296 to establish IPsec Child SA in the second MA PDU session (user plane resources over the non-3GPP access in the second MA PDU session). Here, the IKE Create_Child_SA request message may indicate that the requested IPsec Child SA operates in the tunnel mode. In addition, the IKE Create_Child_SA request message may also include the PDU session ID associated with this Child SA.

Next, in a case that the IPsec Child SA is accepted, the UE transmits an IKE Create_Child_SA response message to the N3IWF.

In addition, the SMF and/or AMF may include and transmit at least one piece of the 11th to 21st identification information in the PDU session ID (the 13th identification information), and/or the access type (the 19th identification information), and/or the N2 SM information, and/or the N2 PDU session request message. The SMF and/or the AMF may transmit at least one piece of the identification information to notify the UE and/or the N3IWF and/or the access network of the content of the identification information.

Note that the content of the 11th to 21st identification information may be the same as the content in the procedure of (A).

However, in a case that the 19th identification information only indicates 3GPP access in the procedure of (A), the 19th identification information in the procedure of (B) may indicate non-3GPP access only.

The UE may consider that the user plane resources over the non-3GPP access have been established based on the reception of the IKE Create_Child_SA request message, and/or the transmission of the IKE Create_Child_SA response message.

Note that application of the N4 rules to the UPF may be performed after S1318, and application of the ATSSS rules to the UE may be performed at this stage.

With the above operation, the procedure of (B) of FIG. 13 is successfully completed.

In a case that the procedure of (B) of FIG. 13 is successfully completed, the user plane resources over the non-3GPP access is in a state of being established.

At this stage, the UE becomes in a state in which the user plane resources over the non-3GPP access have been established. The UE may become in a state of being able to communicate with the DN using the new (second) MA PDU session using the user plane resources over the 3GPP access. In other words, the UE may be in a state of being able to communicate with the DN using the second MA PDU session using the user plane resources over the 3GPP access newly established through the procedure of (A) of FIG. 13 and the user plane resources over the non-3GPP access newly established through the procedure of (B) of FIG. 13, in addition to the first MA PDU session using the user plane resources over the 3GPP access and the user plane resources over the non-3GPP access.

In addition, in a case that the procedures of (A) and (B) of FIG. 13 are successfully completed, the UE may become in a state of being able to communicate with the DN using the first MA PDU session and the second MA PDU session (S910) (S912). Moreover, the successful completion of the procedures of (A) and (B) of FIG. 13 may mean successful completion of the PDU session establishment procedure.

Next, each step of a procedure for rejecting a request from the UE to be performed in a case that the third condition fulfillment determination is false in FIG. 13 will be described. This procedure may be initiated in a case that the establishment of the second MA PDU session is rejected as described above.

First, the SMF transmits a PDU session establishment reject message to the UE via the AMF. Specifically, the SMF transmits the PDU session establishment reject message to the AMF over the N11 interface. In a case that the PDU session establishment request message is received from the SMF, the AMF transmits an NAS message including the PDU session establishment reject message to the UE by using the N1 interface.

Here, the SMF may transmit the PDU session establishment reject message to indicate that the request from the UE made with the PDU session establishment request message has been rejected.

The UE can consider that the request from the UE made with the PDU session establishment request message has been rejected by receiving the PDU session establishment reject message. That is, the UE can consider that the request to establish a second MA PDU session has been rejected by the network.

With the above operation, the procedure for rejecting the request of the UE is completed. In addition, the completion of the procedure for rejecting the request of the UE may mean that the PDU session establishment procedure is not successfully completed (is abnormally completed). In this case, the (new) second MA PDU session cannot be established. Also, in this case, although the (new) second MA PDU session cannot be established, the UE is in a state of being able to communicate with the DN using the first MA PDU session because the first MA PDU session is maintained. In addition, in this case, the remaining steps of FIG. 9 may be skipped.

With the above operation, the PDU session establishment procedure of S908 is completed.

Next, the PDU session release procedure of S914 will be described with reference to FIG. 12.

The PDU session release procedure is initiated by the SMF transmitting an N4 session release request message to the UPF_230 (S 1200). The N4 session release request message may include an N4 session ID and/or an access type. The N4 session ID may be an identifier for generating an SMF and identifying an N4 session provided for the UPF and/or context of the N4 session in a case that a new PDU session is established or the UPF for an established PDU session is modified. In addition, the N4 session ID is information stored in the SMF and the UPF. In addition, the SMF may also store the relationship between the N4 session ID and the PDU session ID for given UE. In addition, the access type may indicate access for the first MA PDU session desired to release in user plane resources, and here may indicate the 3GPP access and the non-3GPP access. In addition, the SMF may transmit the N4 session release request message to the UPF_230 to request release of the first MA PDU session of the UE and/or release of user plane resources over the 3GPP access and user plane resources over the non-3GPP access in the first MA PDU session and/or release of the N4 sessions corresponding to the first MA PDU session. Note that the SMF may not transmit the access type to the UPF_230.

Next, in a case that the N4 session release request message is received, the UPF_230 checks information included in the N4 session release request message. The UPF_230 may release, for the SMF, the first MA PDU session of the UE and/or release user plane resources over the 3GPP access and user plane resources over the non-3GPP access in the first MA PDU session and/or release the N4 session corresponding to the first MA PDU session based on the N4 session release request message and/or information included in the N4 session release request message.

In addition, by transmitting to the SMF the N4 session release response message, the UPF_230 may inform the SMF that the N4 session release request message has been received, and/or the first MA PDU session of the UE has been released, and/or user plane resources over the 3GPP access and user plane resources over the non-3GPP access have been released in the first MA PDU session, and/or the N4 session corresponding to the first MA PDU session has been released (S1202). The N4 session release response message may include the N4 session ID and/or access type included in the N4 session release request message. Note that, in a case that the UPF_230 has not received an access type from the SMF, the message may include no access type. In addition, the message may include an access type even in a case that the UPF_230 has not received an access type from the SMF. In the case that the access type is included, it may indicate the 3GPP access and the non-3GPP access.

Next, in a case that the N4 session release response message is received, the SMF checks the information included in the N4 session release response message. The SMF may consider that the UPF_230 has received the N4 session release request message, and/or the UPF_230 has released the first MA PDU session of the UE, and/or the UPF_230 has released user plane resources over the 3GPP access and user plane resources over the non-3GPP access in the first MA PDU session, and/or the UPF_230 has released the N4 session corresponding to the first MA PDU session, based on the N4 session release response message and/or the information included in the N4 session release response message.

Then, the SMF transmits an N1 SM container, and/or an N2 SM resource release request message to the AMF (S 1204). In addition, although the SMF transmits a PDU session release command message, the PDU session release command message may be included and transmitted in the N1 SM container. The PDU session release command message may include a PDU session ID, and/or an access type. In addition, the N2 SM resource release request message may include a PDU session ID and/or an access type. Here, the PDU session ID is information for identifying the first MA PDU session. In addition, the access type may indicate an access desired to release, and here, may include the 3GPP access and the non-3GPP access. In addition, the SMF may transmit the PDU session release command message, and/or the N1 SM container, and/or the N2 SM resource release request message to indicate the release of the first MA PDU session of the UE.

Next, in a case that the N1 SM container and/or the N2 SM resource release request message is received, the AMF checks the information included in the N1 SM container and/or the N2 SM resource release request message. The AMF may receive the PDU session release command message, and/or the N1 SM container, and/or the N2 SM resource release request message to consider that the release of the first MA PDU session of the UE has been indicated.

Then, the AMF transmits the NAS message to the UE over the access network (S1206 and S1208). Here, the NAS message includes the N1 SM container. That is, the PDU session release command message received from the SMF may be included and transmitted in the NAS message. In addition, the access network may be of the 3GPP access or the non-3GPP access. In other words, the NAS message is transmitted over the 3GPP access or the non-3GPP access. In addition, whether to transmit the NAS message over the 3GPP access or the non-3GPP access may be determined by the SMF or the AMF. In a case that the SMF determines an access, the SMF may inform the AMF of information about the access over which the NAS message is to be transmitted to allow the AMF to identify the access for the transmission based on the information. In addition, in a case that the AMF determines an access, any access may be identified from among accesses included in the access type received from the SMF.

In a case that the NAS message is transmitted over the 3GPP access, the AMF transmits the NAS message to the base station apparatus_110, and the base station apparatus_110 that has received the NAS message transmits the NAS message to the UE.

In addition, in a case that the NAS message is transmitted over the non-3GPP access, transmission destinations differ depending on whether the non-3GPP access used in the first MA PDU session is Untrusted Non-3GPP Access or Trusted Non-3GPP access.

In a case that the non-3GPP access used in the first MA PDU session is the Untrusted Non-3GPP Access, the AMF transmits the NAS message to the N3IWF_240, the N3IWF_240 that has received the NAS message may transmit the NAS message to the base station apparatus_120, and the base station apparatus_120 that has received the NAS message may transmit the NAS message to the UE.

In addition, in a case that the non-3GPP access used in the first MA PDU session is Trusted Non-3GPP Access, the AMF may transmit the NAS message to the TNGF, the TNGF that has received the NAS message transmits the NAS message to the TNAP, and the TNAP that has received the NAS message may transmit the NAS message to the UE.

The AMF may transmit the NAS message to notify the UE that release of the first MA PDU session of the UE and/or release of user plane resources over the 3GPP access and user plane resources over the non-3GPP access in the first MA PDU session has been indicated.

In a case that the UE receives the NAS message, the UE checks the information included in the NAS message. The UE may receive a PDU session release command message, and/or an N1 SM container, and/or an NAS message to consider that the release of the first MA PDU session of the UE has been indicated. Then, the UE may release the first MA PDU session based on the NAS message and/or the information included in the NAS message.

With the above operation, the PDU session release procedure of S914 is completed. In a case that the PDU session release procedure is completed, although the first MA PDU session is released, the UE is in a state of being able to communicate with the DN_300 using the second MA PDU session because the second MA PDU session has been established (S916).

With the above operation, the fourth PSA modification procedure is completed.

In a case that the fourth PSA modification procedure is completed, the state transitions from the first communication state illustrated in FIG. 2 (a state in which the first MA PDU session using the user plane resources over the 3GPP access and the user plane resources over the non-3GPP access has been established) to the second communication state illustrated in FIG. 14 (a state in which the second MA PDU session using the user plane resources over the 3GPP access and the user plane resources over the non-3GPP access has been established). In addition, the execution of the fourth PSA modification procedure causes the PSA to be modified from the UPF_230 to UPF_232.

### 6.2. Fifth PSA Modification Procedure

Next, the fifth PSA modification procedure will be described. As described above, the fifth PSA modification procedure is a procedure for modifying a PSA (some PSAs) used in the first MA PDU session in a case that the first MA PDU session using the user plane resources over the 3GPP access and the user plane resources over the non-3GPP access has been established and SSC mode 3 is applied to the first MA PDU session. Here, a case that only a PSA used in the user plane resources over the non-3GPP access is modified and a PSA used in the user plane resources over the 3GPP access is not modified will be described. Each apparatus performs the fifth PSA modification procedure to transition from the first communication state illustrated in FIG. 2 to the third communication state illustrated in FIG. 15. In addition, the execution of the fifth PSA modification procedure causes the PSAs to be modified from the UPF_230 to the UPF_230 and the UPF_232.

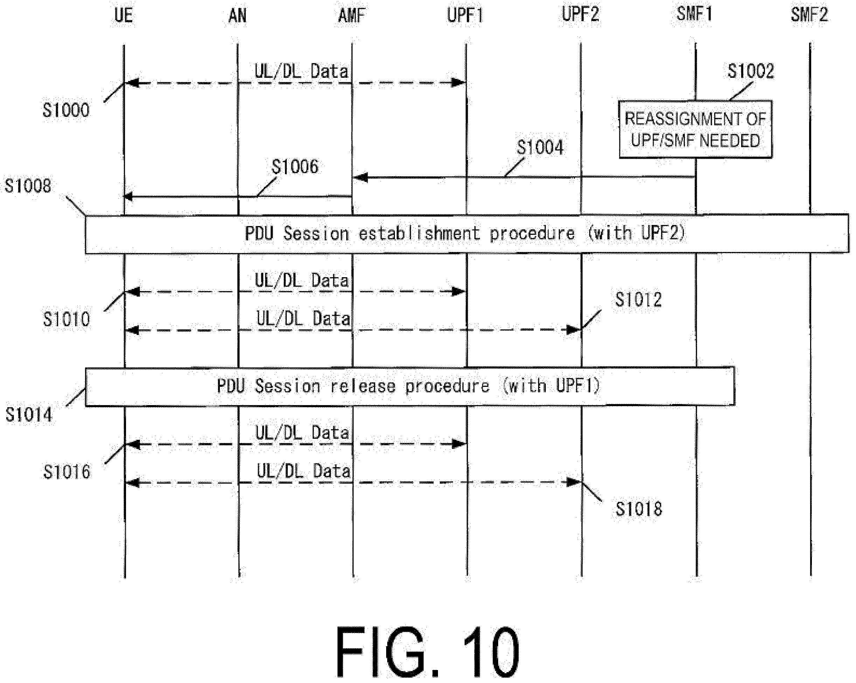

Next, the fifth PSA modification procedure will be described using FIG. 10. Here, the UPF 1, the UPF 2, and the SMF 1 in FIG. 9 correspond to the UPF_230, the UPF_232, and the SMF_220, respectively.

First, the UE is in a state of being able to transmit and/or receive user data to and/or from the DN_300 using the first MA PDU session (S1000). The PSA at this time is the UPF_230 as described above. The UE may or may not actually transmit and/or receive user data in S1000.

Next, the SMF determines whether reassignment of the UPF_230 (also referred to as a "serving UPF") and/or the SMF being used in the first MA PDU session is needed or not (S1002). The SMF may determine that the UPF_230 and/or the SMF need to be reassigned in a case that, for example, it is not possible to maintain the user plane resources over the non-3GPP access, and/or throughputs of communication over the non-3GPP access is extremely decreased, and/or the UPF_230 is in an overflow state, and/or the UE has moved, and/or an operator policy or a network policy has been modified, and/or there is a request from another NF, and/or the like.

In a case that the SMF has determined that the UPF_230 and/or the SMF do not need to be reassigned, each apparatus may skip, that is, omit the steps from S1004. In a case that the SMF has determined that the UPF_230 and/or the SMF need to be reassigned, each apparatus may perform steps from S1004. Here, a case that it is determined that the SMF does not need to be reassigned and the UPF_230 needs to be reassigned will be described.

Next, the SMF transmits an N1 SM container, and/or N2 SM information to the AMF (S1004). Here, the N1 SM container may include a PDU session modification command message. In addition, the PDU session modification command message may include a PDU session ID, and/or an access type, and/or a cause value. In addition, the N2 SM information may include a PDU session ID and/or an access type. Here, the PDU session ID included in the N1 SM container and/or the N2 SM information is information for identifying a PDU session (a first MA PDU session) for performing reassignment. In addition, the access type may also indicate access desired to modify, and here, it may indicate the non-3GPP access. In addition, the cause value may also indicate that establishment of an SA PDU session for the same DN is required.

The SMF may transmit the PDU session modification command message, and/or the N1 SM container, and/or the N2 SM information to indicate a configuration modification of the first MA PDU session of the UE, and/or a configuration modification of the user plane resources over the non-3GPP access in the first MA PDU session, and/or establishment of the SA PDU session for the same DN.

Next, the AMF receives the N1 SM container, and/or the N2 SM information from the SMF (S1004). The AMF may receive the PDU session modification command message, and/or the N1 SM container, and/or the N2 SM information to consider that the configuration modification of the first MA PDU session of the UE, and/or the configuration modification of the user plane resources over the non-3GPP access in the first MA PDU session, and/or establishment of the SA PDU session for the same DN have been indicated.

Next, the AMF transmits an N2 PDU session request message to the access network (S1006). Here, the N2 PDU session request message may include an NAS message and/or the N2 SM information. In addition, the NAS message may also include a PDU session ID and/or an N1 SM container. Then, the access network that has received the N2 session request message transmits the NAS message to the UE (S1006).

Here, the access network may be of the 3GPP access or the non-3GPP access. That is, the N2 PDU session request message may be transmitted over the 3GPP access or the non-3GPP access. In addition, which access is to be used to transmit the N2 PDU session request message may be determined by the SMF or the AMF. In a case that the SMF determines an access, the SMF may inform the AMF of information about the access over which the N2 PDU session request message is to be transmitted to allow the AMF to identify the access for the transmission based on the information. In addition, in a case that the AMF determines an access, any access may be identified from among accesses included in the access type received from the SMF.

In a case that the N2 PDU session request message is transmitted over the 3GPP access, the AMF transmits the N2 PDU session request message to the base station apparatus_110, and the base station apparatus_110 that has received the message transmits the NAS message to the UE.

In addition, in a case that the N2 PDU session request message is transmitted over the non-3GPP access, transmission destinations differ depending on whether the non-3GPP access used in the first MA PDU session is Untrusted Non-3GPP Access or Trusted Non-3GPP access.

In a case that the non-3GPP access used in the first MA PDU session is the Untrusted Non-3GPP Access, the AMF transmits the N2 PDU session request message to the N3IWF_240, the N3IWF_240 that has received the message may transmit the NAS message to the base station apparatus_120, and the base station apparatus_120 that has received the message may transmit the NAS message to the UE.

In addition, in a case that the non-3GPP access used in the first MA PDU session is Trusted Non-3GPP Access, the AMF may transmit the N2 PDU session request message to the TNGF, the TNGF that has received the message transmits the NAS message to the TNAP, and the TNAP that has received the message may transmit the NAS message to the UE.

The AMF may transmit the N2 PDU session request message to notify the UE that the configuration modification of the first MA PDU session of the UE, and/or the configuration modification of the user plane resources over the non-3GPP access in the first MA PDU session, and/or establishment of the SA PDU session for the same DN have been indicated.

Next, in a case that the UE receives the NAS message, the UE checks the information included in the NAS message. Then, the UE may consider, based on the NAS message and/or the information included in the NAS message, that the configuration modification of the first MA PDU session of the UE, and/or the configuration modification of the user plane resources over the non-3GPP access in the first MA PDU session, and/or the establishment of the SA PDU session for the same DN have been indicated. Then, the UE may determine to initiate the PDU session establishment procedure based on the NAS message and/or the information included in the NAS message (S1008).

Next, each apparatus performs the PDU session establishment procedure of S1008 to establish a (new) first SA PDU session over the non-3GPP access with the same DN (DN_300) as the DN (DN_300) in the first communication state. Note that, in this section, the PDU session establishment procedure is also referred to as an SA PDU session establishment procedure. The SA PDU session establishment procedure will be described with reference to FIG. 13.

Note that a case in which the non-3GPP access is the untrusted non-3GPP access will be described. However, this embodiment can also be applied to a case in which the non-3GPP access is Trusted non-3GPP access by replacing the base station apparatus_120 and the N3IWF with the TNAP and TNGF.

At the stage prior to performing the SA PDU session establishment procedure, the UE is in a state of being registered with a 5GS over the non-3GPP access, and thus the UE may be in a state in which IPsec SA for NAS signaling is established between the UE and the N3IWF.

First, the UE initiates the SA PDU session establishment procedure by transmitting to the AMF an NAS message including the N1 SM container including a PDU session establishment request message over the access network (the base station apparatus_120) (S1300). The NAS message is transmitted over the N1 interface (S 1300). The NAS message may be an uplink NAS transport (UL NAS TRANSPORT) message. Specifically, the PDU session establishment request message is transmitted to the N3IWF using the IPsec SA for NAS signaling, and the N3IWF transfers the received PDU session establishment request message to the AMF.

In addition, by including and transmitting at least one type of the first to tenth identification information in the PDU session establishment request message and/or the N1 SM container and/or the NAS message, the UE can notify the network side of the request from the UE.

In addition, the first identification information is a DNN for identifying the DN serving as a connection destination of the SA PDU session (the first SA PDU session) of which establishment is requested and is preferably configured to the same DNN as the DNN for identifying the DN with which communication is performed in the first MA PDU session.

In addition, the UE may include the second identification information in the PDU session establishment request message and/or the N1 SM container and/or the NAS message to notify the network side whether or not the UE supports the ATSSS function and/or whether or not the UE supports the MPTCP function and/or ATSSS-LL function.

In addition, the third identification information is a PDU session ID for identifying the SA PDU session (the first SA PDU session) of which establishment is requested, and needs to be configured to a PDU session ID different from the PDU session ID configured for the first MA PDU session.

In addition, the fourth identification information is a PDU session type of the SA PDU session (the first SA PDU session) of which establishment is requested, and is preferably configured to the same PDU session type as the PDU session type configured for the first MA PDU session.

In addition, the fifth identification information is an SSC mode of the SA PDU session (the first SA PDU session) of which establishment is requested, and is preferably configured to an SSC mode, that is, SSC mode 2, configured for the first MA PDU session, but may be configured to SSC mode 1 or 3.

In addition, the sixth identification information is S-NSSAI of the SA PDU session (the first SA PDU session) of which establishment is requested, and is preferably configured to S-NSSAI allowed for both accesses (the 3GPP access and the non-3GPP access) by the network in the Registration procedure.

In addition, by including the seventh identification information indicating Initial request or Existing PDU Session in the PDU session establishment request message, and/or the N1 SM container, and/or the NAS message, the UE may notify the network side that the PDU session establishment request message has been transmitted to establish the (first) new SA PDU session and/or the ATSSS-LL function and/or the MPTCP function are applied to steer the traffic of the first MA PDU session and/or the first SA PDU session.

In addition, the eighth identification information may indicate a PDU session ID for identifying the PDU session (the first MA PDU session) that is scheduled to be released. In addition, by transmitting the eighth identification information, it may be indicated that the first MA PDU session will be released.

In addition, the ninth identification information may indicate an access corresponding to user plane resources in the PDU session (the first MA PDU session) that is scheduled to be released. In other words, the ninth identification information may indicate the non-3GPP access. In addition, as for the non-3GPP access, the ninth identification information may individually provide a notification of untrusted non-3GPP access or a notification of Trusted non-3GPP access. In other words, the ninth identification information may also indicate the non-3GPP access (untrusted non-3GPP access) or the non-3GPP access (Trusted non-3GPP access). In addition, by including the eighth and ninth identification information together, it may be indicated that the user plane resources over the non-3GPP access are scheduled to be released in the first MA PDU session.

Note that the UE may include and transmit the first to tenth identification information in a control message of a lower layer than the NAS layer (e.g., an RRC layer, a MAC layer, an RLC layer, or a PDCP layer) or a control message of a higher layer than the NAS layer.

Next, in a case that the NAS message is received, the AMF can consider that the UE has made a request, and/or recognize the content of the information and the like (messages, containers, and information) included in the NAS message.

Here, the AMF may reject the establishment of the first SA PDU session in a case that the UE is registered with both accesses and the S-NSSAI indicated by the sixth identification information received from the UE is not allowed for either access. In addition, the AMF may reject the establishment of the first SA PDU session in a case that the AMF does not support the ATSSS function.

In addition, in a case that the establishment of the first SA PDU session is to be rejected, each apparatus may skip, that is, omit the steps from S1302. In addition, the establishment of the first SA PDU session may be rejected in a case that the SA PDU session establishment procedure is not successfully completed.

In addition, in a case that the establishment of the first SA PDU session is to be rejected, the AMF may transmit to the UE an NAS message including information indicating that the establishment of the first SA PDU session is rejected. In addition, at this time, the AMF does not need to transmit to the SMF at least some of the information and the like (messages, containers, and information) included in the NAS message received from the UE.

In addition, in a case that the establishment of the first SA PDU session is to be rejected, the AMF may transmit to the SMF information indicating that the establishment of the first SA PDU session is to be rejected and the SMF may transmit to the UE an NAS message including the N1 SM container including the PDU session establishment reject message. At this time, the PDU session establishment reject message, and/or the N1 SM container, and/or the NAS message may include the information indicating that the establishment of the first SA PDU session is to be rejected.

Next, the AMF selects the SMF as a destination to which at least some of the information and the like (messages, containers, and information) included in the NAS message received from the UE is to be transferred (S 1302). Note that the AMF may select the SMF as a transfer destination based on information included in the NAS message (messages, containers, and information), and/or the subscriber information, and/or the capability information of the network, and/or the operator policy, and/or the state of the network, and/or the user registration information, and/or context held by the AMF, and/or the like. In addition, the AMF may select the SMF supporting the MA PDU session and/or the ATSSS function. Here, it is assumed that the SMF_220 supporting the MA PDU session and/or the ATSSS function has been selected.

Next, the AMF transmits, to the selected SMF, at least some of the information and the like (messages, containers, and information) included in the NAS message received from the UE over the N11 interface (S1304). In addition, the AMF may transmit, to the SMF, information indicating that the UE has been registered with both accesses.

Next, in a case that information and the like (messages, containers, and information) transmitted from the AMF are received, the SMF can consider that the UE has made a request and/or recognize the content of the information and the like (messages, containers, and information) received from the AMF.

Here, the SMF may or may not perform the third condition fulfillment determination. The third condition fulfillment determination may be intended to determine whether or not to accept the request from the UE. In the third condition fulfillment determination, the SMF determines whether the third condition fulfillment determination is true or false. In a case that the SMF determines that the third condition fulfillment determination is true, the procedure of (B) of FIG. 13 may be initiated. In addition, in a case that the third condition fulfillment determination is determined to be false, a procedure for rejecting the request from the UE may be initiated.

Note that the third condition fulfillment determination may be performed based on information received from the AMF (messages, containers, and information), and/or subscriber information, and/or network capability information, and/or the operator policy, and/or the state of the network, and/or user registration information, and/or the context held by the SMF, and/or the like.

For example, in a case that the network allows the request from the UE, the third condition fulfillment determination may be determined to be true. In addition, in a case that the network does not allow the request from the UE, the third condition fulfillment determination may be determined to be false. Furthermore, in a case that the network to which the UE is connected and/or an apparatus in the network supports the function requested by the UE, the third condition fulfillment determination may be determined to be true, and in a case that network and/or the apparatus does not support the function requested by the UE, the third condition fulfillment determination may be determined to be false. Moreover, in a case that the transmitted and/or received identification information is allowed, the third condition fulfillment determination may be determined to be true, and in a case that the transmitted and/or received identification information is not allowed, the third condition fulfillment determination may be determined to be false. In addition, in a case that the network allows the establishment of the first SA PDU session, the third condition fulfillment determination may be determined to be true. In addition, in a case that the network rejects the establishment of the first SA PDU session, the third condition fulfillment determination may be determined to be false. Note that conditions for determining whether the third condition fulfillment determination is true or false may not be limited to the above-described conditions.

Next, each step of the procedure of (B) of FIG. 13 will be described.

First, the SMF may select the PCF. For example, in a case that, for the SMF, the seventh identification information indicates the Initial request, that is, in a case that the present procedure is performed to newly establish a (first) SA PDU session, the SMF may select an appropriate PCF based on information received from the AMF, or the like. For example, the SMF may select a PCF supporting the ATSSS function. In addition, the SMF may use the PCF that has already been selected, that is, the PCF that has been used in the first MA PDU session, in a case that the seventh identification information indicates Existing PDU Session. In other words, a new PCF may or may not be selected.

Next, the SMF may transmit at least some of the information and the like (messages, containers, and information) received from the AMF to the PCF (not illustrated).

Furthermore, in a case that the SMF determines to allow the establishment of a first SA PDU session, the SMF may further transmit, to the PCF, "information indicating that the establishment of a first SA PDU session has been allowed" and/or "information (access type) indicating the access corresponding to the first SA PDU session of which establishment is allowed". Here, the "information (access type) indicating the access corresponding to the first SA PDU session of which establishment has been allowed" may be the non-3GPP access.

Next, in a case that the information and the like (messages, containers, and information) transmitted from the SMF are received, the PCF can consider that the UE has requested the establishment of the first SA PDU session and/or recognize the content of the information and the like (messages, containers, and information) received from the SMF.

Note that the PCF may further make determination similar to the above-described determination by the SMF based on the information received from the SMF (messages, containers, and information), and/or the operator policy, and/or the subscriber information, and/or the like. In this case, information similar to the information transmitted from the SMF to the PCF may be transmitted from the PCF to the SMF.

In addition, in a case that the PCF detects that the above-described determination has been made by the SMF, the PCF may not make (may skip) the determination.

In addition, the above-described determination may be made only by the PCF without being made by the SMF. In this case, the information or the like (messages, containers, and information) transmitted from the SMF to the PCF may be only at least a portion (messages, containers, and information) received from the AMF. In other words, in a case that the above-described determination has been made by the SMF, the information generated by the SMF and additionally transmitted to the PCF may not be transmitted. In this case, in a case that the PCF determines to allow the establishment of the first SA PDU session, the PCF may further transmit, to the SMF, "information indicating that the establishment of the first SA PDU session has been allowed" and/or "information (access type) indicating the access corresponding to the first SA PDU session of which establishment has been allowed". Here, the "information (access type) indicating the access corresponding to the first SA PDU session of which establishment has been allowed" may indicate the non-3GPP access.

Then, the PCF may generate PCC rules (also referred to as policies or routing rules) for the first SA PDU session in a case that it is detected that the establishment of the first SA PDU session has been allowed based on information and the like received from the SMF (messages, containers, and information) or in a case that it is detected that the establishment of the first SA PDU session has been allowed based on the information and the like received from the SMF (the messages, containers, and information).

Then, in the case that the PCF has generated the PCC rules for the first SA PDU session, the PCF may transmit the PCC rules to the SMF. In addition, the PCF may explicitly indicate that the establishment of the first SA PDU session has been allowed by transmitting the information indicating that the establishment of the first SA PDU session has been allowed, or may implicitly indicate that the establishment of the first SA PDU session has been allowed by transmitting the PCC rules to the SMF.

Next, in a case that the information transmitted from the PCF is received, the SMF can recognize the content of the information. In addition, the SMF may receive "the information indicating that the first SA PDU session has been allowed to be established" from the PCF, and/or "the information indicating access (access type) corresponding to the first SA PDU session of which establishment has been allowed", and/or the PCC rules to recognize that the establishment of the first SA PDU session has been allowed. Then, in a case that the PCC rules are received from the PCF, the SMF may generate ATSSS rules (20th identification information) and N4 rules from the PCC rules. Here, the ATSSS rules may be information for controlling the first MA PDU session and/or the first SA PDU session transmitted from the SMF to the UE, and the N4 rules may be information for controlling the first MA PDU session and/or the first SA PDU session transmitted from the SMF to the UPF. In addition, the SMF may associate (or map) the PCC rules, the ATSSS rules and the N4 rules with (or to) one another for management.

In addition, in a case that the fourth identification information indicates any of IPv4, IPv6, or IPv4v6, the SMF may assign an IP address or an IP prefix to the first SA PDU session. In addition, in a case that the fourth identification information indicates unstructured, the SMF may assign an IPv6 address to the first SA PDU session. In addition, in a case that the fourth identification information indicates Ethernet (trade name), the SMF may assign neither a MAC address nor an IP address to the first SA PDU session.

Next, the SMF selects the UPF with which the first SA PDU session is to be established and transmits an N4 session establishment request message to the selected UPF over the N4 interface (S1318). Here, the SMF may select one or more UPFs based on the information received from the AMF, and/or the information received from the PCF, and/or the subscriber information, and/or the network capability information, and/or the operator policy, and/or the state of the network, and/or the user registration information, and/or the context held by the SMF, and/or the like. In addition, in a case that multiple UPFs are selected, the SMF may transmit an N4 session establishment request message to each of the UPFs. In addition, in a case that the establishment of the first SA PDU session has been allowed, the SMF may select a UPF supporting the MA PDU session and/or the ATSSS function. Here, it is assumed that the UPF_232 has been selected.

In addition, in a case that the first SA PDU session has been allowed to be established, the N4 rules may be included and transmitted in an N4 session establishment request message.

Next, in a case that the N4 session establishment request message is received (S1318), the UPF can recognize the content of the information received from the SMF. In addition, the UPF creates a context for the first SA PDU session. In addition, the UPF may be configured to operate according to the N4 rules in a case that the N4 rules are received from the SMF. In other words, the UPF may configure whether to route the downlink traffic in the established first SA PDU session over the 3GPP access or the non-3GPP access. Furthermore, the UPF may transmit an N4 session establishment response message to the SMF over the N4 interface based on the reception of the N4 session establishment request message and/or the creation of the context for the first SA PDU session (S 1320).

Next, in a case that the N4 session establishment response message is received as a response message to the N4 session establishment request message, the SMF can recognize the content of the information received from the UPF. In addition, the SMF may perform address assignment of an address to be assigned to the UE based on the reception of the PDU session establishment request message, and/or the selection of the UPF, and/or the reception of the N4 session establishment response message, and/or the like.

Next, the SMF may transmit to the AMF the N1 SM container, and/or N2 SM information, and/or the PDU session ID (the 13th identification information), and/or access type (the 19th identification information) over the N11 interface based on the reception of the PDU session establishment request message, and/or the selection of the UPF, and/or the reception of the N4 session establishment response message, and/or completion of address assignment of the address to be assigned to the UE, and/or the like (S1322). Here, the N1 SM container may include a PDU session establishment accept message, and the PDU session establishment accept message may include an ATSSS container Information Element (IE).

Next, the AMF that has received the N1 SM container, and/or the N2 SM information, and/or the PDU session ID (the 13th identification information), and/or the access type (the 19th identification information) transmits an NAS message to the UE via the N3IWF and the access network (S1324) (S1326). Here, the NAS message is transmitted over the N1 interface. Furthermore, the NAS message may be a downlink NAS transport (DL NAS transport) message.

Specifically, in a case that the AMF transmits an N2 PDU session request message to the N3IWF (S1324), the N3IWF that has received the N2 PDU session request message transmits an NAS message to the UE over the access network (the base station apparatus_120) (S 1326). Here, the N2 PDU session request message may include the NAS message and/or the N2 SM information. In addition, the NAS message may include the PDU session ID (the 13th identification information) and/or the access type (the 19th identification information) and/or the N1 SM container. The N1 SM container may include the PDU session establishment accept message.

In addition, the PDU session establishment accept message may be a response message to the PDU session establishment request. In addition, the PDU session establishment accept message may indicate that the establishment of the PDU session has been accepted.

Here, the SMF and/or AMF may transmit the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message to indicate that at least some of the request from the UE made using the PDU session establishment request message has been accepted.

In addition, the SMF and/or AMF may include and transmit at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message. The SMF and/or AMF may transmit at least one piece of the identification information to notify the UE of the content of the identification information.

In addition, in a case that the establishment of the SA PDU session has been allowed, at least one piece of the 11th to 21st identification information may be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message.

Note that the SMF and/or AMF may select and determine which type of identification information is to be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, based on each piece of received identification information, and/or the subscriber information, and/or the network capability information, and/or the operator policy, and/or the state of the network, and/or the user registration information, and/or the context held by the SMF and/or the AMF, and/or the like.

Here, the 11th identification information may be the same as the first identification information. In addition, the 12th identification information may indicate an MPTCP capability and/or an ATSSS-LL capability of the network. In addition, the 13th identification information may be the same as the third identification information. In addition, the 14th identification information may be the same as the fourth identification information. In addition, the 15th identification information may be the same as the fifth identification information and, for example, may be SSC mode 2. In addition, the 16th identification information may be the same as the sixth identification information. In addition, the 18th identification information may indicate that the network has allowed the establishment of the SAPDU session. In addition, the 19th identification information may indicate the non-3GPP access. In addition, the 20th identification information may indicate the ATSSS rules.

In addition, by including and transmitting at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, the UE may be notified that the establishment of the first SA PDU session has been allowed, and/or the access type corresponding to the first SA PDU session allowed to be established.

Next, the UE receives the NAS message over the N1 interface (S1326). In a case that the NAS message is received, the UE can consider that the request from the UE through the PDU session establishment request message has been allowed and/or recognize the content of the information included in the NAS message and the like (messages, containers, and information). That is, the UE can consider that the establishment of the first SA PDU session has been allowed, and/or recognize the access type corresponding to the first SA PDU session allowed to be established.

With the above operation, the procedure of (B) of FIG. 13 is successfully completed.

In a case that the procedure of (B) of FIG. 13 is successfully completed, the UE becomes in a state in which the first SA PDU session over the non-3GPP access has been established. The UE may become in a state of being able to communicate with the DN using the (first) new SA PDU session over the non-3GPP access. In other words, the UE may be in a state of being able to communicate with the DN using the first SA PDU session over the non-3GPP access newly established through the procedure of (B) of FIG. 13, in addition to the first MA PDU session using the user plane resources over the 3GPP access and the user plane resources over the non-3GPP access established before the fifth PSA modification procedure is initiated.

Moreover, successful completion of the procedures of (B) of FIG. 13 may mean successful completion of the PDU session establishment procedure of S1008.

Next, each step of a procedure for rejecting a request from the UE to be performed in a case that the third condition fulfillment determination is false in FIG. 13 will be described. This procedure may be initiated in a case that the establishment of the first SA PDU session is rejected as described above.

First, the SMF transmits a PDU session establishment reject message to the UE via the AMF. Specifically, the SMF transmits the PDU session establishment reject message to the AMF over the N11 interface. In a case that the PDU session establishment request message is received from the SMF, the AMF transmits an NAS message including the PDU session establishment reject message to the UE by using the N1 interface.

Here, the SMF may transmit the PDU session establishment reject message to indicate that the request from the UE made with the PDU session establishment request message has been rejected.

The UE can consider that the request from the UE made with the PDU session establishment request message has been rejected by receiving the PDU session establishment reject message. That is, the UE can consider that the request to establish the SA PDU session has been rejected by the network.

With the above operation, the procedure for rejecting the request of the UE is completed. In addition, the completion of the procedure for rejecting the request of the UE may mean that the PDU session establishment procedure is not successfully completed (is abnormally completed). In this case, a first SA PDU session over the non-3GPP access cannot be established. However, in this case, because the first MA PDU session using the user plane resources over the 3GPP access remains maintained, the UE is in a state of being able to communicate with the DN using the first MA PDU session. In addition, in this case, the remaining steps of FIG. 10 may be skipped.

With the above operation, the PDU session establishment procedure of S1008 is completed.

In a case that the PDU session establishment procedure of S1008 is successfully completed, the UE may be in a state of being able to communicate with the DN using the first SA PDU session over the non-3GPP access, in addition to the first MA PDU session using the user plane resources over the 3GPP access and the user plane resources over the non-3GPP access as described above (S1010) (S1012).

Next, the PDU session release procedure of S1014 will be described with reference to FIG. 12.

The PDU session release procedure is initiated by the SMF transmitting an N4 session release request message to the UPF_230 (S1200). The N4 session release request message may include an N4 session ID and/or an access type. The N4 session ID may be an identifier for generating an SMF and identifying an N4 session provided for the UPF and/or context of the N4 session in a case that a new PDU session is established or the UPF for an established PDU session is modified. In addition, the N4 session ID is information stored in the SMF and the UPF. In addition, the SMF may also store the relationship between the N4 session ID and the PDU session ID for given UE. In addition, the access type may indicate access desired to release in the user plane resources of the first MA PDU session, and here it may indicate the non-3GPP access. In addition, the SMF may transmit an N4 session release request message to the UPF_230 to request release of the first MA PDU session of the UE, and/or release of the user plane resources over the non-3GPP access in the first MA PDU session, and/or release of the N4 session corresponding to the first MA PDU session (or the user plane resources over the non-3GPP access).

Next, in a case that the N4 session release request message is received, the UPF_230 checks information included in the N4 session release request message. The UPF_230 may release, for the SMF, the first MA PDU session of the UE, and/or release the user plane resources over the non-3GPP access in the first MA PDU session, and/or release the N4 session corresponding to the first MA PDU session (or the user plane resources over the non-3GPP access), based on the N4 session release request message and/or information included in the N4 session release request message.

In addition, by transmitting to the SMF the N4 session release response message, the UPF_230 may inform the SMF that the N4 session release request message has been received, and/or the first MA PDU session of the UE has been released, and/or the user plane resources over the non-3GPP access in the first MA PDU session has been released, and/or the N4 session corresponding to the first MA PDU session (or the user plane resources over the non-3GPP access) has been released (S1202). The N4 session release response message may include the N4 session ID and/or access type included in the N4 session release request message. Note that, in a case that the UPF_230 has not received an access type from the SMF, the message may include no access type. In addition, the message may include an access type even in a case that the UPF_230 has not received an access type from the SMF. In the case that the access type is included, it may indicate the non-3GPP access.

Next, in a case that the N4 session release response message is received, the SMF checks the information included in the N4 session release response message. The SMF may consider that the UPF_230 has received the N4 session release request message, and/or the UPF_230 has released the first MA PDU session of the UE, and/or the UPF_230 has released the user plane resources over the non-3GPP access in the first MA PDU session, and/or the UPF_230 has released the N4 session corresponding to the first MA PDU session (or the user plane resources over the non-3GPP access), based on the N4 session release response message and/or the information included in the N4 session release response message.

Then, the SMF transmits to the AMF an N1 SM container, and/or an N2 SM resource release request message (S 1204). In addition, although the SMF transmits a PDU session release command message, the PDU session release command message may be included in the N1 SM container and transmitted. The PDU session release command message may include a PDU session ID, and/or an access type. In addition, the N2 SM resource release request message may include a PDU session ID and/or an access type. Here, the PDU session ID is information for identifying the first MA PDU session. In addition, the access type may also indicate access desired to release, and here, it may indicate the non-3GPP access. In addition, the SMF may transmit a PDU session release command message, and/or an N1 SM container, and/or an N2 SM resource release request message to indicate the release of the first MA PDU session of the UE, and/or the release of the user plane resources over the non-3GPP access in the first MA PDU session of the UE.

Next, in a case that the N1 SM container and/or the N2 SM resource release request message is received, the AMF checks the information included in the N1 SM container and/or the N2 SM resource release request message. The AMF may receive the PDU session release command message, and/or the N1 SM container, and/or the N2 SM resource release request message to consider that the release of the first MA PDU session of the UE, and/or the release of the user plane resources over the non-3GPP access in the first MA PDU session of the UE have been indicated.

Then, the AMF transmits the NAS message to the UE over the access network (S1206 and S1208). Here, the NAS message includes the N1 SM container. That is, the PDU session release command message received from the SMF may be included in the NAS message and transmitted. In addition, the access network may be of the 3GPP access or the non-3GPP access. In other words, the NAS message is transmitted over the 3GPP access or the non-3GPP access. In addition, which access is to be used to transmit the NAS message may be determined by the SMF or the AMF. In a case that the SMF determines an access, the SMF may inform the AMF of information about the access over which the NAS message is to be transmitted to allow the AMF to identify the access for the transmission based on the information. In addition, in a case that the AMF determines an access, any access may be identified from among accesses included in the access type received from the SMF.

In a case that the NAS message is transmitted over the 3GPP access, the AMF transmits the NAS message to the base station apparatus_110, and the base station apparatus_110 that has received the NAS message transmits the NAS message to the UE.

In addition, in a case that the NAS message is transmitted over the non-3GPP access, transmission destinations differ depending on whether the non-3GPP access used in the first MA PDU session is Untrusted Non-3GPP Access or Trusted Non-3GPP access.

In a case that the non-3GPP access used in the first MA PDU session is the Untrusted Non-3GPP Access, the AMF transmits the NAS message to the N3IWF_240, the N3IWF_240 that has received the NAS message may transmit the NAS message to the base station apparatus_120, and the base station apparatus_120 that has received the NAS message may transmit the NAS message to the UE.

In addition, in a case that the non-3GPP access used in the first MA PDU session is Trusted Non-3GPP Access, the AMF may transmit the NAS message to the TNGF, the TNGF that has received the NAS message transmits the NAS message to the TNAP, and the TNAP that has received the NAS message may transmit the NAS message to the UE.

The AMF may transmit the NAS message to notify the UE that the release of the first MA PDU session of the UE, and/or the release of the user plane resources over the non-3GPP access in the first MA PDU session have been indicated.

In a case that the UE receives the NAS message, the UE checks the information included in the NAS message. The UE may receive the PDU session release command message, and/or the N1 SM container, and/or the NAS message to consider that the release of the first MA PDU session of the UE, and/or the release of the user plane resources over the non-3GPP access in the first MA PDU session of the UE have been indicated. Then, the UE may release the first MA PDU session based on the NAS message and/or the information included in the NAS message.

With the above operation, the PDU session release procedure of S1014 is completed. In a case that the PDU session release procedure is completed, although the user plane resources over the non-3GPP access are released in the first MA PDU session, the UE is in a state of being able to communicate with the DN_300 using the first MA PDU session and the first SA PDU session because the first MA PDU session and the first SA PDU session using the user plane resources over the 3GPP access have been established (S1016) (S1018).

With the above operation, the fifth PSA modification procedure is completed.

In a case that the fifth PSA modification procedure is completed, the state transitions from the first communication state illustrated in FIG. 2 (a state in which the first MA PDU session using the user plane resources over the 3GPP access and the user plane resources over the non-3GPP access has been established) to the third communication state illustrated in FIG. 15 (a state in which the first MA PDU session using the user plane resources over the 3GPP access and the first SA PDU session over the non-3GPP access have been established). In addition, the execution of the fifth PSA modification procedure causes the PSAs to be modified from the UPF_230 to the UPF_230 and the UPF_232.

### 7. Procedure 2 for Modifying PSA in SSC mode 3

Next, a procedure for modifying a PSA in a case that a first MA PDU session using user plane resources over one access (either 3GPP access or non-3GPP access) and a first SA PDU session over the other access (either non-3GPP access or 3GPP access) have been established and SSC mode 3 is applied to the first MA PDU session and the first SA PDU session will be described.

There may be a sixth PSA modification procedure for the PSA modification procedure. Here, the sixth PSA modification procedure is a procedure in which a PSA of the first SA PDU session is modified.

### 7.1. Sixth PSA Modification Procedure

Next, the sixth PSA modification procedure will be described. As described above, the sixth PSA modification procedure is a procedure for modifying a PSA of the first SA PDU session in a case that the first MA PDU session using only user plane resources over one access (either 3GPP access or non-3GPP access) and the first SA PDU session over the other access (either non-3GPP access or 3GPP access) have been established and SSC mode 3 is applied to the first MA PDU session and the first SA PDU session. Here, the case that the first MA PDU session using the user plane resources over the 3GPP access and the first SA PDU session over the non-3GPP access (untrusted non-3GPP access) are established will be described. Note that the following description can be applied to even the case that the first MA PDU session using the user plane resources over the 3GPP access and the first SA PDU session over the non-3GPP access (Trusted non-3GPP access) are established by replacing the base station apparatus_120 and the N3IWF with a TNAP and a TNGF. Specifically, a case that each apparatus performs the sixth PSA modification procedure to transition from the third communication state illustrated in FIG. 15 to the first communication state illustrated in FIG. 2 will be described. In addition, the execution of the sixth PSA modification procedure causes PSAs to be modified from the UPF_230 and the UPF_232 to the UPF_230.

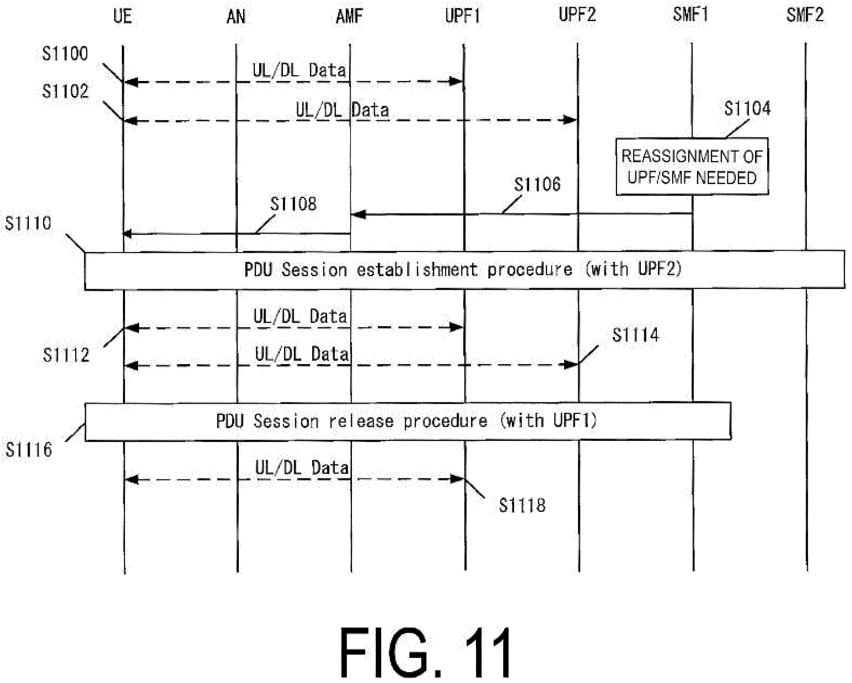

Next, the sixth PSA modification procedure will be described using FIG. 11. Here, the UPF 1, the UPF 2, and the SMF 1 in FIG. 11 correspond to the UPF_230, the UPF_232, and the SMF_220, respectively.

First, the UE is in a state of being able to transmit and/or receive user data to and/or from the DN_300 using the first MA PDU session using the user plane resources over the 3GPP access and the first SA PDU session over the non-3GPP access (S1100) (S1102). The PSAs at this time are the UPF_230 and the UPF_232 as described above. The UE may or may not actually transmit and/or receive user data in S1100 and S1102.

Next, the SMF determines whether or not reassignment of the UPF_232 (also referred to as a "serving UPF") and/or the SMF being used in the first SA PDU session is needed (S1104). The SMF may determine that the UPF_232 and/or the SMF need to be reassigned in a case that, for example, it is not possible to maintain the user plane resources over the non-3GPP access, and/or throughputs of communication over the non-3GPP access is extremely decreased, and/or the UPF_230 is in an overflow state, and/or the UE has moved, and/or an operator policy or a network policy has been modified, and/or there is a request from another NF, and/or the like.

In a case that the SMF has determined that the UPF_232 and/or the SMF do not need to be reassigned, each apparatus may skip, that is, omit the steps from S806. In a case that the SMF has determined that the UPF_230 and/or the SMF need to be reassigned, each apparatus may perform steps from S806. Here, a case that it is determined that the SMF does not need to be reassigned and the UPF_232 needs to be reassigned will be described.

Next, the SMF transmits an N1 SM container, and/or N2 SM information to the AMF (S1106). Here, the N1 SM container may include a PDU session modification command message. In addition, the PDU session modification command message may include a PDU session ID, and/or an access type, and/or a cause value. In addition, the N2 SM information may include a PDU session ID and/or an access type. Here, the PDU session ID included in the N1 SM container and/or the N2 SM information is information for identifying an MA PDU session. In addition, the access type may also indicate access desired to modify, and here, it may indicate the non-3GPP access. In addition, the cause value may indicate that re-establishment of the MA PDU session for the same DN, or addition of the session to the MA PDU session for the same DN, or addition of user plane resources to the MA PDU session for the same DN is required.

The SMF may transmit the PDU session modification command message, and/or the N1 SM container, and/or the N2 SM information to indicate a configuration modification in the first SA PDU session of the UE, and/or the addition of the user plane resources to the MA PDU session for the same DN.

Next, the AMF receives the N1 SM container, and/or the N2 SM information from the SMF (S1106). The AMF may receive the PDU session modification command message, and/or the N1 SM container, and/or the N2 SM information to consider that the configuration modification in the first SA PDU session of the UE, and/or the addition of the user plane resources to the MA PDU session for the same DN have been indicated.

Next, the AMF transmits an N2 PDU session request message to the access network (non-3GPP access (untrusted non-3GPP access) (S1108). Specifically, the AMF may transmit the N2 PDU session request message to the N3IWF_240, the N3IWF_240 that has received the message may transmit the NAS message to the base station apparatus_120, and the base station apparatus_120 that has received the message transmits the NAS message to the UE. Here, the N2 PDU session request message may include an NAS message and/or the N2 SM information. In addition, the NAS message may also include a PDU session ID and/or an N1 SM container. The access network that has received the N2 session request message transmits the NAS message to the UE (S1108).

The AMF may transmit the N2 PDU session request message to notify the UE that a configuration modification in the first SA PDU session of the UE, and/or the addition of the user plane resources to the MA PDU session for the same DN have been indicated.

Next, in a case that the UE receives the NAS message, the UE checks the information included in the NAS message. Then, the UE may consider that the configuration modification in the first SA PDU session of the UE, and/or the addition of the user plane resources to the MA PDU session for the same DN have been indicated based on the NAS message and/or the information included in the NAS message. Then, the UE may determine to initiate the PDU session establishment procedure based on the NAS message and/or the information included in the NAS message (S1110).

Next, each apparatus performs the PDU session establishment procedure of S1110 to establish the user plane resources over the non-3GPP access with the same DN (DN_300) as the DN (DN_300) in the third communication state, that is, to add the user plane resources over the non-3GPP access in the first MA PDU session using the user plane resources over the 3GPP access. Note that, in this section, the PDU session establishment procedure is also referred to as an MA PDU session establishment procedure. The MA PDU session establishment procedure will be described with reference to FIG. 13.

Note that a case in which the non-3GPP access is the untrusted non-3GPP access will be described. However, this embodiment can also be applied a case in which the non-3GPP access is Trusted non-3GPP access by replacing the base station apparatus_120 and the N3IWF with the TNAP and TNGF.

At the stage prior to performing the MA PDU session establishment procedure, the UE is in a state of being registered with the 5GS over the non-3GPP access, and thus the UE may be in a state in which IPsec SA for NAS signaling is established between the UE and the N3IWF.

In addition, although the description below assumes that the 3GPP access, the non-3GPP access, and the 5G Core Network (5GC) are all managed/operated by the same operator, the embodiments below can be applied to a case that the accesses and network are operated by different operators.

The UE may determine to initiate the MA PDU session establishment procedure to add the user plane resources over the non-3GPP access in the first MA PDU session based on information stored in the UE in advance, and/or information previously received from the access network, and/or information previously received from the core network (including identification information received in the registration procedure, and/or URSP rules previously received from the PCF, and/or the like), and/or the like.

First, the UE initiates the MA PDU session establishment procedure by transmitting an NAS message including the N1SM container including a PDU session establishment request message to the AMF over the access network (S1300). The NAS message is transmitted over the N1 interface. The NAS message may be an uplink NAS transport (UL NAS TRANSPORT) message.

Here, the access network includes the 3GPP access (also referred to as a 3GPP access network) and the non-3GPP access (also referred to as a non-3GPP access network). In other words, in a case that the UE transmits the NAS message over the 3GPP access, the UE transmits the NAS message to the AMF via the base station apparatus_110. In addition, in a case that the UE transmits the NAS message over the non-3GPP access (untrusted non-3GPP access), the UE transmits the NAS message to the AMF via the base station apparatus_120 and the N3IWF. In addition, in a case that the UE transmits the NAS message over the non-3GPP access (Trusted non-3GPP access), the UE transmits the NAS message to the AMF via the TNAP and the TNGF. As described above, although the communication path to the AMF varies depending on which access is used by the UE to transmit the NAS message, the communication path from the AMF to the SMF may be the same. Here, the NAS message is described as being transmitted over the non-3GPP access.

In addition, by including and transmitting at least one type of the first to tenth identification information in the PDU session establishment request message and/or the N1 SM container and/or the NAS message, the UE can notify the network side of the request from the UE.

In addition, the first identification information is a DNN for identifying the DN serving as a connection destination of the user plane resources of which establishment (addition) is requested and is preferably configured to the same DNN as the DNN for identifying the DN that was communicating in the first MA PDU session and/or the first SA PDU session.

In addition, the UE may include the second identification information in the PDU session establishment request message and/or the N1 SM container and/or the NAS message to notify the network side whether or not the UE supports the ATSSS function and/or whether or not the UE supports the MPTCP function and/or ATSSS-LL function.

In addition, the third identification information may also be a PDU session ID for identifying an MA PDU session of the user plane resources of which establishment (addition) is requested, may be a PDU session ID different from the PDU session ID configured for the first SA PDU session, or may be the same PDU session ID as the PDU session configured for the first MA PDU session. Here, in a case that the third identification information is configured to the same PDU session ID as the PDU session ID of the first MA PDU session, it may mean that the UE requests the addition to the first MA PDU session.

In addition, the fourth identification information is a PDU session type of the MA PDU session of the user plane resources of which establishment (addition) is requested, and is preferably configured to the same PDU session type as the PDU session type configured for the first MA PDU session and/or the first SA PDU session.

In addition, the fifth identification information is an SSC mode of the MA PDU session of the user plane resources of which establishment (addition) is requested, and is preferably configured to the SSC mode configured for the first MA PDU session and/or the first SA PDU session, that is, SSC mode 2, but may be configured to SSC mode 1 or 3.

In addition, the sixth identification information is S-NSSAI of the MA PDU session of the user plane resources of which establishment (addition) is requested, and is preferably configured to S-NSSAI allowed for both accesses (the 3GPP access and the non-3GPP access) by the network in the Registration procedure.

In addition, by including the seventh identification information indicating the MA PDU Request in the PDU session establishment request message and/or the N1 SM container, and/or the NAS message, the UE may notify the network side that the PDU session establishment request message has been transmitted to establish a new MA PDU session (to add the user plane resources) and/or the ATSSS-LL function and/or the MPTCP function are applied to steer the traffic of the first MA PDU session.

In addition, the eighth identification information may indicate a PDU session ID for indicating a PDU session (a first SA PDU session) that is scheduled to be released. In addition, by transmitting the eighth identification information, it may be indicated that the first SA PDU session will be released.

In addition, the ninth identification information may indicate an access corresponding to user plane resources in the PDU session (the first MA PDU session) that is scheduled to be released. In other words, the ninth identification information may indicate the non-3GPP access. In addition, as for the non-3GPP access, the ninth identification information may individually provide a notification of untrusted non-3GPP access or a notification of Trusted non-3GPP access. In other words, the ninth identification information may also indicate the non-3GPP access (untrusted non-3GPP access) or the non-3GPP access (Trusted non-3GPP access). In addition, by including the eighth and ninth identification information together, it may be indicated that the first SA PDU session over the non-3GPP access is scheduled to be released.

In addition, the ninth identification information may indicate the non-3GPP access or the non-3GPP access (untrusted non-3GPP access). In addition, by including the eighth and ninth identification information together, it may be indicated that the established first SA PDU session is scheduled to be released.

Note that the UE may include and transmit the first to tenth identification information in a control message of a lower layer than the NAS layer (e.g., an RRC layer, a MAC layer, an RLC layer, or a PDCP layer) or a control message of a higher layer than the NAS layer.

Next, in a case that the NAS message is received, the AMF can consider that the UE has made a request, and/or recognize the content of the information and the like (messages, containers, and information) included in the NAS message.

Here, the AMF may reject the establishment of the first MA PDU session (addition of the user plane resources to the first MA PDU session) in a case that the UE has been registered with both accesses and the S-NSSAI indicated by the sixth identification information received from the UE is not allowed for either access. In addition, the AMF may reject the establishment of the first MA PDU session (addition of the user plane resources to the first MA PDU session) in a case that the AMF does not support the ATSSS function.

In addition, in a case that the establishment of the first MA PDU session (addition of the user plane resources to the first MA PDU session) is to be rejected, each apparatus may skip, that is, omit the steps from S 1302. In addition, the establishment of the first MA PDU session (addition of the user plane resources to the first MA PDU session) may be rejected in a case that the MA PDU session establishment procedure is not successfully completed.

In addition, in a case that the establishment of the first MA PDU session (addition of the user plane resources to the first MA PDU session) is to be rejected, the AMF may transmit to the UE an NAS message including information indicating that the establishment of the first MA PDU session (addition of the user plane resources to the first MA PDU session) is to be rejected. In addition, at this time, the AMF does not need to transmit to the SMF at least some of the information and the like (messages, containers, and information) included in the NAS message received from the UE.

In addition, in a case that the establishment of the first MA PDU session (addition of the user plane resources to the first MA PDU session) is to be rejected, the AMF may transmit information indicating rejection of the establishment of the first MA PDU session (addition of the user plane resources to the first MA PDU session) to the SMF, and the SMF may transmit to the UE an NAS message including an N1 SM container including a PDU session establishment reject message. At this time, the PDU session establishment reject message, and/or the N1 SM container, and/or the NAS message may include the information indicating that the establishment of the first MA PDU session (addition of the user plane resources to the first MA PDU session) is to be rejected.

Next, the AMF selects the SMF as a destination to which at least some of the information and the like (messages, containers, and information) included in the NAS message received from the UE is to be transferred (S 1302). Note that the AMF may select the SMF as a transfer destination based on information included in the NAS message (messages, containers, and information), and/or the subscriber information, and/or the capability information of the network, and/or the operator policy, and/or the state of the network, and/or the user registration information, and/or context held by the AMF, and/or the like. In addition, the AMF may select the SMF supporting the MA PDU session and/or the ATSSS function. Here, it is assumed that the SMF_220 supporting the MA PDU session and/or the ATSSS function has been selected.

Next, the AMF transmits, to the selected SMF, at least some of the information and the like (messages, containers, and information) included in the NAS message received from the UE over the N11 interface (S1304). In addition, the AMF may transmit, to the SMF, information indicating that the UE has been registered with both accesses.

Next, in a case that information and the like (messages, containers, and information) transmitted from the AMF is received, the SMF can consider that the UE has made a request and/or recognize the content of the information and the like (messages, containers, and information) received from the AMF.

Here, the SMF may or may not perform the third condition fulfillment determination. The third condition fulfillment determination may be intended to determine whether or not to accept the request from the UE. In the third condition fulfillment determination, the SMF determines whether the third condition fulfillment determination is true or false. In a case that the SMF determines that the third condition fulfillment determination is true, the procedure of (B) of FIG. 13 may be initiated. In addition, in a case that the third condition fulfillment determination is determined to be false, a procedure for rejecting the request from the UE may be initiated.

Note that the third condition fulfillment determination may be performed based on information received from the AMF (messages, containers, and information), and/or subscriber information, and/or network capability information, and/or the operator policy, and/or the state of the network, and/or user registration information, and/or the context held by the SMF, and/or the like.

For example, in a case that the network allows the request from the UE, the third condition fulfillment determination may be determined to be true. In addition, in a case that the network does not allow the request from the UE, the third condition fulfillment determination may be determined to be false. Furthermore, in a case that the network to which the UE is connected and/or an apparatus in the network supports the function requested by the UE, the third condition fulfillment determination may be determined to be true, and in a case that network and/or the apparatus does not support the function requested by the UE, the third condition fulfillment determination may be determined to be false. Moreover, in a case that the transmitted and/or received identification information is allowed, the third condition fulfillment determination may be determined to be true, and in a case that the transmitted and/or received identification information is not allowed, the third condition fulfillment determination may be determined to be false. In addition, in a case that the network allows the establishment of the first MA PDU session (addition of the user plane resources to the first MA PDU session), the third condition fulfillment determination may be determined to be true. In addition, in a case that the network rejects the establishment of the first MA PDU session (addition of the user plane resources to the first MA PDU session), the third condition fulfillment determination may be determined to be false. Note that conditions for determining whether the third condition fulfillment determination is true or false may not be limited to the above-described conditions.

Next, each step of the procedure of (B) of FIG. 13 will be described.

First, the SMF may select the PCF. For example, in a case that the SMF the seventh identification information indicates the Initial request or an MA PDU Request, that is, in a case that the present procedure is performed to newly establish a first MA PDU session (to add the user plane resources to the first MA PDU session), the SMF may select an appropriate PCF based on information received from the AMF, or the like. For example, the SMF may select a PCF supporting the ATSSS function. In addition, in a case that the seventh identification information indicates an existing PDU session or an existing emergency PDU session, the SMF may use a PCF that has already been selected, that is, may use a PCF that has been used in the first SA PDU session. In other words, the PCF need not be selected, but a different PCF may be selected.

Next, the SMF may transmit to the PCF at least some of the information and the like (messages, containers, and information) received from the AMF (not illustrated).

Furthermore, in a case that the SMF determines to allow the establishment of the first MA PDU session (addition of the user plane resources to the first MA PDU session), the SMF may further transmit, to the PCF, "information indicating that the establishment of the first MA PDU session (addition of the user plane resources to the first MA PDU session) has been allowed" and/or "information indicating the establishment (addition) of the user plane resources over the non-3GPP access has been allowed" and/or "information (access type) indicating the access corresponding to the user plane resources of which establishment (addition) has been allowed". Here, the "information (access type) indicating the access corresponding to the user plane resources of which establishment (addition) has been allowed" may indicate the non-3GPP access.

Next, in a case that the information and the like (messages, containers, and information) transmitted from the SMF is received, the PCF can consider that the UE has requested the establishment of the first MA PDU session (addition of the user plane resources to the first MA PDU session) and/or recognize the content of the information and the like (messages, containers, and information) received from the SMF.

Note that the PCF may further make determination similar to the above-described determination by the SMF based on the information received from the SMF (messages, containers, and information), and/or the operator policy, and/or the subscriber information, and/or the like. In this case, information similar to the information transmitted from the SMF to the PCF may be transmitted from the PCF to the SMF.

In addition, in a case that the PCF detects that the above-described determination has been made by the SMF, the PCF may not make (may skip) the determination.

In addition, the above-described determination may be made only by the PCF without being made by the SMF. In this case, the information or the like (messages, containers, and information) transmitted from the SMF to the PCF may be only at least a portion (messages, containers, and information) received from the AMF. In other words, in a case that the above-described determination has been made by the SMF, the information generated by the SMF and additionally transmitted to the PCF may not be transmitted. In this case, in a case that the PCF determines to allow the establishment of the first MA PDU session (addition of the user plane resources to the first MA PDU session), the SMF may further transmit, to the PCF, "information indicating that the establishment of the first MA PDU session (addition of the user plane resources to the first MA PDU session) has been allowed" and/or "information indicating the establishment (addition) of the user plane resources over the non-3GPP access has been allowed" and/or "information (access type) indicating the access corresponding to the user plane resources of which establishment (addition) has been allowed". Here, the "information (access type) indicating the access corresponding to the user plane resources of which establishment (addition) has been allowed" may indicate the non-3GPP access.

Then, the PCF may generate PCC rules for the MA PDU session in a case that it is detected that the establishment of the first MA PDU session (addition of the user plane resources to the first MA PDU session) has been allowed based on the information and the like received from the SMF (the messages, containers, and information) or in a case that the establishment of the first MA PDU session (addition of the user plane resources to the first MA PDU session) has been allowed based on the information received from the SMF (the messages, containers, and information).

Then, in a case that the PCF has generated the PCC rules for the MA PDU session, the PCF may transmit the PCC rules to the SMF. In addition, the PCF may explicitly indicate that the establishment of the first MA PDU session (addition of the user plane resources to the first MA PDU session) has been allowed by transmitting the information indicating that the establishment of the first MA PDU session (addition of the user plane resources to the first MA PDU session) has been allowed, or may implicitly indicate that the establishment of the first MA PDU session (addition of the user plane resources to the first MA PDU session) has been allowed by transmitting the PCC rules to the SMF.

Next, in a case that the information transmitted from the PCF is received, the SMF can recognize the content of the information. Then, in a case that the PCC rules are received from the PCF, the SMF generates ATSSS rules (20th identification information) and N4 rules from the PCC rules. Here, the ATSSS rules are information for controlling the first MA PDU session transmitted from the SMF to the UE, and the N4 rules are information for controlling the first MA PDU session transmitted from the SMF to the UPF. In addition, the SMF may associate (or map) the PCC rules, the ATSSS rules and the N4 rules with (or to) one another for management.

In addition, in a case that the fourth identification information indicates any of IPv4, IPv6, or IPv4v6, the SMF may assign an IP address or an IP prefix to the first MA PDU session. In addition, in a case that the fourth identification information indicates unstructured, the SMF may assign an IPv6 address to the first MA PDU session. In addition, in a case that the fourth identification information indicates Ethernet (trade name), the SMF may assign neither a MAC address nor an IP address to the first MA PDU session.

Next, the SMF selects the UPF with which the first MA PDU session is to be established and transmits an N4 session establishment request message to the selected UPF over the N4 interface (S1318). Here, the SMF may select one or more UPFs based on the information received from the AMF, and/or the information received from the PCF, and/or the subscriber information, and/or the network capability information, and/or the operator policy, and/or the state of the network, and/or the user registration information, and/or the context held by the SMF, and/or the like. In addition, in a case that multiple UPFs are selected, the SMF may transmit an N4 session establishment request message to each of the UPFs. In addition, in a case that the establishment of the first MA PDU session (addition of the user plane resources to the first MA PDU session) has been allowed, the SMF may select a UPF supporting the first MA PDU session and/or the ATSSS function. Here, it is assumed that the UPF_230 has been selected.

In addition, in a case that the first MA PDU session (addition of the user plane resources to the first MA PDU session) has been allowed to be established, the N4 rules may be included and transmitted in an N4 session establishment request message.

Next, in a case that the N4 session establishment request message is received (S1318), the UPF can recognize the content of the information received from the SMF. In addition, the UPF creates a context for the first MA PDU session. In addition, the UPF may be configured to operate according to the N4 rules in a case that it has received the N4 rules from the SMF. In other words, the UPF may configure whether to route the downlink traffic in the established (added) first MA PDU session over the 3GPP access or the non-3GPP access. Furthermore, the UPF may transmit an N4 session establishment response message to the SMF over the N4 interface based on the reception of the N4 session establishment request message and/or the creation of the context for the first MA PDU session (S1320).

Next, in a case that the N4 session establishment response message is received as a response message to the N4 session establishment request message, the SMF can recognize the content of the information received from the UPF. In addition, the SMF may perform address assignment of an address to be assigned to the UE based on the reception of the PDU session establishment request message, and/or the selection of the UPF, and/or the reception of the N4 session establishment response message, and/or the like.

Next, the SMF may transmit to the AMF the N1 SM container, and/or N2 SM information, and/or the PDU session ID (the 13th identification information), and/or access type (the 19th identification information) over the N11 interface based on the reception of the PDU session establishment request message, and/or the selection of the UPF, and/or the reception of the N4 session establishment response message, and/or completion of address assignment of the address to be assigned to the UE, and/or the like (S1322). Here, the N1 SM container may include a PDU session establishment accept message, and the PDU session establishment accept message may include an ATSSS container IE (Information Element).

Next, the AMF that has received the N1 SM container, and/or the N2 SM information, and/or the PDU session ID (the 13th identification information), and/or the access type (the 19th identification information) transmits an NAS message to the UE via the N3IWF and the access network (S1324) (S1326). Here, the NAS message is transmitted over the N1 interface. Furthermore, the NAS message may be a downlink NAS transport (DL NAS transport) message.

Specifically, in a case that the AMF transmits an N2 PDU session request message to the N3IWF (S1324), the N3IWF that has received the N2 PDU session request message transmits an NAS message to the UE over the access network (the base station apparatus_120) (S 1326). Here, the N2 PDU session request message may include the NAS message and/or the N2 SM information. In addition, the NAS message may include the PDU session ID (the 13th identification information) and/or the access type (the 19th identification information) and/or the N1 SM container. The N1 SM container may include the PDU session establishment accept message.

In addition, the PDU session establishment accept message may be a response message to the PDU session establishment request. In addition, the PDU session establishment accept message may indicate that the establishment of the first MA PDU session (addition of the user plane resources to the first MA PDU session) has been allowed.

Here, the SMF and/or AMF may transmit the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message to indicate that at least a portion of the request from the UE made using the PDU session establishment request message has been accepted.

In addition, the SMF and/or AMF may include and transmit at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message. The SMF and/or AMF may transmit at least one piece of the identification information to notify the UE of the content of the identification information.

In addition, in a case that the establishment of the first MA PDU session (addition of the user plane resources to the first MA PDU session) has been allowed, at least one piece of the 11th to 21st identification information may be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message.

Note that the SMF and/or AMF may select and determine which type of identification information is to be included in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, based on each piece of received identification information, and/or the subscriber information, and/or the network capability information, and/or the operator policy, and/or the state of the network, and/or the user registration information, and/or the context held by the SMF and/or the AMF, and/or the like.

Here, the 11th identification information may be the same as the first identification information. In addition, the 12th identification information may indicate an MPTCP capability and/or an ATSSS-LL capability of the network. In addition, the 13th identification information may be the same as the third identification information. In addition, the 14th identification information may be the same as the fourth identification information. In addition, the 15th identification information may be the same as the fifth identification information and, for example, may be SSC mode 2. In addition, the 16th identification information may be the same as the sixth identification information. In addition, the 17th identification information may indicate that the establishment of the first MA PDU session (addition of the user plane resources to the first MA PDU session) has been allowed by the network In addition, the 19th identification information may indicate the non-3GPP access. In addition, the 20th identification information may indicate the ATSSS rules.

In addition, by including and transmitting at least one piece of the 11th to 21st identification information in the ATSSS container IE, and/or the PDU session establishment accept message, and/or the N1 SM container, and/or the PDU session ID (the 13th identification information), and/or the access type (the 19th identification information), and/or the NAS message, and/or the N2 SM information, and/or the N2 PDU session request message, the UE may be notified that the establishment of the first MA PDU session (addition of the user plane resources to the first MA PDU session) has been allowed, and/or the establishment (addition) of the user plane resources over the non-3GPP access has been allowed, and/or the access type corresponding to the user plane resources of which establishment (addition) has been allowed.

Next, the UE receives the NAS message over the N1 interface (S1326). In a case that the NAS message is received, the UE can consider that the request from the UE through the PDU session establishment request message has been allowed and/or recognize the content of the information included in the NAS message (messages, containers, and information). That is, the UE can consider that the establishment of the first MA PDU session (addition of the user plane resources to the first MA PDU session) has been allowed, and/or the establishment of the user plane resources over the non-3GPP access has been allowed, and/or the access type corresponding to the user plane resources of which establishment (addition) has been allowed.

With the above operation, the procedure of (B) of FIG. 13 is successfully completed.

In a case that the procedure of (B) of FIG. 13 is successfully completed, the UE becomes in a state in which the user plane resources have been established over the non-3GPP access. In other words, the UE becomes in a state in which the user plane resources over the non-3GPP access have been established (added) in the first MA PDU session using the already-established user plane resources over the 3GPP access. In other words, the UE may become in a state of being able to communicate with the DN using the first MA PDU session using the user plane resources over the 3GPP access and the user plane resources over the non-3GPP access.

Moreover, successful completion of the procedures of (B) of FIG. 13 may mean successful completion of the PDU session establishment procedure.

Next, each step of a procedure for rejecting a request from the UE to be performed in a case that the third condition fulfillment determination is false in FIG. 13 will be described. This procedure may be initiated in a case that the establishment of the first MA PDU session (addition of the user plane resources to the first MA PDU session) is rejected as described above.

First, the SMF transmits a PDU session establishment reject message to the UE via the AMF. Specifically, the SMF transmits the PDU session establishment reject message to the AMF over the N11 interface. In a case that the PDU session establishment request message is received from the SMF, the AMF transmits an NAS message including the PDU session establishment reject message to the UE by using the N1 interface.

Here, the SMF may transmit the PDU session establishment reject message to indicate that the request from the UE made with the PDU session establishment request message has been rejected.

The UE can consider that the request from the UE made with the PDU session establishment request message has been rejected by receiving the PDU session establishment reject message. That is, the UE can consider that the request to establish the SA PDU session has been rejected by the network.

With the above operation, the procedure for rejecting the request of the UE is completed. In addition, the completion of the procedure for rejecting the request of the UE may mean that the PDU session establishment procedure is not successfully completed (is abnormally completed). In this case, user plane resources over the non-3GPP access may not be established. In other words, the UE has no user plane resources over the non-3GPP access established (added) in the first MA PDU session using the already-established user plane resources over the 3GPP access. However, in this case, because the first MA PDU session using the user plane resources over the 3GPP access remains maintained, the UE is in a state of being able to communicate with the DN using the first MA PDU session. In addition, in this case, the remaining steps of FIG. 11 may be skipped.

With the above operation, the PDU session establishment procedure of S1110 is completed.

In a case that the PDU session establishment procedure of S1110 is successfully completed, the UE may be in a state of being able to communicate with the DN using the first SA PDU session over the non-3GPP access, in addition to the first MA PDU session using the user plane resources over the 3GPP access and the user plane resources over the non-3GPP access as described above (S1112) (S1114).

Next, the PDU session release procedure of S1116 will be described with reference to FIG. 12.

The PDU session release procedure is initiated by the SMF transmitting an N4 session release request message to the UPF_232 (S1200). The N4 session release request message may include an N4 session ID and/or an access type. The N4 session ID may be an identifier for generating an SMF and identifying an N4 session provided for the UPF and/or context of the N4 session in a case that a new PDU session is established or the UPF for an established PDU session is modified. In addition, the N4 session ID is information stored in the SMF and the UPF. In addition, the SMF may also store the relationship between the N4 session ID and the PDU session ID for given UE. In addition, the access type may indicate access desired to release in the user plane resources of the MA PDU session, and here it may indicate the non-3GPP access. In addition, the SMF may request release of the first SA PDU session of the UE and/or release of the N4 session corresponding to the first SA PDU session by transmitting an N4 session release request message to the UPF_232. Note that the SMF may not transmit the access type to the UPF_232.

Next, in a case that the N4 session release request message is received, the UPF_232 checks information included in the N4 session release request message. The UPF_232, the SMF may perform release of the first SA PDU session of the UE and/or release of the N4 session corresponding to the first SA PDU session based on the N4 session release request message and/or information included in the N4 session release request message.

In addition, by transmitting to the SMF an N4 session release response message, the UPF_232 may inform the SMF that the N4 session release request message has been received, and/or the first SA PDU session of the UE has been released, and/or the N4 session corresponding to the first SA PDU session has been released (S1202). The N4 session release response message may include the N4 session ID and/or access type included in the N4 session release request message. Note that, in a case that the UPF_232 has not received an access type from the SMF, the message may include no access type. In addition, the message may include the access type even in a case that the UPF_232 has not received an access type from the SMF. In the case that the access type is included, it may indicate the non-3GPP access.

Next, in a case that the N4 session release response message is received, the SMF checks the information included in the N4 session release response message. The SMF may consider that the UPF_232 has received the N4 session release request message, and/or the UPF_232 has released the first SA PDU session of the UE, and/or the UPF_232 has released the N4 session corresponding to the first SA PDU session, based on the N4 session release response message and/or the information included in the N4 session release response message.

Next, in a case that the N4 session release response message is received, the SMF checks the information included in the N4 session release response message. The SMF may consider that the UPF_232 has received the N4 session release request message, and/or the UPF_232 has released the first SA PDU session of the UE, and/or the UPF_232 has released the N4 session corresponding to the first SA PDU session, based on the N4 session release response message and/or the information included in the N4 session release response message.

Then, the SMF transmits an N1 SM container, and/or an N2 SM resource release request message to the AMF (S1204). In addition, although the SMF also transmits a PDU session release command message, the PDU session release command message may be included in the N1 SM container and transmitted. The PDU session release command message may include a PDU session ID, and/or an access type. In addition, the N2 SM resource release request message may include a PDU session ID and/or an access type. Here, the PDU session ID is information for identifying the first SA PDU session. In addition, the access type may also indicate access to release in the first SA PDU session, and here, it may indicate the non-3GPP access. In addition, the SMF may transmit the PDU session release command message, and/or the N1 SM container, and/or the N2 SM resource release request message to indicate the release of the first SA PDU session of the UE.

Next, in a case that the N1 SM container and/or the N2 SM resource release request message is received, the AMF checks the information included in the N1 SM container and/or the N2 SM resource release request message. The AMF may receive the PDU session release command message, and/or the N1 SM container, and/or the N2 SM resource release request message to consider that the release of the first SA PDU session of the UE has been indicated.

Then, the AMF transmits an NAS message to the UE over the non-3GPP access (S 1206 and S1208). Here, the NAS message includes the N1 SM container. That is, the PDU session release command message received from the SMF may be included in the NAS message and transmitted.

Specifically, the AMF transmits the NAS message to the N3IWF_240, the N3IWF_240 that has received the NAS message transmits the NAS message to the base station apparatus_120, and the base station apparatus_120 that has received the NAS message transmits the NAS message to the UE.

The AMF may transmit a PDU session release command message, and/or an N1 SM container, and/or an NAS message to notify the UE that the release of the first SA PDU session of the UE has been indicated.

In a case that the UE receives the NAS message, the UE checks the information included in the NAS message. The UE may receive the PDU session release command message, and/or the N1 SM container, and/or the NAS message to consider that the release of the first SA PDU session of the UE has been indicated. Then, the UE may release the first SA PDU session based on the NAS message and/or the information included in the NAS message.

With the above operation, the PDU session release procedure of S1116 is completed. In a case that the PDU session release procedure is successfully completed, although the first SA PDU session is released, the UE is in a state of being able to communicate with the DN_300 using the first MA PDU session because the first MA PDU session is established using the user plane resources the 3GPP access and the user plane resources via the non-3GPP access over(S1118).

With the above operation, the sixth PSA modification procedure is completed.

In a case that the sixth PSA modification procedure is completed, the state transitions from the third communication state illustrated in FIG. 15 (a state in which the first MA PDU session using the user plane resources over the 3GPP access and the first SA PDU session over the non-3GPP access have been established) to the first communication state illustrated in FIG. 2 (a state in which the first MA PDU session using the user plane resources over the 3GPP access and the user plane resources over the non-3GPP access has been established). In addition, as the sixth PSA modification procedure is performed, PSAs are modified from the UPF_230 and the UPF_232 to the UPF_230.

### Scope of Embodiments

A User equipment (UE) of an embodiment is a UE including a controller and a transmission and/or reception circuitry, wherein in a case that an MA PDU session using user plane resources over 3GPP access and user plane resources over non-3GPP access have been established and SSC mode 2 has been applied to the MA PDU session, in a procedure for modifying, by the controller, only a PDU session anchor corresponding to the user plane resources over the non-3GPP access, the transmission and/or reception circuitry receives a PDU session release command message including a first PDU session ID for identifying the MA PDU session, an access type indicating the non-3GPP access, and a cause value indicating that establishment of an SA PDU session for the same DN is required in an MA PDU session release procedure performed over the 3GPP access or the non-3GPP access, the controller releases the user plane resources over the non-3GPP access in the MA PDU session, the transmission and/or reception circuitry transmits a PDU session establishment request message including a second PDU session ID for identifying an established SA PDU session in a PDU session establishment procedure initiated over the non-3GPP access indicated by the access type, the controller establishes an SA PDU session over the non-3GPP access, the transmission and/or reception circuitry can perform communication using the MA PDU session using the user plane resources over the 3GPP access and the SA PDU session over the non-3GPP access, and a PDU session anchor of the MA PDU session and a PDU session anchor of the SA PDU session are different.

In addition, a user equipment (UE) of an embodiment is a UE including a controller and a transmission and/or reception circuitry, wherein in a case that an MA PDU session using only user plane resources over 3GPP access and an SA PDU session over non-3GPP access have been established and SSC mode 2 has been applied to the MA PDU session and the SA PDU session, in a procedure for modifying, by the controller, a PDU session anchor corresponding to the SA PDU session, the transmission and/or reception circuitry receives a PDU session release command message including a second PDU session ID for identifying the SA PDU session, and a cause value indicating that re-establishment of user plane resources for the same DN is required in a PDU session release procedure performed over the non-3GPP access, the controller releases the SA PDU session, the transmission and/or reception circuitry transmits an MA PDU session establishment request message including a first PDU session ID for identifying the MA PDU session and Request type set in MA PDU Request in an MA PDU session establishment procedure initiated over the non-3GPP access, and the controller adds the user plane resources over the non-3GPP access to the MA PDU session using the user plane resources over the 3GPP access to make communication in the MA PDU session using the user plane resources over the 3GPP access and the user plane resources over the non-3GPP access possible.

### 8. Others

A program running on an apparatus according to an embodiment of the present invention may serve as a program that controls a central processing unit (CPU) and the like to cause a computer to operate in such a manner as to implement the functions of the embodiment according to the present invention. Programs or information handled by the programs are temporarily stored in a volatile memory such as a Random Access Memory (RAM), a nonvolatile memory such as a flash memory, a Hard Disk Drive (HDD), or another storage device system.

Note that a program for implementing such functions of the embodiment according to the present invention may be recorded on a computer-readable recording medium. The functions may be implemented by causing a computer system to load and execute the program recorded on the recording medium. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, a medium dynamically retaining the program for a short time, or any other computer readable recording medium.

Furthermore, each functional block or various characteristics of the apparatuses used in the above-described embodiment may be implemented or performed on an electric circuit, for example, an integrated circuit or multiple integrated circuits. An electric circuit designed to perform the functions described in the present specification may include a general purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a processor of a known type, a controller, a micro-controller, or a state machine instead. The above-mentioned electric circuit may include a digital circuit, or may include an analog circuit. In a case that with advances in semiconductor technology, a circuit integration technology appears that replaces the present integrated circuits, one or multiple aspects of the present invention are also possible to use a new integrated circuit based on the technology.

Note that the invention of the present application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

### Reference Signs List

1 Mobile communication system
10 UE
100 Access network
102 Access network
110 Base station apparatus
112 Base station apparatus
120 Base station apparatus
122 Base station apparatus
200 Core network
210 AMF
220 SMF
230 UPF
232 UPF
240 N3IWF
242 N3IWF
250 PCF
300 DN

## Claims

1. A User Equipment, UE (10), comprising:
a controller (300); and
transmission and reception circuitry (320),
**characterised in that**,
the transmission and reception circuitry (320) is configured to receive, from an Access and Mobility Management Function, AMF, first information indicating whether a network supports Access Traffic Steering, Switching, Splitting, ATSSS, or not, and
the controller (300) is configured to determine whether a Protocol Data Unit, PDU, session establishment procedure for establishing a Multi-Access, MA, PDU Session can be initiated or not, based on the first information.

2. The UE (10) according to claim 1, wherein
the controller (300) is configured to determine whether ATSSS is supported by the network or not, based on the first information, and
the controller (300) is configured not to initiate the PDU session establishment procedure for establishing the MA PDU session, in a case that the network does not support ATSSS.

3. A communication control method performed by a User Equipment, UE (10), the communication control method **characterised by**,
receiving, from an Access and Mobility Management Function, AMF, first information indicating whether a network supports Access Traffic Steering, Switching, Splitting, ATSSS, or not, and
determining whether a Protocol Data Unit, PDU, session establishment procedure for establishing a Multi-Access, MA, PDU session can be initiated or not, based on the first information.

## Patentansprüche

1. Nutzerendgerät, UE (10), aufweisend:
einen Controller (300); und
eine Sende- und Empfangsschaltung (320),
**dadurch gekennzeichnet, dass**
die Sende- und Empfangsschaltung (320) so konfiguriert ist, dass sie von einer Zugriffs- und Mobilitätsverwaltungsfunktion, AMF, eine erste Information empfängt, die angibt, ob ein Netzwerk eine Zugriffsverkehrslenkung, - umschaltung, -aufteilung, ATSSS, unterstützt oder nicht, und
der Controller (300) so konfiguriert ist, dass er basierend auf der ersten Information bestimmt, ob eine Prozedur zur Einrichtung einer Protokolldateneinheits-, PDU-, Sitzung zum Einrichten einer Multizugriffs-, MA-, PDU-Sitzung initiiert werden kann oder nicht.

2. UE (10) nach Anspruch 1, wobei
der Controller (300) so konfiguriert ist, dass er basierend auf der ersten Information bestimmt, ob ATSSS vom Netzwerk unterstützt wird oder nicht, und
der Controller (300) so konfiguriert ist, dass er die Prozedur zur Einrichtung einer PDU-Sitzung zum Einrichten der MA-PDU-Sitzung nicht initiiert, falls das Netzwerk ATSSS nicht unterstützt.

3. Kommunikationssteuerungsverfahren, das von einem Nutzerendgerät, UE (10), durchgeführt wird, wobei das Kommunikationssteuerungsverfahren **gekennzeichnet ist durch**:
Empfangen, von einer Zugriffs- und Mobilitätsverwaltungsfunktion, AMF, einer ersten Information, die angibt, ob ein Netzwerk eine Zugriffsverkehrslenkung, -umschaltung, -aufteilung, ATSSS, unterstützt oder nicht, und
Bestimmen, basierend auf der ersten Information, ob eine Prozedur zur Einrichtung einer Protokolldateneinheits-, PDU-, Sitzung zum Einrichten einer Multizugriffs-, MA-, PDU-Sitzung initiiert werden kann oder nicht.

## Revendications

1. Équipement utilisateur, UE (10), comprenant :
un dispositif de commande (300) ; et
une circuiterie de transmission et de réception (320),
**caractérisé en ce que**
la circuiterie de transmission et de réception (320) est configurée pour recevoir, à partir d'une fonction de gestion d'accès et de mobilité, AMF, de premières informations indiquant si un réseau prend en charge une orientation, une commutation et une division de trafic d'accès, ATSSS, ou non, et
le dispositif de commande (300) est configuré pour déterminer si une procédure d'établissement de session d'unité de données de protocole, PDU, pour établir une session PDU multi-accès, MA, peut être initiée ou non, sur la base des premières informations.

2. UE (10) selon la revendication 1, dans lequel
le dispositif de commande (300) est configuré pour déterminer si l'ATSSS est pris en charge par le réseau ou non, sur la base des premières informations, et
le dispositif de commande (300) est configuré pour ne pas initier la procédure d'établissement de session PDU pour établir la session PDU MA, dans un cas où le réseau ne prend pas en charge l'ATSSS.

3. Procédé de commande de communication réalisé par un équipement utilisateur, UE (10), le procédé de commande de communication étant **caractérisé par**,
la réception, de la part d'une fonction de gestion d'accès et de mobilité, AMF, de premières informations indiquant si un réseau prend en charge une orientation, une commutation et une division de trafic d'accès, ATSSS, ou non, et
la détermination si une procédure d'établissement de session d'unité de données de protocole, PDU, pour établir une session PDU multi-accès, MA, peut être initiée ou non, sur la base des premières informations.
